# EUROPEAN PATENT APPLICATION

(11) **EP 3 206 400 A1**
(43) Date of publication of application: **16.08.2017**
(21) Application number: 15848167.1
(22) Date of filing: 25.09.2015
(51) Int. Cl.: H04N 19/117, H04N 19/136, H04N 19/172, H04N 19/174, H04N 19/179, H04N 19/70

(54) **IMAGE PROCESSING DEVICE AND METHOD**

(30) Priority: 06.10.2014 JP 2014205971
(71) Applicant: Sony Corporation, Tokyo 108-0075 (JP)
(72) Inventor: NAKAGAMI Ohji, Tokyo 108-0075 (JP)
(74) Representative: D Young & Co LLP
(86) International application number: PCT/JP2015/077012
(87) International publication number: WO 2016/056398

(57) **Abstract**

The present disclosure relates to an image processing device and method which are capable of suppressing a reduction in an image quality. Image data is encoded, and control information for controlling a deblocking filter process for a chrominance component of decoded image data obtained by decoding encoded data obtained by encoding the image data is generated as header information of the encoded data. For example, the present disclosure can be applied to image processing devices or the like.

## Description

### TECHNICAL FIELD

The present disclosure relates to an image processing device and method, and more particularly, to an image processing device and method which are capable of suppressing a reduction in image quality.

### BACKGROUND ART

In order to improve encoding efficiency of moving images, standardization of an encoding scheme called high efficiency video coding (HEVC) has been performed, and establishment of a version 1 has been already completed (for example, see Non-Patent Document 1).

In the version 1, a deblocking filter has been developed for natural images of YUV4:2:0. As control of the deblocking filter, there are filter execution control (whether or not a filter is executed) and filter strength control (a degree of strength which is set), but in the version 1, both controls are performed as control which is common to a luminance component (also referred to as luma) and a chrominance component (also referred to as chroma) (a deblocking filter for the luma and a deblocking filter for the chroma are controlled together (similarly)).

### CITATION LIST

### NON-PATENT DOCUMENT

Non-Patent Document 1: BenjaminBross, Gary J. Sullivan, Ye-Kui Wang, "Editors' proposed corrections to HEVC version 1," JCTVC-M0432_v3, 2013/4/25

### SUMMARY OF THE INVENTION

### PROBLEMS TO BE SOLVED BY THE INVENTION

The filter strength of the deblocking filter of the version 1 is automatically decided on the basis of an encoding mode or a decoded pixel value, but an algorithm of deciding the filter strength is adjusted to be suitable for natural images and does not correspond to screen content such as computer screens or CG images. For this reason, when the deblocking filter of the version 1 is performed on images of the screen content, the filter strength for the chrominance component (chroma) is too strong, and characters are likely to blur (that is, the image quality is likely to be lowered) .

Since control of the deblocking filter of the version 1 is performed as control which is common to the luminance component (luma) and the chrominance component (chroma) as described above, it is difficult to control only the filter strength for the chrominance component (chroma) (because control of the deblocking filter for the chrominance component (chroma) has influence on the deblocking filter for the luminance component (luma)), it is difficult to perform the deblocking filter for the images of the screen content sufficiently and appropriately (to suppress a reduction in image quality sufficiently).

The present disclosure was made in light of the foregoing, and it is desirable to suppress a reduction in the image quality.

### SOLUTIONS TO PROBLEMS

One aspect of the present technology is an image processing device, including: an encoding unit that encodes image data; and a control information generation unit that generates control information for controlling a deblocking filter process for a chrominance component of decoded image data obtained by decoding encoded data obtained by encoding the image data through the encoding unit as header information of the encoded data.

The control information generation unit may generate control information for controlling whether or not the deblocking filter process for the chrominance component of the decoded image data is performed as the control information.

The control information generation unit may generate control information for controlling a filter strength of the deblocking filter process for the chrominance component of the decoded image data as the control information.

The control information generation unit may generate control information for controlling an offset for a parameter β of the deblocking filter as the control information for controlling the filter strength.

The control information generation unit may generate control information for controlling an offset for a parameter tC of the deblocking filter as the control information for controlling the filter strength.

The control information generation unit may generate at least one of control information that is a syntax element of a sequence parameter set of the header information and used for controlling a deblocking filter process for a chrominance component of a sequence corresponding to the sequence parameter set of the decoded image data, control information that is a syntax element of a picture parameter set of the header information and used for controlling a deblocking filter process for a chrominance component of a picture corresponding to the picture parameter set of the decoded image data, and control information that is a syntax element of a slice header of the header information and used for controlling a deblocking filter process for a chrominance component of a slice corresponding to the slice header of the decoded image data.

The image processing device may further include a filter processing unit that performs the deblocking filter process for the chrominance component of the decoded image data on the basis of the control information generated through the control information generation unit.

The image processing device may further include a control unit that controls the control information generation unit such that the deblocking filter process according to a characteristics of an image of the decoded image data is performed, and the control information generation unit may generate the control information according to control of the control unit.

The image processing device may further include a control unit that controls the control information generation unit such that the deblocking filter process according to a color format of the decoded image data is performed, and the control information generation unit may generate the control information according to control of the control unit.

Further, one aspect of the present technology is an image processing method, including: encoding image data; and generating control information for controlling a deblocking filter process for a chrominance component of decoded image data obtained by decoding encoded data obtained by encoding the image data as header information of the encoded data.

Another aspect of the present technology is an image processing device, including: a decoding unit that decodes encoded data of image data; and a filter processing unit that performs a deblocking filter process for a chrominance component of decoded image data obtained by decoding the encoded data through the decoding unit on the basis of control information for controlling the deblocking filter process for the chrominance component of the decoded image data in header information of the encoded data.

The control information may be control information for controlling whether or not the deblocking filter process for the chrominance component of the decoded image data is performed.

The control information may be control information for controlling a filter strength of the deblocking filter process for the chrominance component of the decoded image data.

The control information for controlling the filter strength may be control information for controlling an offset for a parameter β of the deblocking filter.

The control information for controlling the filter strength may be control information for controlling an offset for a parameter tC of the deblocking filter.

The control information may include at least one of control information that is a syntax element of a sequence parameter set of the header information and used for controlling a deblocking filter process for a chrominance component of a sequence corresponding to the sequence parameter set of the decoded image data, control information that is a syntax element of a picture parameter set of the header information and used for controlling a deblocking filter process for a chrominance component of a picture corresponding to the picture parameter set of the decoded image data, and control information that is a syntax element of a slice header of the header information and used for controlling a deblocking filter process for a chrominance component of a slice corresponding to the slice header of the decoded image data, and the filter processing unit performs the deblocking filter process for the chrominance component of the decoded image data on the basis of any one of the information included in the control information.

The filter processing unit may preferentially use the control information in an order of the control information of the slice header, the control information of the picture parameter set, and the control information of the sequence parameter set.

The filter processing unit may refer to and use the control information of the picture parameter set and the control information of the slice header on the basis of information indicating whether or not there is the control information for controlling the deblocking filter process for the decoded image data.

The filter processing unit may refer to and use the control information of the picture parameter set and the control information of the slice header on the basis of information indicating whether or not there is the control information for controlling the deblocking filter process for the chrominance component of the decoded image data.

Further, another aspect of the present technology is an image processing method, including: decoding encoded data of image data; and performing a deblocking filter process for a chrominance component of decoded image data obtained by decoding the encoded data on the basis of control information for controlling the deblocking filter process for the chrominance component of the decoded image data in header information of the encoded data.

In one aspect of the present technology, image data is encoded, and control information for controlling a deblocking filter process for a chrominance component of decoded image data obtained by decoding encoded data obtained by encoding the image data is generated as header information of the encoded data.

In another aspect of the present technology, encoded data of image data is decoded, and a deblocking filter process for a chrominance component of decoded image data is performed on the basis of control information which is the header information of the encoded data and used for controlling the deblocking filter process for the chrominance component of the decoded image data obtained by decoding the encoded data.

### EFFECTS OF THE INVENTION

According to the present disclosure, it is possible to encode image data and decode encoded data of image data. Particularly, it is possible to suppress a reduction in the image quality.

### BRIEF DESCRIPTION OF DRAWINGS

Fig. 1 is a diagram for describing an exemplary configuration of a coding unit.
Fig. 2 is a diagram illustrating an example of syntax of a picture parameter set related to control of a deblocking filter.
Fig. 3 is a diagram illustrating an example of syntax of a slice header related to control of a deblocking filter.
Fig. 4 is a diagram illustrating an example of extended syntax of a sequence parameter set.
Fig. 5 is a diagram illustrating an example of extended syntax of a picture parameter set.
Fig. 6 is a diagram illustrating an example of extended syntax of a slice header.
Fig. 7 is a diagram illustrating an example of a priority order of parameter.
Fig. 8 is a block diagram illustrating an exemplary main configuration of an image decoding device.
Fig. 9 is a block diagram illustrating an exemplary main configuration of a header information generation unit.
Fig. 10 is a block diagram illustrating an exemplary main configuration of a loop filter.
Fig. 11 is a flowchart illustrating an example of a flow of an encoding process.
Fig. 12 is a flowchart illustrating an example of a flow of a header information generation process.
Fig. 13 is a flowchart illustrating an example of a flow of a loop filter process.
Fig. 14 is a block diagram illustrating an exemplary main configuration of an image decoding device.
Fig. 15 is a block diagram illustrating an exemplary main configuration of a loop filter.
Fig. 16 is a flowchart illustrating an example of a flow of a decoding process.
Fig. 17 is a diagram illustrating an example of extended syntax of a picture parameter set.
Fig. 18 is a diagram illustrating an example of extended syntax of a slice header.
Fig. 19 is a flowchart illustrating an example of a flow of a header information generation process.
Fig. 20 is a block diagram illustrating an exemplary main configuration of a loop filter.
Fig. 21 is a diagram illustrating an example of extended syntax of a picture parameter set.
Fig. 22 is a diagram illustrating an example of extended syntax of a slice header.
Fig. 23 is a block diagram illustrating an exemplary main configuration of a header information generation unit.
Fig. 24 is a flowchart illustrating an example of a flow of a header information generation process.
Fig. 25 is a block diagram illustrating an exemplary main configuration of a loop filter.
Fig. 26 is a diagram illustrating an example of extended syntax of a picture parameter set.
Fig. 27 is a diagram illustrating an example of extended syntax of a slice header.
Fig. 28 is a flowchart illustrating an example of a flow of a header information generation process.
Fig. 29 is a flowchart for describing an example of a flow of a header information generation process, subsequently to Fig. 28.
Fig. 30 is a block diagram illustrating an exemplary main configuration of a loop filter.
Fig. 31 is a diagram illustrating an example of extended syntax of a picture parameter set.
Fig. 32 is a diagram illustrating an example of extended syntax of a slice header.
Fig. 33 is a diagram illustrating an example of a priority order of parameter.
Fig. 34 is a block diagram illustrating an exemplary main configuration of a header information generation unit.
Fig. 35 is a flowchart illustrating an example of a flow of a header information generation process.
Fig. 36 is a block diagram illustrating an exemplary main configuration of a loop filter.
Fig. 37 is a diagram illustrating an example of extended syntax of a picture parameter set.
Fig. 38 is a diagram illustrating an example of extended syntax of a slice header.
Fig. 39 is a block diagram illustrating an exemplary main configuration of a header information generation unit.
Fig. 40 is a flowchart illustrating an example of a flow of a header information generation process.
Fig. 41 is a block diagram illustrating an exemplary main configuration of a loop filter.
Fig. 42 is a diagram illustrating an example of extended syntax of a picture parameter set.
Fig. 43 is a diagram illustrating an example of extended syntax of a slice header.
Fig. 44 is a block diagram illustrating an exemplary main configuration of a header information generation unit.
Fig. 45 is a flowchart illustrating an example of a flow of a header information generation process.
Fig. 46 is a flowchart for describing an example of a flow of a header information generation process, subsequently to Fig. 45.
Fig. 47 is a block diagram illustrating an exemplary main configuration of a loop filter.
Fig. 48 is a diagram illustrating an example of extended syntax of a picture parameter set.
Fig. 49 is a diagram illustrating an example of extended syntax of a slice header.
Fig. 50 is a flowchart illustrating an example of a flow of a header information generation process.
Fig. 51 is a block diagram illustrating an exemplary main configuration of a loop filter.
Fig. 52 is a diagram illustrating an example of extended syntax of a picture parameter set.
Fig. 53 is a diagram illustrating an example of extended syntax of a slice header.
Fig. 54 is a flowchart illustrating an example of a flow of a header information generation process.
Fig. 55 is a flowchart for describing an example of a flow of a header information generation process, subsequently to Fig. 54.
Fig. 56 is a block diagram illustrating an exemplary main configuration of a loop filter.
Fig. 57 is a block diagram illustrating an exemplary main configuration of a display screen of a computer.
Fig. 58 is a flowchart illustrating an example of a flow of a deblocking filter control process.
Fig. 59 is a flowchart illustrating an example of a flow of a parameter setting process.
Fig. 60 is a block diagram illustrating an example of a color format of image data to be encoded.
Fig. 61 is a flowchart illustrating an example of a flow of a deblocking filter control process.
Fig. 62 is a flowchart illustrating an example of a flow of a parameter setting process.
Fig. 63 is a diagram illustrating an example of a multi-view image encoding scheme.
Fig. 64 is a diagram illustrating an exemplary main configuration of a multi-view image encoding device to which the present technology is applied.
Fig. 65 is a diagram illustrating an exemplary main configuration of a multi-view image decoding device to which the present technology is applied.
Fig. 66 is a diagram illustrating an example of a scalable image encoding scheme.
Fig. 67 is a diagram for describing an example of spatial scalable coding.
Fig. 68 is a diagram for describing an example of temporal scalable coding.
Fig. 69 is a diagram for describing an example of scalable coding of a signal to noise ratio.
Fig. 70 is a diagram illustrating an exemplary main configuration of a scalable image encoding device to which the present technology is applied.
Fig. 71 is a diagram illustrating an exemplary main configuration of a scalable image decoding device to which the present technology is applied.
Fig. 72 is a block diagram illustrating an exemplary main configuration of a computer.
Fig. 73 is a block diagram illustrating an example of a schematic configuration of a television device.
Fig. 74 is a block diagram illustrating an example of a schematic configuration of a mobile phone.
Fig. 75 is a block diagram illustrating an example of a schematic configuration of a recording/reproducing device.
Fig. 76 is a block diagram illustrating an example of a schematic configuration of an image capturing device.
Fig. 77 is a block diagram illustrating an example of a schematic configuration of a video set.
Fig. 78 is a block diagram illustrating an example of a schematic configuration of a video processor.
Fig. 79 is a block diagram illustrating another example of a schematic configuration of a video processor.

### MODE FOR CARRYING OUT THE INVENTION

Hereinafter, modes (hereinafter, referred to as embodiments) for carrying out the present disclosure will be described. A description will proceed in the following order .
1. First embodiment (image encoding device and image decoding device)
2. Second embodiment (image encoding device and image decoding device)
3. Third embodiment (image encoding device and image decoding device)
4. Fourth embodiment (image encoding device and image decoding device)
5. Fifth embodiment (image encoding device and image decoding device)
6. Sixth embodiment (image encoding device and image decoding device)
7. Seventh embodiment (image encoding device and image decoding device)
8. Eighth embodiment (image encoding device and image decoding device)
9. Ninth embodiment (image encoding device and image decoding device)
10. Tenth embodiment (image encoding device)
11. Eleventh embodiment (image encoding device)
12. Twelfth embodiment (multi-view image encoding device and multi-view image decoding device)
13. Thirteenth embodiment (scalable image encoding device and scalable image decoding device)
14. Fourteenth embodiment (computer)
15. Fifteenth embodiment (application examples)
16. Sixteenth embodiment (set, unit, module, and processor)

### <1. First embodiment>

### <Flow of standardization of image coding>

Recently, devices for compressing and encoding an image by adopting an encoding scheme of handling image information digitally and performing compression by an orthogonal transform such as a discrete cosine transform and motion compensation using image information-specific redundancy for the purpose of information transmission and accumulation with high efficiency when the image information is handled digitally have become widespread. Moving Picture Experts Group (MPEG) and the like are examples of such encoding schemes.

Particularly, MPEG 2 (ISO/IEC 13818-2) is a standard that is defined as a general-purpose image encoding scheme, and covers interlaced scan images, progressive scan images, standard resolution images, and high definition images. For example, MPEG 2 is now being widely used in a wide range of applications such as professional use and consumer use . Using the MPEG 2 compression scheme, for example, in the case of an interlaced scan image of a standard resolution having 720x480 pixels, a coding amount (bit rate) of 4 to 8 Mbps can be allocated. Further, using the MPEG 2 compression scheme, for example, in the case of an interlaced scan image of a high resolution having 1920×1088 pixels, a coding amount (bit rate) of 18 to 22 Mbps can be allocated. Thus, it is possible to implement a high compression rate and an excellent image quality.

MPEG 2 is mainly intended for high definition coding suitable for broadcasting but does not support an encoding scheme having a coding amount (bit rate) lower than that of MPEG 1, that is, an encoding scheme of a high compression rate. With the spread of mobile terminals, it is considered that the need for such an encoding scheme will increase in the future, and thus an MPEG 4 encoding scheme has been standardized. An international standard for an image encoding scheme was approved as ISO/IEC 14496-2 in December, 1998.

Further, in recent years, standards such as H.26L (International Telecommunication Union Telecommunication Standardization Sector Q6/l6Video Coding Expert Group (ITU-T Q6/16 VCEG)) for the purpose of image encoding for video conferences have been standardized. H.26L requires a larger computation amount for encoding and decoding than in existing encoding schemes such as MPEG 2 or MPEG 4, but is known to implement high encoding efficiency. Further, currently, as one activity of MPEG 4, standardization of incorporating even a function that is not supported in H.26L and implementing high encoding efficiency on the basis of H.26L has been performed as a Joint Model of Enhanced-Compression Video Coding.

As a standardization schedule, an international standard called H. 2 64 and MPEG-4 Part 10 (Advanced Video Coding, hereinafter referred to as AVC) was established in March, 2003.

Furthermore, as an extension of H.264/AVC, Fidelity Range Extension (FRExt) including an encoding tool necessary for professional use such as RGB or 4:2:2 or 4:4:4 or 8x8 DCT and a quantization matrix which are specified in MPEG-2 was standardized in February, 2005. As a result, H.264/AVC has become an encoding scheme capable of also expressing film noise included in movies well and is being used in a wide range of applications such as Blu-Ray Discs (trademark).

However, in recent years, there is an increasing need for high compression rate encoding capable of compressing an image of about 4000×2000 pixels, which is 4 times that of a high-definition image, or delivering a high-definition image in a limited transmission capacity environment such as the Internet. To this end, improvements in encoding efficiency have been under continuous review by Video Coding Experts Group (VCEG) under ITU-T.

In this regard, currently, in order to further improve the encoding efficiency to be higher than in AVC, Joint Collaboration Team-Video Coding (JCTVC), which is a joint standardization organization of ITU-T and International Organization for Standardization/International Electrotechnical Commission (ISO/IEC), has been standardizing an encoding scheme called High Efficiency Video Coding (HEVC), and establishment of the version 1 has been already completed (for example, see Non-Patent Document 1) .

### <Encoding scheme>

Hereinafter, the present technology will be described in connection with an application to image encoding and decoding of a High Efficiency Video Coding (HEVC) scheme.

### <Coding unit>

In an Advanced Video Coding (AVC) scheme, a hierarchical structure based on a macroblock and a sub macroblock is defined. However, a macroblock of 16x16 pixels is not optimal for a large image frame such as an Ultra High Definition (UHD) (4000×2000 pixels) serving as a target of a next generation encoding scheme.

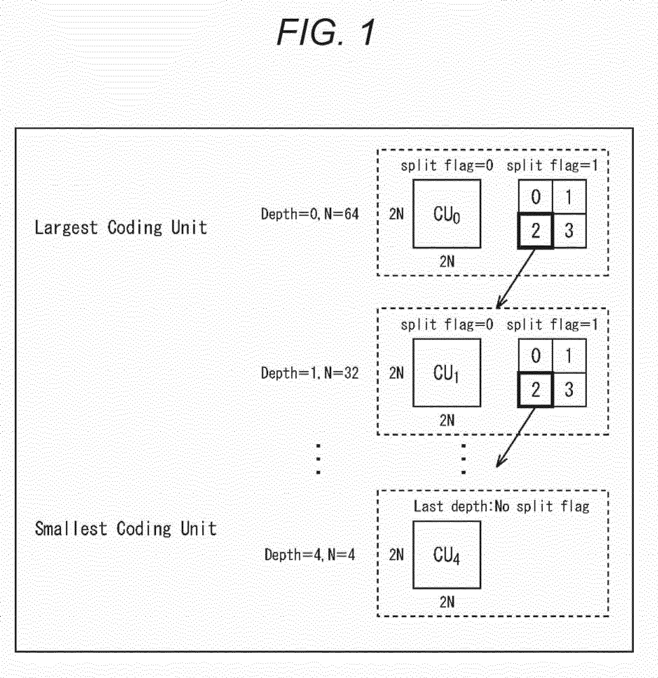

On the other hand, in the HEVC scheme, a coding unit (CU) is defined as illustrated in Fig. 1.

A CU is also referred to as a coding tree block (CTB), and serves as a partial area of an image of a picture unit undertaking a similar role to that of a macroblock in the AVC scheme. The latter is fixed to a size of 16×16 pixels, but the former is not fixed to a certain size but designated in image compression information in each sequence.

For example, a largest coding unit (LCU) and a smallest coding unit (SCU) of a CU are specified in a sequence parameter set (SPS) included in encoded data to be output.

As split-flag = 1 is set in a range in which each LCU is not smaller than an SCU, a coding unit can be divided into CUs having a smaller size. In the example of Fig. 1, a size of an LCU is 128, and a largest scalable depth is 5. A CU of a size of 2N×2N is divided into CUs having a size of N×N serving as a layer that is one-level lower when a value of split_flag is "1."

Further, a CU is divided in prediction units (PUs) that are areas (partial areas of an image of a picture unit) serving as processing units of intra or inter prediction, and divided into transform units (TUs) that are areas (partial areas of an image of a picture unit) serving as processing units of orthogonal transform. Currently, in the HEVC scheme, in addition to 4×4 and 8×8, orthogonal transform of 16×16 and 32×32 can be used.

As in the HEVC scheme, in the case of an encoding scheme in which a CU is defined and various kinds of processes are performed in units of CUs, in the AVC scheme, a macroblock can be considered to correspond to an LCU, and a block (sub block) can be considered to correspond to a CU. Further, in the AVC scheme, a motion compensation block can be considered to correspond to a PU. Here, since a CU has a hierarchical structure, a size of an LCU of a topmost layer is commonly set to be larger than a macroblock in the AVC scheme, for example, such as 128×128 pixels.

Thus, hereinafter, an LCU is assumed to include a macroblock in the AVC scheme, and a CU is assumed to include a block (subblock) in the AVC scheme. In other words, a "block" used in the following description indicates an arbitrary partial area in a picture, and, for example, a size, a shape, and characteristics thereof are not limited. In other words, a "block" includes an arbitrary area (a processing unit) such as a TU, a PU, an SCU, a CU, an LCU, a sub block, a macroblock, or a slice. Of course, a "block" includes other partial areas (processing units) as well. When it is necessary to limit a size, a processing unit, or the like, it will be appropriately described.

Further, in this specification, a coding tree unit (CTU) is assumed to be a unit including a CTB of a largest coding unit (LCU) and a parameter when a process is performed on the basis of (at a level of) an LCU. Further, a coding unit (CU) constituting a CTU is assumed to be a unit including a coding block (CB) and a parameter when a process is performed on the basis of (at a level of) a CU.

### <Image quality degradation by deblocking filter>

Meanwhile, in the version 1 of HEVC, the deblocking filter has been developed for natural images of YUV4:2:0. As control of the deblocking filter, there are filter execution control (whether or not a filter is executed) and filter strength control (a degree of strength which is set), but in the version 1, both controls are performed as control which is common to a luminance component (also referred to as luma) and a chrominance component (also referred to as chroma) (a deblocking filter for the luma and a deblocking filter for the chroma are controlled together (similarly)).

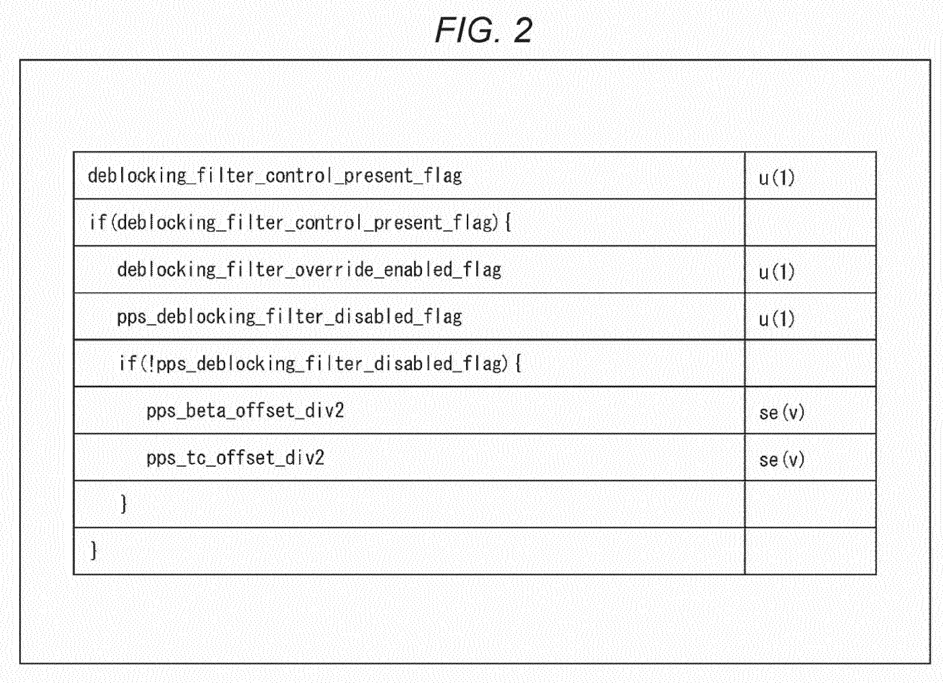

In a picture parameter set (PPS) of the version 1, syntax elements such as deblocking_filter_control_present_flag, deblocking_filter_override_enabled_flag, pps_deblocking_filter_disabeld_flag, pps_beta_offset_div2, and pps_tc_offset_div2 are appropriately set with respect to control of the deblocking filter as illustrated in Fig. 2.

deblocking_filter_control_present_flag is a flag indicating whether or not a syntax element for controlling the deblocking filter is included in the picture parameter set. For example, when a value of deblocking_filter_control_present_flag is "1," it indicates that the syntax element is included in the picture parameter set. Further, for example, when a value of deblocking_filter_control_present_flag is "0," it indicates that the syntax element is not included in the picture parameter set.

deblocking_filter_override_enabled_flag is a flag indicating whether or not there is deblocking_filter_override_flag in a slice header of a slice belonging to a corresponding picture. For example, when a value of deblocking_filter_override_enabled_flag is "1," it indicates that there is deblocking_filter_override_flag in a slice header of a slice belonging to a corresponding picture . Further, for example, when a value of deblocking_filter_override_enabled_flagis "0," it indicates that there is no deblocking_filter_override_flag in a slice header of a slice belonging to a corresponding picture.

pps_deblocking_{_}filter_disabeld_{_}flag is a flag indicating whether or not the deblocking filter is applied to a slice in which slice_deblocking_filter_disabled_flag is not defined among slices belonging to a corresponding picture (that is, whether or not the deblocking filter process is performed). For example, when a value of pps_deblocking_filter_disabeld_flag is "1," it indicates that the deblocking filter is not applied to the slice . Further, for example, when a value of pps_deblocking_filter_disabeld_flag is "0," it indicates that the deblocking filter is applied to the slice.

A value which is twice as large as a value of pps_beta_offset_div2 indicates an initial offset of a parameter β of the deblocking filter which is performed on the slice in which slice_deblocking_filter_disabled_flag is not defined among slices belonging to a corresponding picture . A value which is twice as large as a value of pps_tc_offset_div2 indicates an initial offset of a parameter tC of the deblocking filter which is performed on the slice in which slice_deblocking_filter_disabled_flag is not defined among slices belonging to a corresponding picture. In other words, they are syntax elements for controlling the filter strength (a degree of strength which is set).

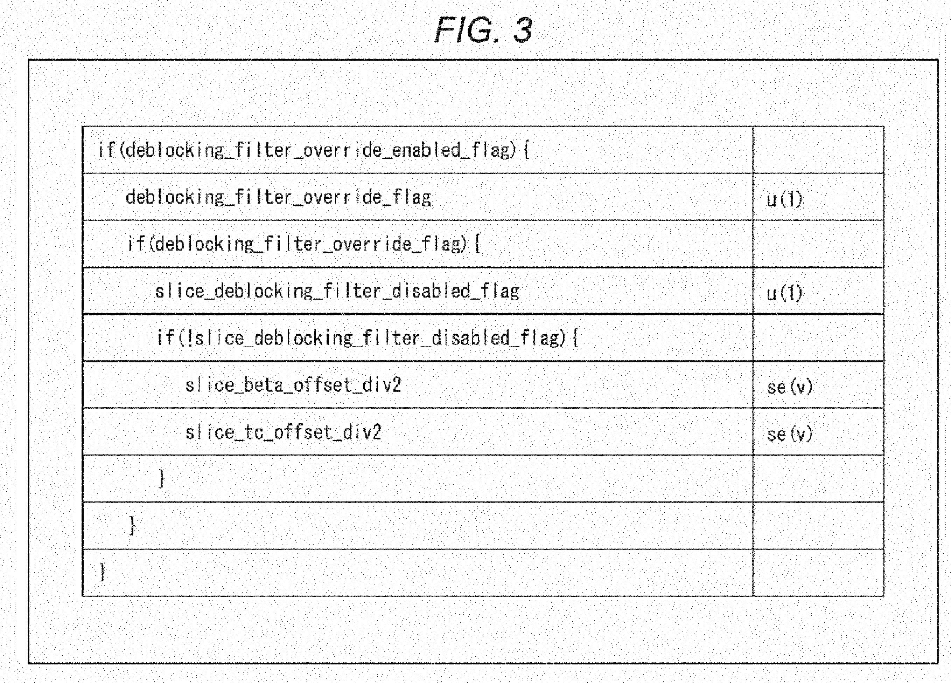

Further, a slice header (SH) of the version 1, syntax elements such as deblocking_filter_override_flag, slice_deblocking_filter_disabeld_flag, slice_beta_offset_div2, and slice_tc_offset_div2 are appropriately set with respect to control of the deblocking filter as illustrated in Fig. 3.

deblocking_filter_override_flag is a flag indicating whether or not the syntax element for controlling the deblocking filter is included in the slice header. For example, when a value of deblocking_filter_override_flag is "1," it indicates that the syntax element is included in the slice header. Further, for example, when a value of deblocking_filter_override_flag is "0, " it indicates that the syntax element is not included in the slice header.

slice_deblocking_filter_disabeld_flag is a flag indicating whether or not the deblocking filter is applied to a corresponding slice (that is, whether or not the deblocking filter process is performed) . For example, when a value of slice_deblocking_filter_disabeld_flag is "1," it indicates that the deblocking filter is not applied to a corresponding slice. Further, for example, when a value of slice_deblocking_filter_disabeld_flag is "0," it indicates that the deblocking filter is applied to a corresponding slice.

A value which is twice as large as a value of slice_beta_offset_div2 indicates an initial offset of the parameter β of the deblocking filter which is performed on the corresponding slice. A value which is twice as large as a value of slice_tc_offset_div2 indicates an initial offset of the parameter tC of the deblocking filter which is performed on the corresponding slice. In other words, they are syntax elements for controlling the filter strength (a degree of strength which is set).

The filter strength of the deblocking filter of the version 1 is automatically decided on the basis of an encoding mode or a decoded pixel value, but an algorithm of deciding the filter strength is adjusted to be suitable for natural images and does not correspond to screen content such as computer screens or CG images. For this reason, when the deblocking filter of the version 1 is performed on images of the screen content, the filter strength for the chrominance component (chroma) is too strong, and characters are likely to blur (that is, the image quality is likely to be lowered) .

Since control of the deblocking filter of the version 1 is performed as control which is common to the luminance component (luma) and the chrominance component (chroma) as described above, it is difficult to control only the filter strength for the chrominance component (chroma) (because control of the deblocking filter for the chrominance component (chroma) has influence on the deblocking filter for the luminance component (luma)), it is difficult to appropriately perform the deblocking filter for the images of the screen content sufficiently (to suppress a reduction in image quality sufficiently).

### <Execution control of deblocking filter for chrominance component>

In this regard, control information for controlling the deblocking filter process for the chrominance component (chroma) of image data is generated and used as header information of the encoded data of the image data. For example, in encoding of HEVC, encoded data obtained by encoding image data to be currently encoded is decoded, and the deblocking filter process is performed on the obtained decoded image data. Further, in decoding of HEVC, the encoded data of the image data is decoded, and the deblocking filter process is performed on the obtained decoded image data. Control information for controlling only a process for the chroma of the decoded image data in the deblocking filter is included in the header information, and the deblocking filter at the time of encoding or decoding is performed on the basis of the control information.

As a result, it is possible to control the deblocking filter process for the chroma independently of the deblocking filter process for the luminance component (the luma). For example, control can be performed such that the deblocking filter process is performed on the luma, but the deblocking filter process is not performed on the chroma. Further, for example, it is possible to suppress the filter strength for the chroma without changing the filter strength for the luma. Accordingly, it is possible to perform a more appropriate deblocking filter process on the images of the screen content as well as the natural image, for example, it is possible to suppress, for example, a character blur of screen content. In other words, it is possible to suppress a reduction in the image quality by applying the present technology.

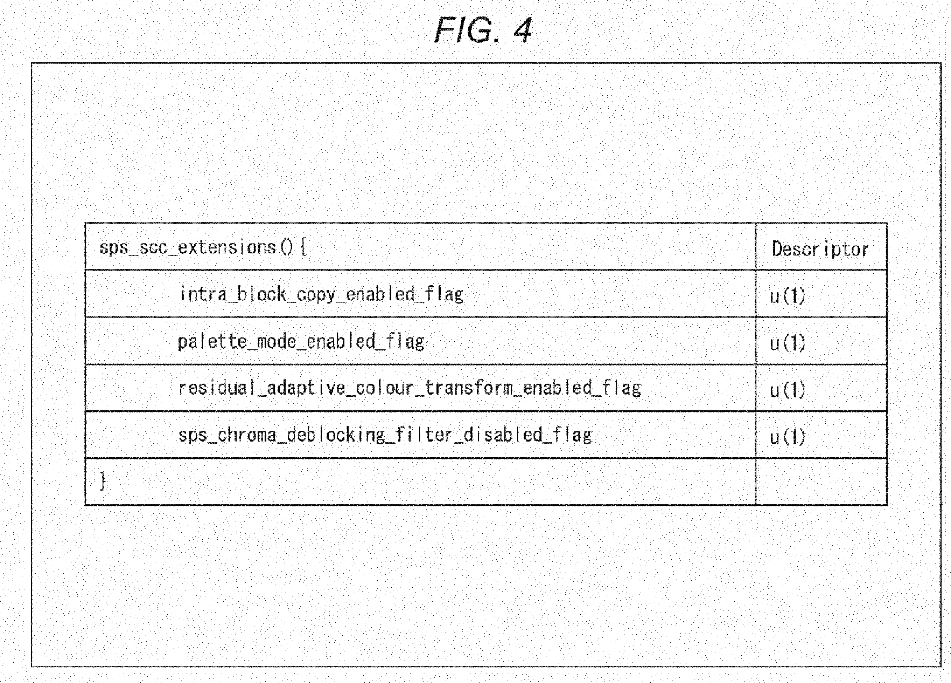

A more specific example will be described. In HEVC, as the header information of the encoded data, for example, the sequence parameter set (SPS), the picture parameter set, the slice header, and the like are generated. As illustrated in Fig. 4, for example, in the sequence parameter set, the control information for controlling the deblocking filter process for the chroma may be set as the extended syntax. In the case of an example of Fig. 4, sps_chroma_deblocking_filter_disabled_flag is set as control information.

sps_chroma_deblocking_filter_disabled_flag is a flag indicating whether or not the deblocking filter is applied to the chroma of a slice in which pps_chroma_deblocking_filter_disabled_flag or slice_chroma_deblocking_filter_disabled_flag (which will be described later) is not defined among slices belonging to a corresponding sequence. In other words, the syntax element sps_chroma_deblocking_filter_disabeld_flag is control information for controlling whether or not the deblocking filter process for the chroma is performed. For example, when a value of sps_chroma_deblocking_filter_disabeld_flag is true (for example, "1"), the deblocking filter is not applied to the chroma of the slice. Further, for example, when a value of sps_chroma_deblocking_filter_disabeld_flag is false (for example, "0"), the deblocking filter is applied to the chroma of the slice.

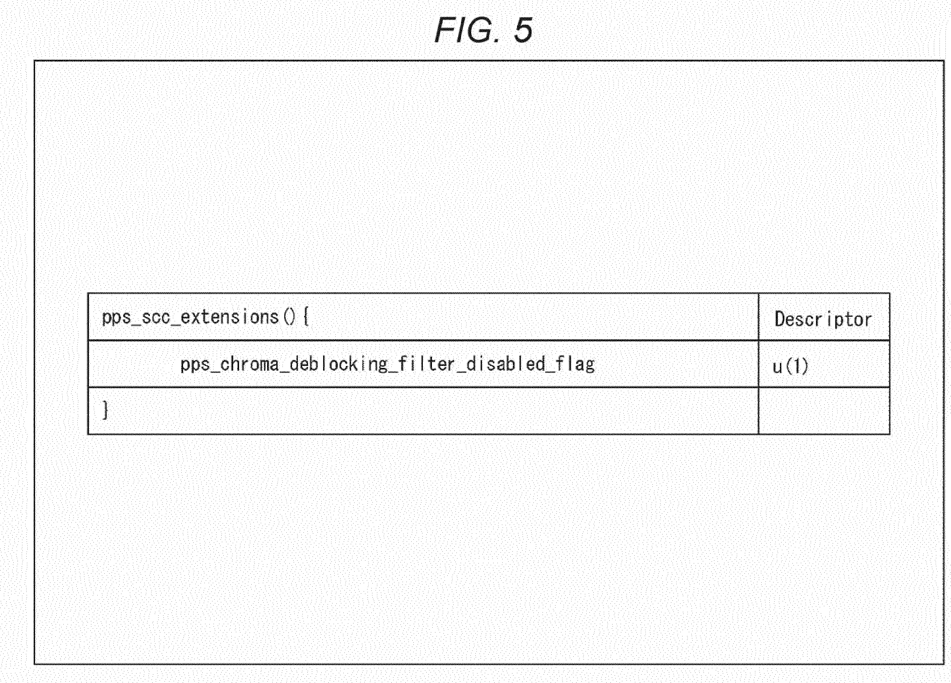

Further, for example, in the picture parameter set, the control information for controlling the deblocking filter process for the chroma may be set as the extended syntax as illustrated in Fig. 5. In the case of an example of Fig. 5, pps_chroma_deblocking_filter_disabled_flag is set as the control information.

pps_chroma_deblocking_filter_disabled_flag is a flag indicating whether or not the deblocking filter is applied to the chroma of a slice in which slice_chroma_deblocking_filter_disabled_flag (which will be described later) is not defined among slices belonging to a corresponding picture. In other words, the syntax element pps_chroma_deblocking_filter_disabeld_flag is control information for controlling whether or not the deblocking filter process for the chroma is performed. For example, when a value of pps_chroma_deblocking_filter_disabeld_flag is true (for example, "1"), the deblocking filter is not applied to the chroma of the slice. Further, for example, when a value of pps_chroma_deblocking_filter_disabeld_flag is false (for example, "0"), the deblocking filter is applied to the chroma of the slice.

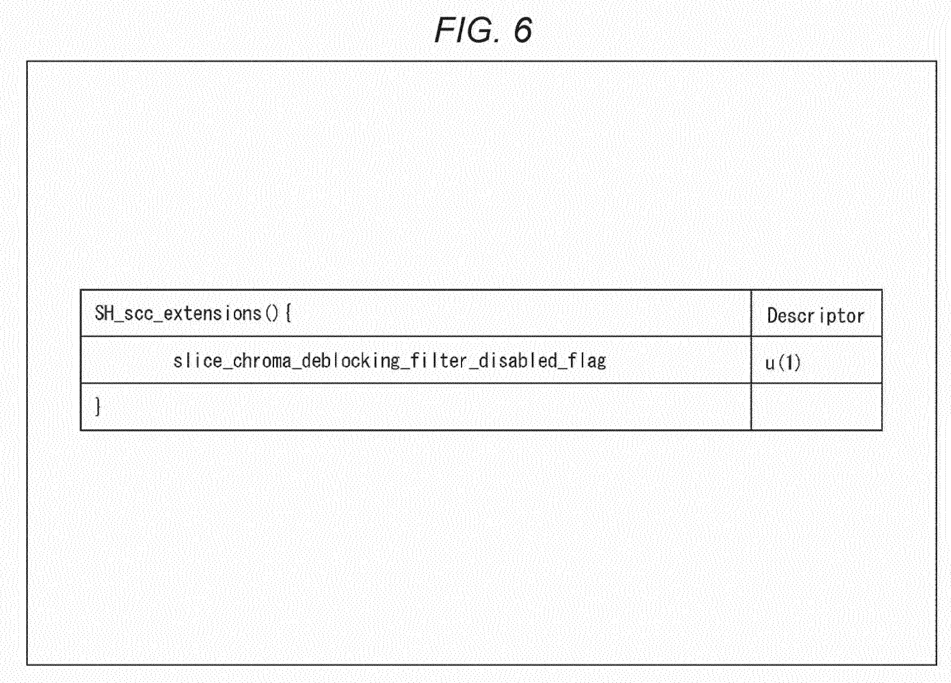

Further, for example, in the slice header, the control information for controlling the deblocking filter process for the chroma may be set as the extended syntax as illustrated in Fig. 6. In the case of an example of Fig. 6, slice_chroma_deblocking_filter_disabled_flag is set as the control information.

slice_chroma_deblocking_filter_disabled_flag is a flag indicating whether or not the deblocking filter is applied to the chroma of a corresponding slice. In other words, the syntax element slice_chroma_deblocking_filter_disabeld_flag is control information for controlling whether or not the deblocking filter process for the chroma is performed. For example, when a value of slice_chroma_deblocking_filter_disabeld_flag is true (for example, "1"), the deblocking filter is not applied to the chroma of the slice. Further, for example, when a value of slice_chroma_deblocking_filter_disabeld_flag is false (for example, "0"), the deblocking filter is applied to the chroma of the slice.

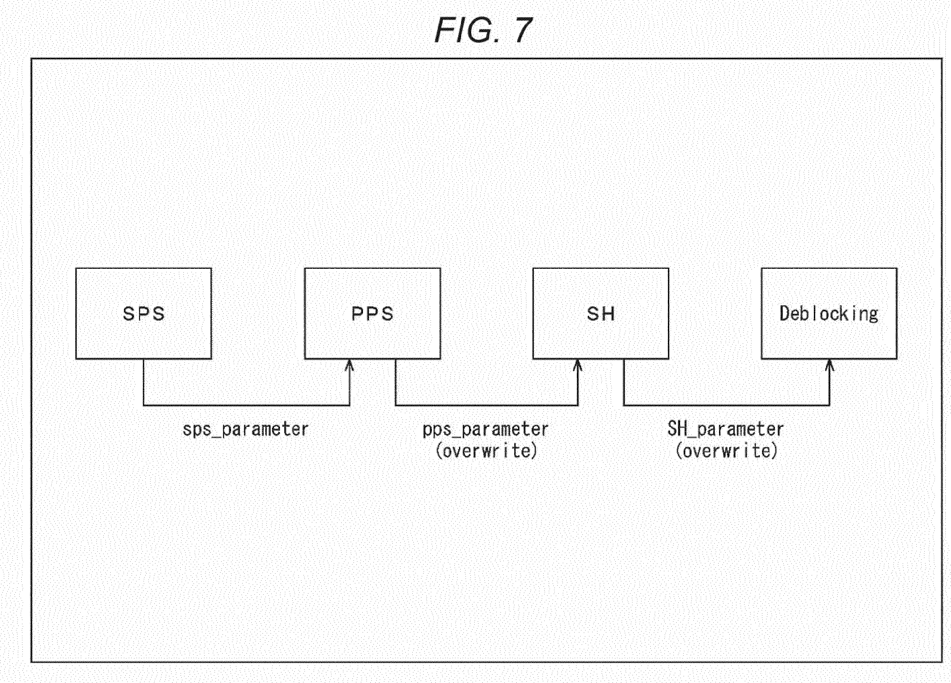

In other words, when sps_chroma_deblocking_filter_disabeld_flag is set in the sequence parameter set, a value of sps_chroma_deblocking_filter_disabeld_flag is set as a control value for controlling execution of the deblocking filter for the chroma, and further, when pps_chroma_deblocking_filter_disabeld_flag is set in the picture parameter set, a value of pps_chroma_deblocking_filter_disabeld_flag is overwritten on the control value, and further, when slice_chroma_deblocking_filter_disabeld_flag is set in the slice header, a value of slice_chroma_deblocking_filter_disabeld_flag is overwritten on the control value as illustrated in Fig. 7. The execution of the deblocking filter process for the chroma is controlled on the basis of the control value which is finally set (that is, the control information of the bottom layer) .

Note that the deblocking filter process for the luma is controlled on the basis of the syntax elements such as deblocking_filter_control_present_flag, deblocking_filter_override_enabled_flag, pps_deblocking_filter_disabeld_flag, pps_beta_offset_div2, pps_tc_offset_div2, deblocking_filter_override_flag, slice_deblocking_filter_disabeld_flag, slice_beta_offset_div2,and slice_tc_offset_div2,similarly to the example of the version 1 of HEVC.

Accordingly, it is possible to control the deblocking filter process for the chroma independently of the deblocking filter process for the luma, and it is possible to suppress a reduction in the image quality. Note that the control information for controlling the deblocking filter process for the chroma is set the extended syntax as described above, and thus an encoder or a decoder which is incompatible with the present technology can skip over the syntax element of the present technology, and it is difficult to apply the present technology, but it is possible to properly perform encoding or decoding.

### <Image encoding device>

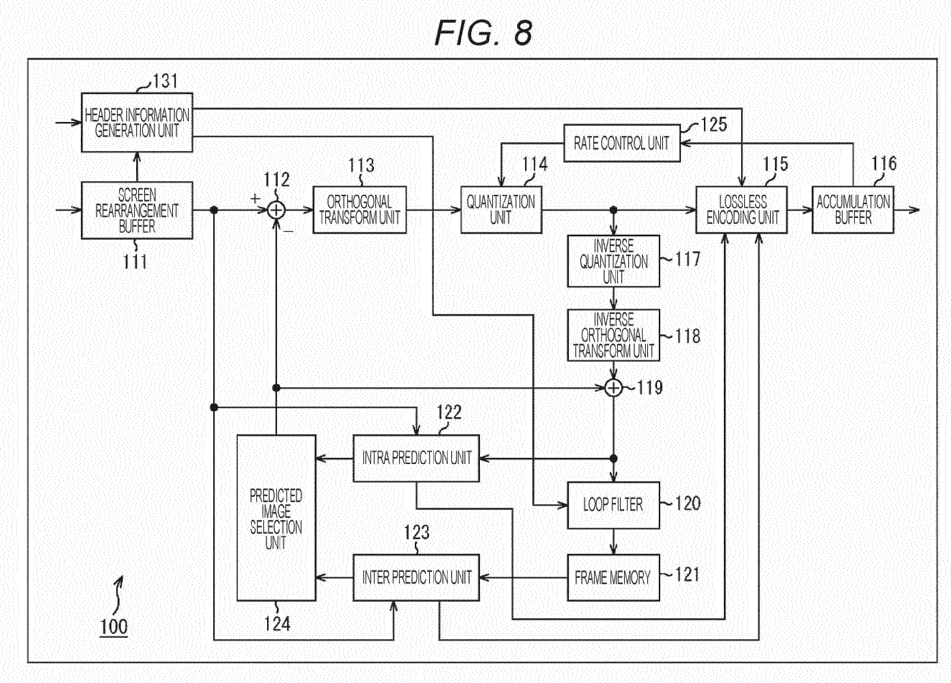

Fig. 8 is a block diagram illustrating an example of a configuration of an image encoding device which is one aspect of an image processing device to which the present technology is applied. An image encoding device 100 illustrated in Fig. 8 encodes image data of a moving image, for example, using a prediction process of HEVC or a prediction process of a scheme equivalent thereto.

The image encoding device 100 includes a screen rearrangement buffer 111, an operation unit 112, an orthogonal transform unit 113, a quantization unit 114, a lossless encoding unit 115, an accumulation buffer 116, an inverse quantization unit 117, and an inverse orthogonal transform unit 118 as illustrated in Fig. 8. The image encoding device 100 further includes an operation unit 119, a loop filter 120, a frame memory 121, an intra prediction unit 122, an inter prediction unit 123, a predicted image selection unit 124, and a rate control unit 125. The image encoding device 100 further includes a header information generation unit 131.

The screen rearrangement buffer 111 stores images of frames of input image data in a display order, rearranges the images of the frames stored in the display order in a frame order for encoding according to a group of picture (GOP), and supplies the images in which the order of frames is rearranged to the operation unit 112. Further, the screen rearrangement buffer 111 also supplies the image rearranged in the frame order to the intra prediction unit 122 and the inter prediction unit 123. Further, the screen rearrangement buffer 111 can also supply the image to the header information generation unit 131.

The operation unit 112 subtracts a predicted image supplied from the intra prediction unit 122 or the inter prediction unit 123 via the predicted image selection unit 124 from the image read from the screen rearrangement buffer 111, and supplies differential information (residual data) thereof to the orthogonal transform unit 113. For example, in the case of an image that undergoes intra encoding, the operation unit 112 subtracts the predicted image supplied from the intra prediction unit 122 from the image read from the screen rearrangement buffer 111. Further, for example, in the case of an image that undergoes inter encoding, the operation unit 112 subtracts the predicted image supplied from the inter prediction unit 123 from the image read from the screen rearrangement buffer 111.

The orthogonal transform unit 113 performs an orthogonal transform such as a discrete cosine transform or Karhunen-Loeve transform on the residual data supplied from the operation unit 112. The orthogonal transform unit 113 supplies transform coefficients obtained by the orthogonal transform to the quantization unit 114.

The quantization unit 114 quantizes the transform coefficients supplied from the orthogonal transform unit 113. The quantization unit 114 sets a quantization parameter on the basis of information on a target value of a coding amount supplied from the rate control unit 125 and performs quantization thereof. The quantization unit 114 supplies the quantized transform coefficients to the lossless encoding unit 115.

The lossless encoding unit 115 encodes the transform coefficients quantized in the quantization unit 114 according to an arbitrary encoding scheme, and generates the encoded data (also referred to as an encoded stream). Further, the lossless encoding unit 115 acquires the header information such as, for example, the sequence parameter set, the picture parameter set, the slice header, and the like from the header information generation unit 131, and sets the acquired header information as the header information of the encoded data. This header information can include the control information for the deblocking filter for the chroma. Further, the lossless encoding unit 115 acquires information indicating an intra prediction mode and the like from the intra prediction unit 122, acquires information indicating an inter prediction mode, differential motion vector information, and the like from the inter prediction unit 123, and includes various kinds of information in the header information.

The lossless encoding unit 115 supplies the encoded data obtained by encoding to be accumulated in the accumulation buffer 116.

Examples of the encoding scheme of the lossless encoding unit 115 include variable length coding or arithmetic coding. As the variable length coding, for example, there is Context-Adaptive Variable Length Coding (CAVLC) defined in the H.264/AVC scheme. As the arithmetic coding, for example, there is Context-Adaptive Binary Arithmetic Coding (CABAC).

The accumulation buffer 116 temporarily holds the encoded data supplied from the lossless encoding unit 115. The accumulation buffer 116 outputs the held encoded data to the outside of the image encoding device 100 at a predetermined timing. In other words, the accumulation buffer 116 also functions as a transmission unit that transmits the encoded data.

Further, the transform coefficients quantized in the quantization unit 114 are also supplied to the inverse quantization unit 117. The inverse quantization unit 117 inversely quantizes the quantized transform coefficients according to a method corresponding to the quantization performed by the quantization unit 114. The inverse quantization unit 117 supplies the transform coefficients obtained by the inverse quantization to the inverse orthogonal transform unit 118.

The inverse orthogonal transform unit 118 performs an inverse orthogonal transform on the transform coefficients supplied from the inverse quantization unit 117 according to a method corresponding to the orthogonal transform process performed by the orthogonal transform unit 113. The inverse orthogonal transform unit 118 supplies an output obtained by the inverse orthogonal transform (restored residual data) to the operation unit 119.

The operation unit 119 adds the predicted image supplied from the intra prediction unit 122 or the inter prediction unit 123 via the predicted image selection unit 124 to the restored residual data supplied from the inverse orthogonal transform unit 118, and obtains a locally reconstructed image (hereinafter, also referred to as a decoded image). The decoded image is supplied to the loop filter 120 or the intra prediction unit 122.

The loop filter 120 appropriately performs a loop filter process on the decoded image supplied from the operation unit 119. This loop filter process is arbitrary as long as it is a filter process including at least the deblocking filter process. For example, the loop filter 120 removes deblocking distortion by performing the deblocking filter process on the decoded image, and improves the image quality by performing an adaptive loop filter process using a Wiener filter.

The loop filter 120 acquires the header information that can include the control information for the deblocking filter for the chroma from the header information generation unit 131, and performs the deblocking filter process on the basis of the control information. Further, the loop filter 120 may supply information such as a filter coefficients used in the filter process to the lossless encoding unit 115 if necessary so that the information is encoded.

The loop filter 120 supplies the decoded image that has appropriately undergone the filter process to the frame memory 121.

The frame memory 121 stores the supplied decoded image, and supplies the stored decoded image to the inter prediction unit 123 as a reference image at a predetermined timing.

The intra prediction unit 122 performs intra prediction for generating a predicted image using pixel values in a picture to be currently processed which is the decoded image supplied as the reference image from the operation unit 119. The intra prediction unit 122 performs the intra prediction in a plurality of intra prediction modes which are prepared in advance.

The intra prediction unit 122 generates the predicted image in all candidate intra prediction modes, evaluates cost function values of the predicted images using an input image supplied from the screen rearrangement buffer 111, and selects an optimum mode. When the optimum intra prediction mode is selected, the intra prediction unit 122 supplies the predicted image generated in the optimum mode to the predicted image selection unit 124.

Further, as described above, the intra prediction unit 122 appropriately supplies intra prediction mode information indicating the employed intra prediction mode and the like to the lossless encoding unit 115 so that the intra prediction mode information is encoded.

The inter prediction unit 123 performs an inter prediction process (a motion prediction process and a compensation process) using the input image supplied from the screen rearrangement buffer 111 and the reference image supplied from the frame memory 121. More specifically, the inter prediction unit 123 performs the motion compensation process according to the motion vector detected by performing motion prediction as the inter prediction process, and generates the predicted image (inter-predicted image information). The inter prediction unit 123 performs such inter prediction in a plurality of inter prediction modes which are prepared in advance.

The inter prediction unit 123 generates the predicted image in all candidate inter prediction modes. The inter prediction unit 123 evaluates cost function values of the predicted images using the input image supplied from the screen rearrangement buffer 111 and information of the generated differentialmotion vector,andselectsanoptimum mode. When the optimum inter prediction mode is selected, the inter prediction unit 123 supplies the predicted image generated in the optimum mode to the predicted image selection unit 124 .

The inter prediction unit 123 supplies information indicating the employed inter prediction mode, information necessary for performing the process in the inter prediction mode when the encoded data is decoded, and the like to the lossless encoding unit 115 so that the information is encoded. For example, there is information of the generateddifferential motion vector as the necessary information, and there is a flag indicating an index of the prediction motion vector as the prediction motion vector information.

The predicted image selection unit 124 selects a supply source of the predicted image to be supplied to the operation unit 112 and the operation unit 119. For example, in the case of intra encoding, the predicted image selection unit 124 selects the intra prediction unit 122 as the supply source of the predicted image and supplies the predicted image supplied from the intra prediction unit 122 to the operation unit 112 and the operation unit 119. Further, for example, in the case of inter encoding, the predicted image selection unit 124 selects the inter prediction unit 123 as the supply source of the predicted image and supplies the predicted image supplied from the inter prediction unit 123 to the operation unit 112 and the operation unit 119.

The rate control unit 125 controls a rate of a quantization operation of the quantization unit 114 on the basis of the coding amount of the encoded data accumulated in the accumulation buffer 116 so that neither overflow nor underflow occurs.

The header information generation unit 131 generates, header information for example, the sequence parameter set, the picture parameter set, and the slice header on the basis of an instruction or reference information supplied from the outside or the image data supplied from the screen rearrangement buffer 111. This header information is arbitrary and may be, a for example, a video parameter set or the like. The header information generation unit 131 may generate the control information for controlling the deblocking filter process for the chroma and include the control information in the header information. The header information generation unit 131 supplies the generated header information to the lossless encoding unit 115. Further, the header information generation unit 131 also supplies the generated header information to the loop filter 120.

### <Header information generation unit>

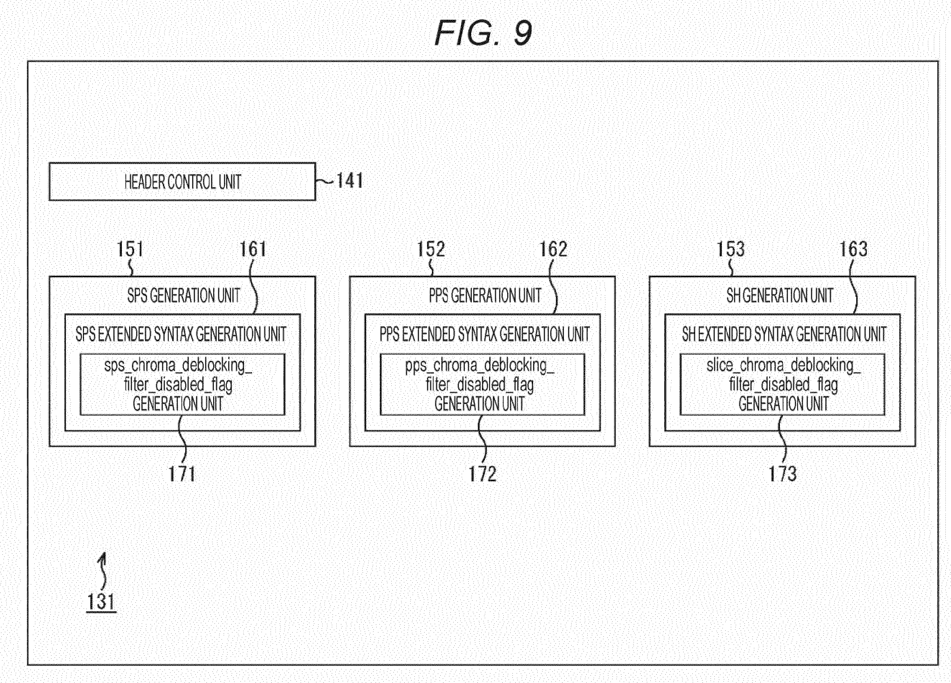

Fig. 9 is a block diagram illustrating an exemplary main configuration of the header information generation unit 131. The header information generation unit 131 includes, for example, a header control unit 141, an SPS generation unit 151, a PPS generation unit 152, and an SH generation unit 153 as illustrated in Fig. 9. The SPS generation unit 151 includes an SPS extended syntax generation unit 161. The PPS generation unit 152 includes a PPS extended syntax generation unit 162. The SH generation unit 153 includes an SH extended syntax generation unit 163. The SPS extended syntax generation unit 161 includes an sps_chroma_deblocking_filter_disabled_flag generation unit 171. The PPS extended syntax generation unit 162 includes a pps_chroma_deblocking_filter_disabled_flag generation unit 172. The SH extended syntax generation unit 163 includes a slice_chroma_deblocking_filter_disabled_flag generation unit 173.

The header control unit 141 controls the SPS generation unit 151, the PPS generation unit 152, the SH generation unit 153, and the like, and controls generation of the header information.

The SPS generation unit 151 generates the sequence parameter set (SPS). The SPS generation unit 151 can also generates an arbitrary syntax element other than the syntax element of the sequence parameter set generated by the SPS extended syntax generation unit 161. The SPS extended syntax generation unit 161 generates the extended syntax element of the sequence parameter set, for example, as in the example of Fig. 4. For example, when there is an extended syntax element other than sps_chroma_deblocking_filter_disabled_flag, the SPS extended syntax generation unit 161 can also generate the extended syntax element. The extended syntax element may be arbitrary. The sps_chroma_deblocking_filter_disabled_flag generation unit 171 generates sps_chroma_deblocking_filter_disabled_flag. As described above with reference to Fig. 4, sps_chroma_deblocking_filter_disabled_flag is a flag indicating whether or not the deblocking filter is applied to the chroma of the slice in which pps_chroma_deblocking_filter_disabled_flag or slice_chroma_deblocking_filter_disabled_flag (which will be described later) is not defined among slices belonging to a corresponding sequence.

The PPS generation unit 152 generates the picture parameter set (PPS). The PPS generation unit 152 can also generate an arbitrary syntax element other than the syntax element of the picture parameter set generated by the PPS extended syntax generation unit 162. The PPS extended syntax generation unit 162 generates the extended syntax element of the picture parameter set, for example, as in the example of Fig. 5. For example, when there is an extended syntax element other than pps_chroma_deblocking_filter_disabled_flag, the PPS extended syntax generation unit 162 can also generate the extended syntax element. The extended syntax element may be arbitrary. The pps_chroma_deblocking_filter_disabled_flag generation unit 172 generates pps_chroma_deblocking_filter_disabled_flag. As described above with reference to Fig. 5, pps_chroma_deblocking_filter_disabled_flag is a flag indicating whether or not the deblocking filter is applied to the chroma of the slice in which slice_chroma_deblocking_filter_disabled_flag (which will be described later) is not defined among slices belonging to a corresponding picture.

The SH generation unit 153 generates the slice header (SH) . The SH generation unit 153 can also generate an arbitrary syntax element other than the syntax element of the slice header generated by the SH extended syntax generation unit 163. The SH extended syntax generation unit 163 generates the extended syntax element of the slice header, for example, as in the example of Fig. 6. For example, when there is an extended syntax element other than slice_chroma_deblocking_filter_disabled_flag, the SH extended syntax generation unit 163 can also generate the extended syntax element. The extended syntax element may be arbitrary. The slice_chroma_deblocking_filter_disabled_flag generation unit 173 generates slice_chroma_deblocking_filter_disabled_flag. As described above with reference to Fig. 6, slice_chroma_deblocking_filter_disabled_flag is a flag indicating whether or not the deblocking filter is applied to the chroma of a corresponding slice.

### <Loop filter>

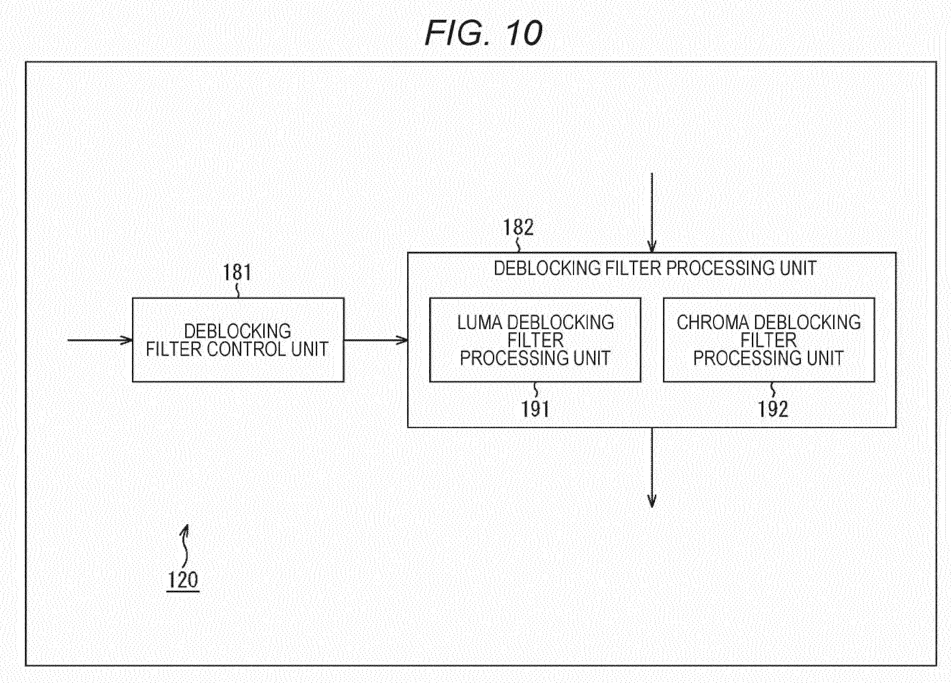

Fig. 10 is a block diagram illustrating an exemplary main configuration of the loop filter 120. The loop filter 120 includes, for example, a deblocking filter control unit 181 and a deblocking filter processing unit 182 as illustrated in Fig. 10. The deblocking filter processing unit 182 includes a luma deblocking filter processing unit 191 and a chroma deblocking filter processing unit 192.

The deblocking filter control unit 181 controls the deblocking filter process performed by the deblocking filter processing unit 182 (that is, the deblocking filter process for the luma performed by the luma deblocking filter processing unit 191 and the deblocking filter process for the chroma performed by the chroma deblocking filter processing unit 192) on the basis of the header information supplied from the header information generation unit 131. The header information can include the control information for the deblocking filter for the chroma. The deblocking filter control unit 181 performs, for example, the execution control of the deblocking filter process for the chroma (control of whether or not the deblocking filter process for the chroma is executed) as control of the deblocking filter process.

The deblocking filter processing unit 182 performs the deblocking filter process on the decoded image supplied from the operation unit 119 according to control of the deblocking filter control unit 181. The luma deblocking filter processing unit 191 performs the deblocking filter process for the luma on the decoded image supplied from the operation unit 119 according to control of the deblocking filter control unit 181. The chroma deblocking filter processing unit 192 performs the deblocking filter process for the chroma on the decoded image supplied from the operation unit 119 according to control of the deblocking filter control unit 181. The deblocking filter processing unit 182 supplies the decoded image that has undergone the deblocking filter process or the decoded image that has not undergone the deblocking filter process to the frame memory 121.

### <Flow of encoding process>

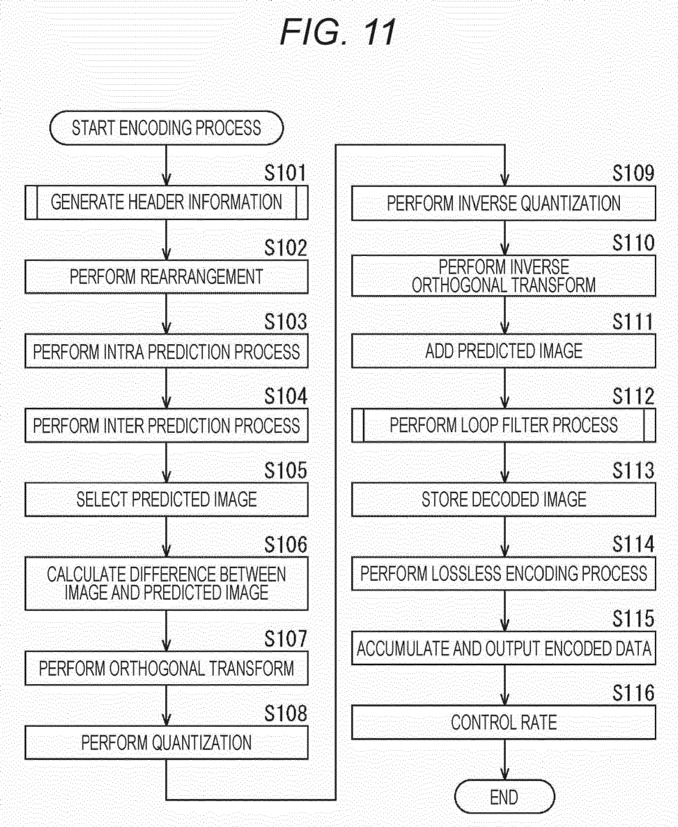

Next, an example of a flow of each process executed by the image encoding device 100 will be described. First, an example of a flow of the encoding process will be described with reference to a flowchart of Fig. 11.

When the encoding process starts, in step S101, the header information generation unit 131 generates, for example, the header information such as the sequence parameter set (SPS), the picture parameter set (PPS), and the slice header (SH) .

In step S102, the screen rearrangement buffer 111 stores images of frames (pictures) of an input moving image in a display order, and rearranges the pictures of the display order in an encoding order.

In step S103, the intra prediction unit 122 performs an intra prediction process of an intra prediction mode.

In step S104, the inter prediction unit 123 performs the inter prediction process of performing the motion prediction, the motion compensation, and the like in the inter prediction mode.

In step S105, the predicted image selection unit 124 selects either the predicted image generated by the intra prediction in step S103 or the predicted image generated by the inter prediction in step S104 on the basis of the cost function value or the like.

In step S106, the operation unit 112 calculates a difference between the input image in which the order of frames is rearranged in the process of step S102 and the predicted image selected in the process of step S105. In other words, the operation unit 112 generates the residual data between the input image and the predicted image. The residual data which is obtained consequently is reduced in a data amount to be smaller than original image data. Thus, it is possible to compress a data amount to be smaller than when an image is encoded without change.

In step S107, the orthogonal transform unit 113 performs the orthogonal transform on the residual data generated in the process of step S106.

In step S108, the quantization unit 114 quantizes the orthogonal transform coefficients obtained in the process of step S107 using the quantization parameter calculated by the rate control unit 125.

In step S109, the inverse quantization unit 117 inversely quantizes the quantized coefficients (also referred to as quantization coefficients) generated in the process of step S108 according to a characteristic corresponding to a characteristic of the quantization.

In step S110, the inverse orthogonal transform unit 118 performs the inverse orthogonal transform on the orthogonal transform coefficients obtained in the process in step S109.

In step S111, the operation unit 119 generates image data of the decoded image by adding the predicted image selected in the process of step S105 to the residual data restored in the process of step S110.

In step S112, the loop filter 120 appropriately performs the loop filter process on the image data of the decoded image generated in the process of step S111.

In step S113, the frame memory 121 stores the decoded image which is locally decoded and has undergone the process of step S112.

In step S114, the lossless encoding unit 115 encodes the quantized coefficients obtained in the process of step S108. In other words, lossless encoding such as variable length coding or arithmetic coding is performed on data corresponding to the residual data.

Further, at this time, the lossless encoding unit 115 encodes the header information generated in the processing of step S101 and adds the encoded header information to the encoded data obtained by encoding the quantized coefficients.

Further, the lossless encoding unit 115 encodes information related to the prediction mode of the predicted image selected in the process of step S105 and adds the encoded information to the header information of the encoded data. In other words, the lossless encoding unit 115 encodes, for example, information according to the optimum intra predict ion mode information supplied from the intra prediction unit 122 or the optimum inter prediction mode supplied from the inter prediction unit 123, and adds the encoded information to the header information of the encoded data.

In step S115, the accumulation buffer 116 accumulates the encoded data and the like obtained in the process of step S114 . The encoded data and the like stored in the accumulation buffer 116 are appropriately read as a bitstream and transmitted to a decoding side via a transmission path or a recording medium.

In step S116, the rate control unit 125 controls the rate of the quantization process of step S108 on the basis of a coding amount (a generated code amount) of the encoded data accumulated in the accumulation buffer 116 in the process of step S115 so that neither overflow nor underflow occurs.

When the process of step S116 ends, the encoding process ends.

### <Flow of header information generation process>

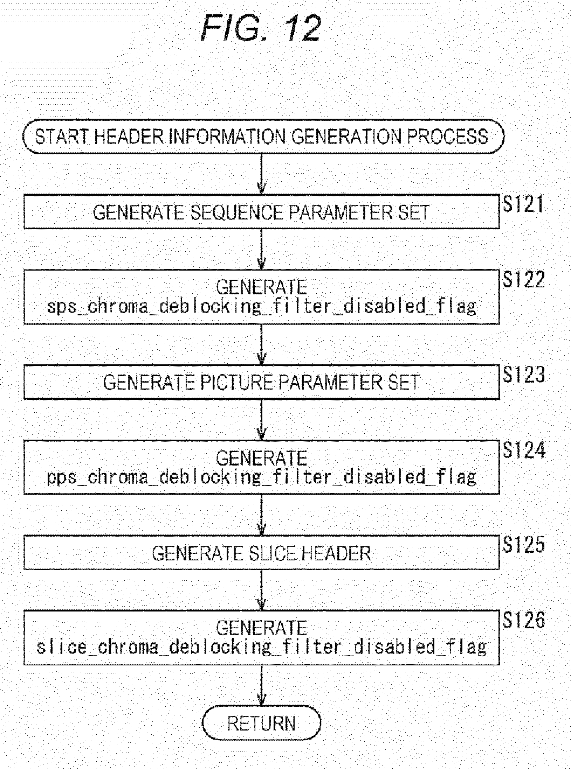

Next, an example of a flow of the header information generation process executed in step S101 of the encoding process will be described with reference to a flowchart of Fig. 12.

When the header information generation process starts, in step S121, the SPS generation unit 151 generates the sequence parameter set (SPS). The SPS generation unit 151 generates a syntax element other than the extended syntax of the sequence parameter set, and the SPS extended syntax generation unit 161 generates a syntax element other than sps_chroma_deblocking_filter_disabled_flag of the sequence parameter set.

In step S122, the sps_chroma_deblocking_filter_disabled_flag generation unit 171 generates sps_chroma_deblocking_filter_disabled_flag of the sequence parameter set. For example, when the deblocking filter process is performed on the chroma of a slice in which pps_chroma_deblocking_filter_disabled_flag or slice_chroma_deblocking_filter_disabled_flag (which will be described later) is not defined among slices belonging to a corresponding sequence, the sps_chroma_deblocking_filter_disabled_flag generation unit 171 sets a value of the flag to false (for example, "0"). Further, for example, when the deblocking filter process is not performed on the chroma of a slice in which pps_chroma_deblocking_filter_disabled_flag or slice_chroma_deblocking_filter_disabled_flag (which will be described later) is not defined among slices belonging to a corresponding sequence, the sps_chroma_deblocking_filter_disabled_flaggeneration unit 171 sets a value of the flag to true (for example, "1") . For example, the value of the flag is decided on the basis of arbitrary information such as a predetermined setting.

In step S123, the PPS generation unit 152 generates the picture parameter set (PPS). The PPS generation unit 152 generates a syntax element other than the extended syntax of the picture parameter set, and the PPS extended syntax generation unit 162 generates an extended syntax element other than pps_chroma_deblocking_filter_disabled_flag of the picture parameter set.

In step S124, the pps_chroma_deblocking_filter_disabled_flag generation unit 172 generates pps_chroma_deblocking_filter_disabled_flag of the picture parameter set. For example, when the deblocking filter process is performed on the chroma of a slice in which slice_chroma_deblocking_filter_disabled_flag (which will be described later) is not defined among slices belonging to a corresponding picture, the pps_chroma_deblocking_filter_disabled_flag generation unit 172 sets a value of the flag to false (for example, "0"). Further, for example, when the deblocking filter process is not performed on the chroma of a slice in which slice_chroma_deblocking_filter_disabled_flag (which will be described later) is not defined among slices belonging to a corresponding picture, the pps_chroma_deblocking_filter_disabled_flag generation unit 172 sets a value of the flag to true (for example, "1") . For example, the value of the flag is decided on the basis of arbitrary information such as a predetermined setting.

In step S125, the SH generation unit 153 generates the slice header (SH). The SH generation unit 153 generates a syntax element other than the extended syntax of the slice header, and the SH extended syntax generation unit 163 generates an extended syntax element other than slice_chroma_deblocking_filter_disabled_flag of the slice header.

In step S126, the slice_chroma_deblocking_filter_disabled_flag generation unit 173 generates slice_chroma_deblocking_filter_disabled_flag of the slice header. For example, when the deblocking filter process is performed on the chroma of a corresponding slice, the slice_chroma_deblocking_filter_disabled_flag generation unit 173 sets a value of the flag to false (for example, "0") . Further, for example, when the deblocking filter process is not performed on the chroma of a corresponding slice, the slice_chroma_deblocking_filter_disabled_flag generation unit 173 sets a value of the flag to true (for example, "1") . For example, the value of the flag is decided on the basis of arbitrary information such as a predetermined setting.

When the process of step S126 ends, the header information generation process ends, and the process returns to Fig. 11.

Since the control information for controlling the deblocking filter process for the chrominance component (the chroma) of the image data is generated as header information as described above, the image encoding device 100 (the header information generation unit 131) can control the deblocking filter process for the chroma independently of the deblocking filter process for the luminance component (the luma). For example, it is possible to perform the deblocking filter process for the luma while not performing the deblocking filter process for the chroma. Thus, by applying the present technology, the image encoding device 100 (the header information generation unit 131) can appropriately process the images of the screen content as well as the natural images in the deblocking filter process performed when image data is encoded or decoded and thus suppress a reduction in the image quality.

### <Flow of loop filter process>

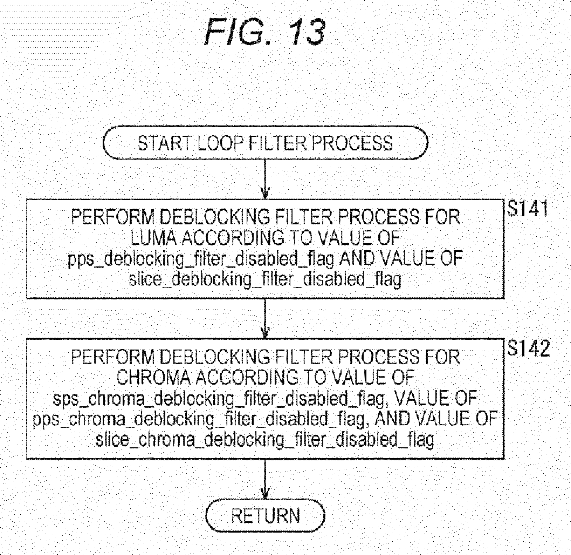

Next, an example of a flow of the loop filter process performed in step S112 of the encoding process of Fig. 11 will be described with reference to a flowchart of Fig. 13.

When the loop filter process starts, in step S141, the deblocking filter control unit 181 controls execution of the deblocking filter process for the luma of the decoded image on the basis of a value of pps_deblocking_filter_disabled_flag and a value of slice_deblocking_filter_disabled_flag included in the header information. The syntax elements have been described above with reference to Figs. 2 and 3, and the value of slice_deblocking_filter_disabled_flag has precedence over the value of pps_deblocking_filter_disabled_flag. Further, the luma deblocking filter processing unit 191 performs the deblocking filter process for the luma of the decoded image on the basis of the control, that is, according to the value of pps_deblocking_filter_disabled_flag and the value of slice_deblocking_filter_disabled_flag.

In step S142, the deblocking filter control unit 181 controls execution of the deblocking filter process for the chroma of the decoded image on the basis of a value of sps_chroma_deblocking_filter_disabled_flag, a value of pps_chroma_deblocking_filter_disabled_flag, and a value of slice_chroma_deblocking_filter_disabled_flag included in the header information. The syntax elements have been described above with reference to Figs. 4 to 6, and the value of pps_chroma_deblocking_filter_disabled_flag has precedence over the value of sps_chroma_deblocking_filter_disabled_flag, and the value of slice_chroma_deblocking_filter_disabled_flag has precedence over the value of pps_chroma_deblocking_filter_disabled_flag and the value of sps_chroma_deblocking_filter_disabled_flag. Further, the chroma deblocking filter processing unit 192 performs the deblocking filter process for the chroma of the decoded image on the basis of the control, that is, according to the value of sps_chroma_deblocking_filter_disabled_flag, the value of pps_chroma_deblocking_filter_disabled_flag, and the value of slice_chroma_deblocking_filter_disabled_flag.

When the process of step S142 ends, the loop filter process ends, and the process returns to Fig. 11.

As described above, the deblocking filter process is performed on the basis of the control information for controlling the deblocking filter process for the chrominance component (the chroma) of the image data included in the header information, and thus the image encoding device 100 (the loop filter 120) can perform the deblocking filter process for the chroma independently of the deblocking filter process for the luminance component (the luma). For example, it is possible to perform the deblocking filter process for the luma while not performing the deblocking filter process for the chroma. Thus, by applying the present technology, the image encoding device 100 (the loop filter 120) can appropriately perform the deblocking filter process on the images of the screen content as well as the natural images when image data is encoded and thus suppress a reduction in the image quality.

### <Image decoding device>

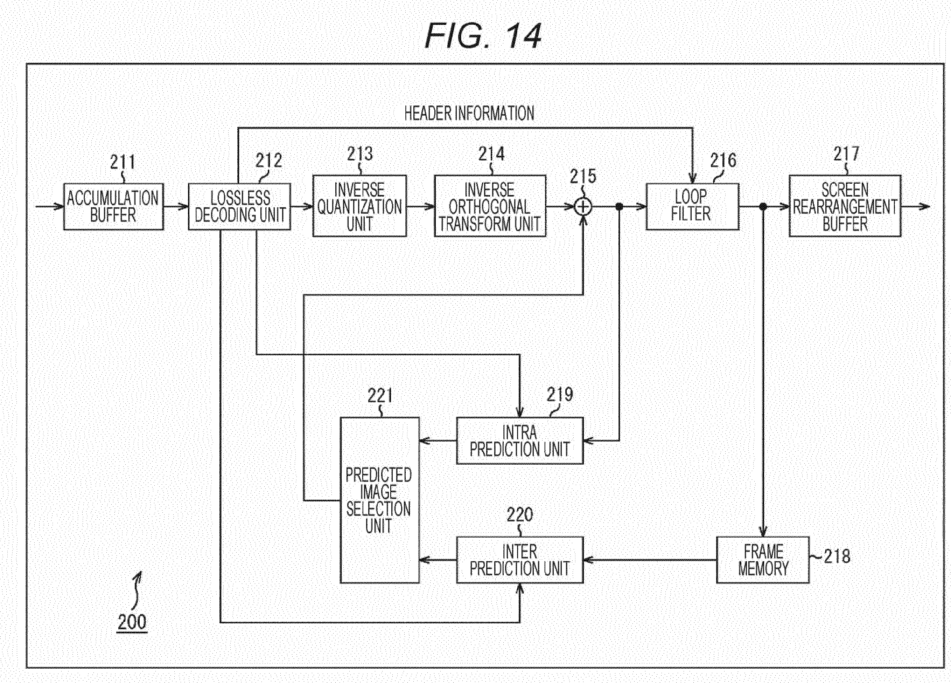

Fig. 14 is a block diagram illustrating an exemplary main configuration of an image decoding device which is one aspect of the image processing device to which the present technology is applied. For example, an image decoding device 200 illustrated in Fig. 14 decodes the encoded data which is generated by the image encoding device 100 (Fig. 8) encoding the image data according to the HEVC encoding scheme.

The image decoding device 200 includes an accumulation buffer 211, a lossless decoding unit 212, an inverse quantization unit 213, an inverse orthogonal transform unit 214, an operation unit 215, a loop filter 216, and a screen rearrangement buffer 217 as illustrated in Fig. 14. The image decoding device 200 further includes a frame memory 218, an intra prediction unit 219, an inter prediction unit 220, and a predicted image selection unit 221.

The accumulation buffer 211 is also a reception unit that receives the encoded data transmitted from the encoding side. The accumulation buffer 211 receives and accumulates the transmitted encoded data, and supplies the encoded data to the lossless decoding unit 212 at a predetermined timing. The lossless decoding unit 212 decodes the encoded data supplied from the accumulation buffer 211 according to the HEVC scheme. The lossless decoding unit 212 supplies the quantized coefficient data obtained by the decoding to the inverse quantization unit 213.

Further, the lossless decoding unit 212 determines whether the intra prediction mode or the inter prediction mode is selected as the optimum prediction mode on the basis of the information related to the optimum predict ion mode to which the encoded data is added, and supplies the information related to the optimum prediction mode to one of the intra prediction unit 219 and the inter prediction unit 220 which is determined to be the selected mode. For example, when the intra prediction mode is selected as the optimum prediction mode at the encoding side, the information related to the optimum prediction mode is supplied to the intra prediction unit 219. Further, for example, when the inter prediction mode is selected as the optimum prediction mode at the encoding side, the information related to the optimum prediction mode is supplied to the inter prediction unit 220.

Further, the lossless decoding unit 212 supplies information necessary for the inverse quantization such as a quantization matrix or a quantization parameter to the inverse quantization unit 213.

Further, the lossless decoding unit 212 supplies the header information such as the sequence parameter set (SPS), the picture parameter set (PPS), and the slice header to the loop filter 216. The header information may include the control information for the deblocking filter for the chroma as described above in connection with the image encoding device 100.

The inverse quantization unit 213 inversely quantizes the quantized coefficient data obtained by the decoding performed by the lossless decoding unit 212 according to a scheme correspondingto the quantization scheme at the encoding side. The inverse quantization unit 213 supplies the obtained coefficient data to the inverse orthogonal transform unit 214.

The inverse orthogonal transform unit 214 performs the inverse orthogonal transform on the orthogonal transform coefficients supplied from the inverse quantization unit 213 according to a scheme corresponding to the orthogonal transform scheme at the encoding side. The inverse orthogonal transform unit 214 obtains the residual data corresponding to the state before the orthogonal transform is performed at the encoding side through the inverse orthogonal transform process. The residual data obtained by the inverse orthogonal transform is supplied to the operation unit 215.

The operation unit 215 acquires the residual data from the inverse orthogonal transform unit 214. Further, the operation unit 215 acquires the predicted image from the intra prediction unit 219 or the inter prediction unit 220 via the predicted image selection unit 221. The operation unit 215 obtains the decoded image corresponding to the image before the predicted image is subtracted at the encoding side by adding a differential image to the predicted image. The operation unit 215 supplies the decoded image to the loop filter 216 and the intra prediction unit 219.

The loop filter 216 is a processing unit similar to the loop filter 120 of the image encoding device 100 (Fig. 8), and performs a process similar to that of the loop filter 120. In other words, the loop filter 216 appropriately performs the loop filter process on the decoded image supplied from the operation unit 215. The loop filter process is arbitrary as long as it is a filter process including at least the deblocking filter process. For example, the loop filter 120 removes deblocking distortion by performing the deblocking filter process on the decoded image, and improves the image quality by performing an adaptive loop filter process using the Wiener filter.

The loop filter 216 acquires the header information that can include the control information for the deblocking filter for the chroma from the lossless decoding unit 212 and performs the deblocking filter process on the basis of the control information. Further, the loop filter 216 may perform the filter process using the filter coefficients supplied from the encoding side.

The loop filter 216 supplies the decoded image that has appropriately undergone the filter process to the screen rearrangement buffer 217 and the frame memory 218.

The screen rearrangement buffer 217 performs a rearrangement of the image. In other words, the order of the frames rearranged in the encoding order at the encoding side is rearranged in the original display order. The screen rearrangement buffer 217 outputs the decoded image data in which the orders of the frames are rearranged to the outside of the image decoding device 200.

The frame memory 218 stores the supplied decoded image, and supplies the stored decoded image to the inter prediction unit 220 as the reference image at a predetermined timing or on the basis of a request given from the outside such as the inter prediction unit 220 or the like.

Information indicating the intra prediction mode obtained by decoding the header information or the like is appropriately supplied from the lossless decoding unit 212 to the intra prediction unit 219. The intra prediction unit 219 performs the intra prediction using the decoded image supplied from the operation unit 215 as the reference image in the intra prediction mode used at the encoding side, and generates the predicted image. The intra prediction unit 219 supplies the generated predicted image to the predicted image selection unit 221.

The inter prediction unit 220 acquires information (the optimum prediction mode information, the reference image information, and the like) obtained by decoding the header information from the lossless decoding unit 212.

The inter prediction unit 220 performs the inter prediction using the reference image acquired from the frame memory 218 in the inter prediction mode indicated by the optimum prediction mode information acquired from the lossless decoding unit 212, and generates the predicted image.

The predicted image selection unit 221 supplies the predicted image supplied from the intra prediction unit 219 or the predicted image supplied from the inter prediction unit 220 to the operation unit 215. Further, the operation unit 215 adds the predicted image generated using the motion vector to the residual data supplied from the inverse orthogonal transform unit 214, and thus the original image is decoded. In other words, the decoded image is generated.

### <Loop filter>

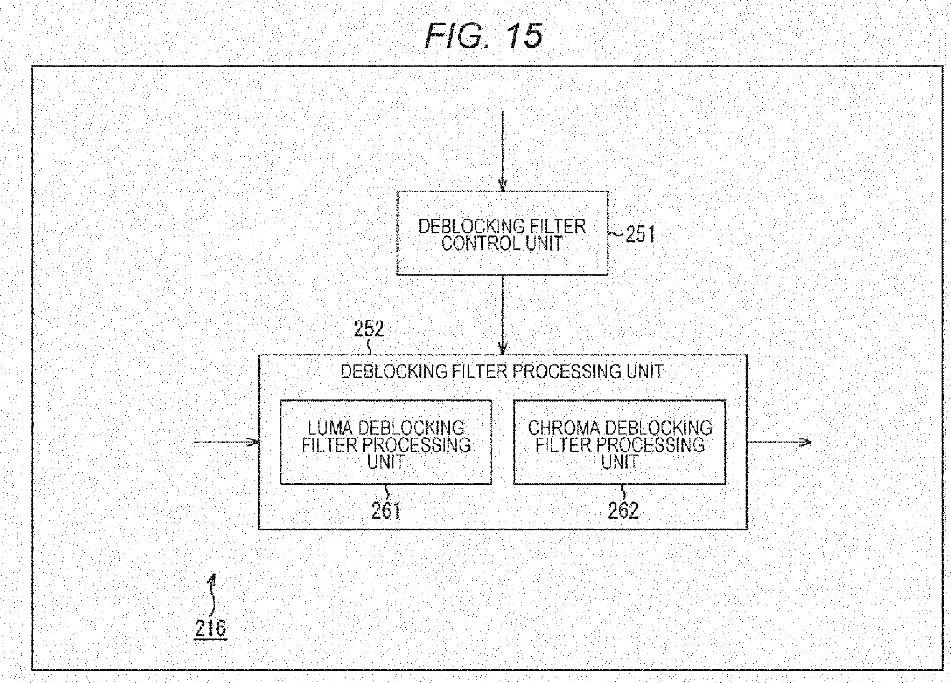

Fig. 15 is a block diagram illustrating an exemplary main configuration of the loop filter 216. The loop filter 216 includes, for example, a deblocking filter control unit 251 and a deblocking filter processing unit 252 as illustrated in Fig. 15. The deblocking filter processing unit 252 includes a luma deblocking filter processing unit 261 and a chroma deblocking filter processing unit 262. In other words, the loop filter 216 has a similar configuration to that of the loop filter 120 and performs a similar process.

In other words, the deblocking filter control unit 251 corresponds to the deblocking filter control unit 181 of the loop filter 120, and controls the deblocking filter process performed by the deblocking filter processing unit 252 (that is, the deblocking filter process for the luma performed by the luma deblocking filter processing unit 261 and the deblocking filter process for the chroma performed by the chroma deblocking filter processing unit 262) on the basis of the header information supplied from the lossless decoding unit 212. The header information can include the control information for the deblocking filter for the chroma. The deblocking filter control unit 251 performs, for example, the execution control of the deblocking filter process for the chroma (control of whether or not the deblocking filter process for the chroma is performed) as control of the deblocking filter process.

Further, the deblocking filter processing unit 252 corresponds to the deblocking filter processing unit 182 of the loop filter 120, and performs the deblocking filter process on the decoded image supplied from the operation unit 215 according to control of the deblocking filter processing unit 251. The deblocking filter processing unit 252 supplies the decoded image that has undergone the deblocking filter process or the decoded image that has not undergone the deblocking filter process to the screen rearrangement buffer 217 and the frame memory 218.

The luma deblocking filter processing unit 261 corresponds to the luma deblocking filter processing unit 191 of the loop filter 120, and performs the deblocking filter process for the luma of the decoded image supplied from the operation unit 215 according to control of the deblocking filter processing unit 251. The chroma deblocking filter processing unit 262 corresponds to the chroma deblocking filter processing unit 192 of the loop filter 120, and performs the deblocking filter process for the chroma of the decoded image supplied from the operation unit 215 according to control of the deblocking filter processing unit 251.

### <Flow of decoding process>

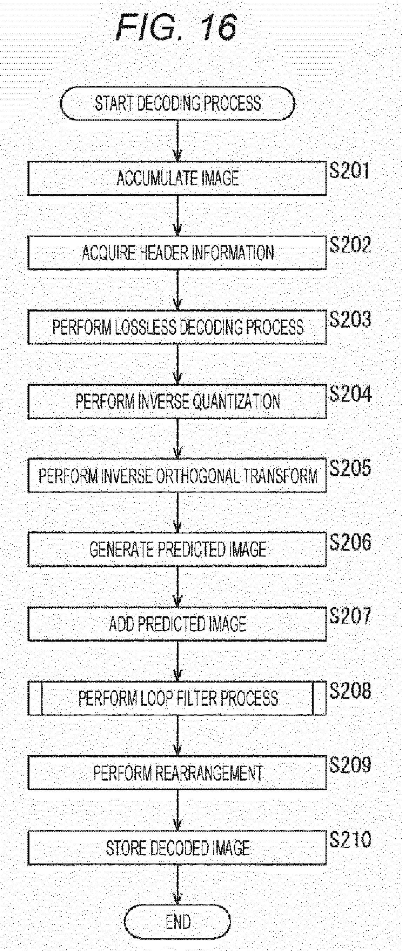

Next, an example of a flow of each process performed by the image decoding device 200 will be described. First, an example of a flow of the decoding process will be described with reference to a flowchart of Fig. 16.

When the decoding process starts, in step S201, the accumulation buffer 211 accumulates transmitted bitstreams. In step S202, the lossless decoding unit 212 decodes the bitstreams accumulated in the accumulation buffer 211, and acquires the header information such as the sequence parameter set (SPS), the picture parameter set (PPS), and the sliceheader. For example, the header information is generated by the image encoding device 100 and includes the control information for the deblocking filter as described above.

In step S203, the lossless decoding unit 212 decodes the bitstreams accumulated in the accumulation buffer 211, and thus I pictures, P pictures, Bpictures, and the like encoded at the encoding side are decoded.

In step S204, the inverse quantization unit 213 inversely quantizes the quantized coefficients obtained in the process of step S203.

In step S205, the inverse orthogonal transform unit 214 performs the inverse orthogonal transform on the orthogonal transform coefficients obtained in the process in step S204. Through this process, the residual data is restored.

In step S206, the intra prediction unit 219 or the inter prediction unit 220 performs the prediction process, and generates the predicted image. In other words, the prediction process is performed in the prediction mode which is determined to be applied at the time of encoding in the lossless decoding unit 212. More specifically, for example, when the intra prediction is applied at the time of encoding, the intra prediction unit 219 generates the predicted image in the intra prediction mode considered to be optimum at the time of encoding. Further, for example, when the inter prediction is applied at the time of encoding, the inter prediction unit 220 generates the predicted image in the inter prediction mode considered to be optimum at the time of encoding.

In step S207, the operation unit 215 adds the predicted image generated in step S206 to the residual data restored in the process of step S205. Accordingly, the decoded image is obtained.

In step S208, the loop filter 216 appropriately performs the loop filter process on the image data of the decoded image generated in the process of step S207.

In step S209, the screen rearrangement buffer 217 rearranges the frames of the decoded image that has undergone the process of step S208. In other words, the order of the frames rearranged at the time of encoding is rearranged in the original display order. The decoded image in which the frames are rearranged is output to the outside of the image decoding device 200.

In step S210, the frame memory 218 stores the decoded image that has undergone the process of step S208.

When the process of step S210 ends, the decoding process ends.

In step S208, the loop filter 216 performs the loop filter process, similarly to the example of the loop filter process performed by the loop filter 120 of the image encoding device 100 described above with reference to the flowchart of Fig. 13. In other words, the description of the example of the flow of the loop filter process illustrated Fig. 13 can be also applied to the description of the loop filter process performed by the loop filter 216 (that is, the process of step S208 of the decoding process).

In other words, the image decoding device 200 (the loop filter 216) performs the deblocking filter process on the basis of the control information for controlling the deblocking filter process for the chrominance component (the chroma) of the image data included in the header information. Thus, the image decoding device 200 (the loop filter 216) can perform the deblocking filter process for the chroma independently of the deblocking filter process for the luminance component (the luma). For example, it is possible to perform the deblocking filter process for the luma while not performing the deblocking filter process for the chroma. Thus, by applying the present technology, the image decoding device 200 (the loop filter 216) can more appropriately perform the deblocking filter process on the images of the screen content as well as the natural images when the image data is decoded and thus suppress a reduction in the image quality.

The above description has been made in connection with the example in which the control information for controlling the deblocking filter process for the chroma is included in the sequence parameter set, the picture parameter set, and the slice header, but the control information may be stored in an arbitrary position of the header information of the encoded data. For example, the control information may be included in header information of a layer other than the above-described examples such as a video parameter set or a tile header. Further, the control information may be included in none of the sequence parameter set, the picture parameter set, and the slice header. For example, the control information may be included only in the sequence parameter set and the picture parameter set, only in the picture parameter set and the slice header, or only in the sequence parameter set and the slice header. Further, the control information may be included only in any one of the sequence parameter set, the picture parameter set, and the slice header.

### <2. Second embodiment>

### <Use of control parameter of deblocking filter>

The control information for controlling the deblocking filter process for the chroma may be generated according to a value of a control parameter related to an existing deblocking filter. In general, there are few cases in which it is desirable to perform the deblocking filter process on the chroma without performing the deblocking filter process on the luma. Thus, the deblocking filter process for the chroma may not be performed on slices on which the deblocking filter process for the luma is not performed. In other words, it is unnecessary to control (possible to omit) the deblocking filter process for the chroma for such slices. In other words, control of the deblocking filter process for the chroma may be performed only when there is a possibility that the deblocking filter process for the luma will be performed.

It is possible to easily determine whether or not the deblocking filter process for the luma is performed on the basis of the control parameter related to the existing deblocking filter. Therefore, it is desirable to set the control information for controlling the deblocking filter process for the chroma only when there is a possibility that the deblocking filter process for the luma will be performed according to the value of the control parameter.

Thus, since it is possible to omit the control information for controlling the deblocking filter process for the chroma for slices that is unlikely to undergo the deblocking filter process for the luma (that is, it is possible to omit the control information for controlling the deblocking filter process for the chroma which is explicitly unnecessary), it is possible to suppress an increase in the coding amount accordingly and suppress a reduction in the encoding efficiency.

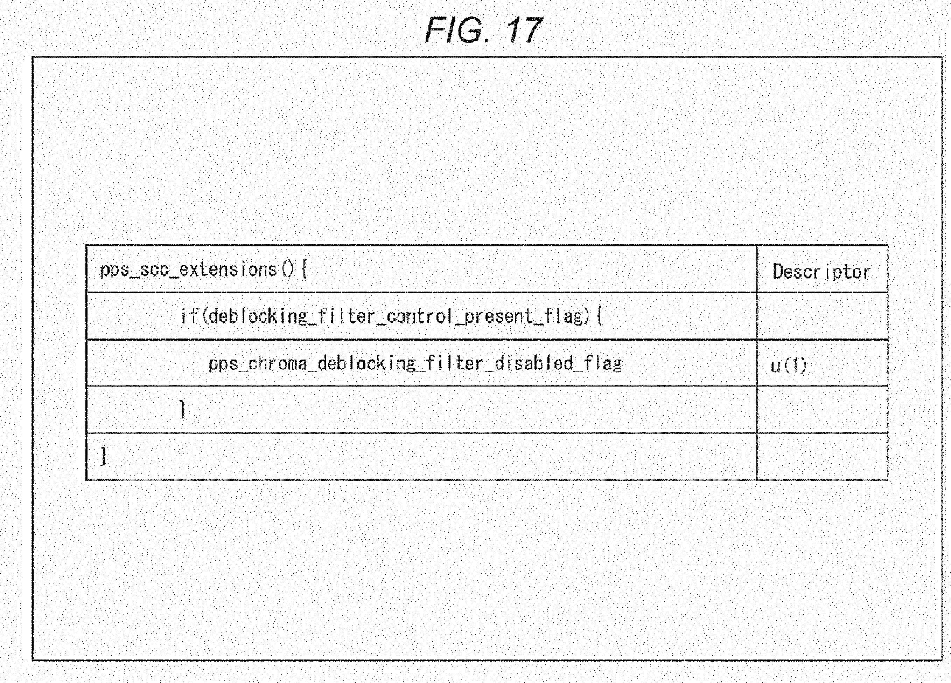

Amore specific example will be described. For example, in the picture parameter set, pps_chroma_deblocking_filter_disabled_flag may be set as the extended syntax element only when the value of deblocking_filter_control_present_flag is true ("1") as illustrated in Fig. 17.

deblocking_filter_control_present_flag is a flag indicating whether or not there is a syntax element for controlling the deblocking filter in the picture parameter set as described above with reference to Fig. 2. In other words, deblocking_filter_control_present_flag is a control parameter related to the deblocking filter indicating a possibility that the deblocking filter process for the luma will be performed.

For example, when the value of deblocking_filter_control_present_flag is true ("1"), it indicates that there is a syntax element for controlling the deblocking filter in the picture parameter set. In other words, in this case, for slices belonging to a corresponding picture, there is a possibility that the deblocking filter process for the luma will be performed, and there is a possibility that the deblocking filter process for the chroma will be performed as well. In this regard, pps_chroma_deblocking_filter_disabled_flag is set.

Further, for example, when a value of deblocking_filter_control_present_flag is false ("0"), it indicates that there is no syntax element for controlling the deblocking filter in the picture parameter set. In other words, in this case, for slices belonging to a corresponding picture, there is no possibility that the deblocking filter process for the luma will be performed, and control of the deblocking filter process for the chroma is also unnecessary. In this regard, a setting of pps_chroma_deblocking_filter_disabled_flag is omitted.

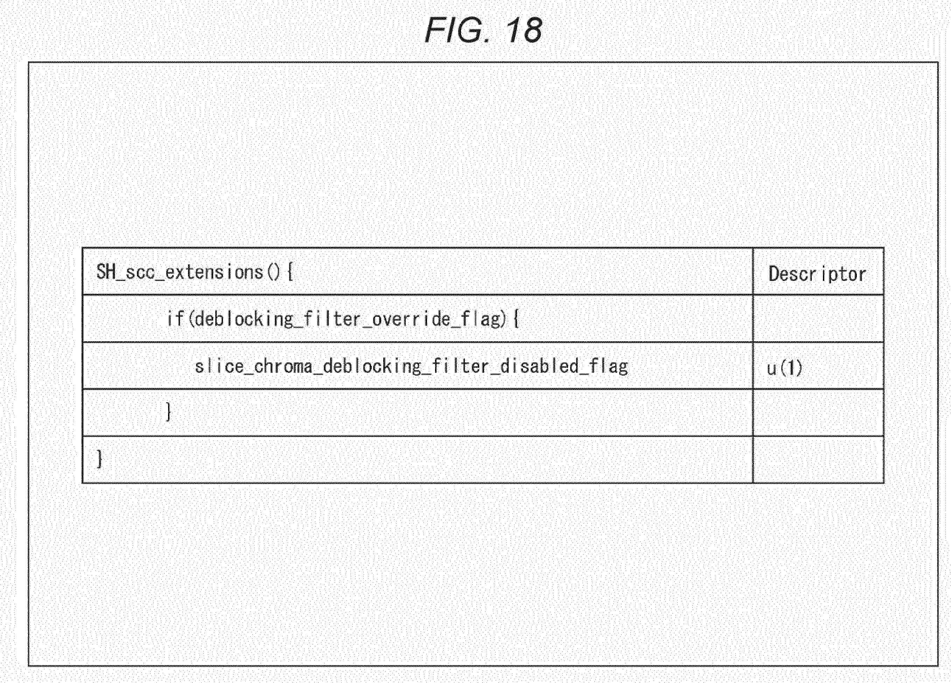

Further, for example, in the slice header, slice_chroma_deblocking_filter_disabled_flag may be set as the extended syntax element only when a value of deblocking_filter_override_flag is true ("1") as illustrated in Fig. 18.

deblocking_filter_override_flag is a flag indicating whether or not there is a syntax element for controlling the deblocking filter in the slice header as described above with reference to Fig. 3. In other words, deblocking_filter_control_present_flag is a control parameter related to the deblocking filter indicating a possibility that the deblocking filter process for the luma will be performed.

For example, when a value of deblocking_filter_override_flag is true ("1"), it indicates that there is a syntax element for controlling the deblocking filter in the slice header. In other words, in this case, for a corresponding slice, there is a possibility that the deblocking filter process for the luma will be performed, and there is a possibility that the deblocking filter process for the chroma will be performed as well. In this regard, slice_chroma_deblocking_filter_disabled_flag is set.

Further, for example, when a value of deblocking_filter_override_flag is false ("0"), it indicates that there is no syntax element for controlling the deblocking filter in the slice header. In other words, in this case, for a corresponding slice, there is no possibility that the deblocking filter process for the luma will be performed, and control of the deblocking filter process for the chroma is also unnecessary. In this regard, a setting of slice_chroma_deblocking_filter_disabled_flag is omitted.

Thus, since it is possible to omit the control information for controlling the deblocking filter process for the chroma which is explicitly unnecessary in the header information of each layer such as the picture parameter set or the slice header, it is possible to suppress an increase in the coding amount accordingly and suppress a reduction in the encoding efficiency.

### <Image encoding device, header information generation unit, and loop filter>

In this case, a configuration of the image encoding device which is one aspect of the image processing device to which the present technology is applied is similar to that of the first embodiment (Fig. 8). Further, in this case, configurations of the header information generation unit 131 and the loop filter 120 are also similar to those of the first embodiment (Figs. 9 and 10).

### <Flow of encoding process>

Further, in this case, a flow of the encoding process performed by the image encoding device 100 is similar to that of the first embodiment (Fig. 11).

### <Flow of header information generation process>

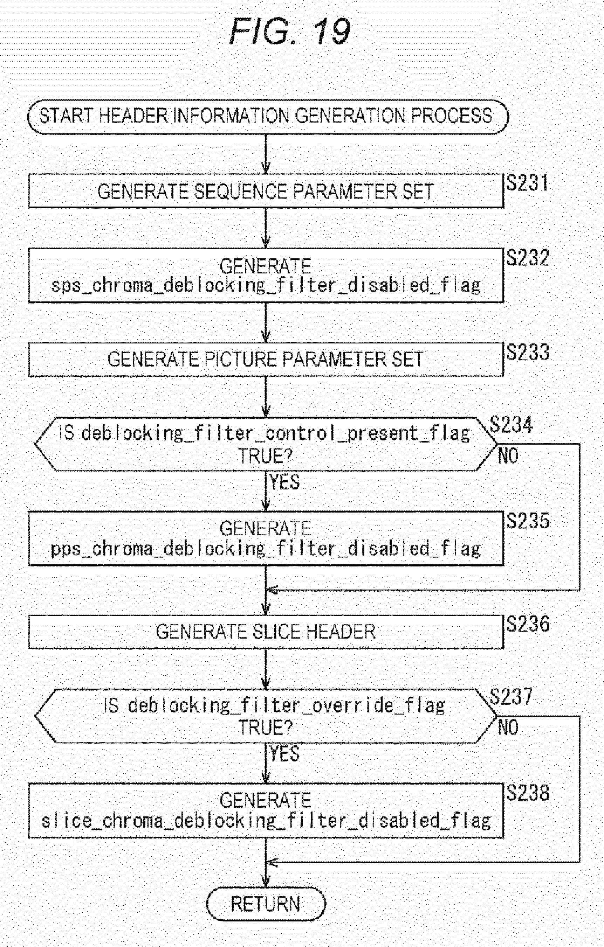

Next, an example of a flow of the header information generation process performed in step S101 of the encoding process in this case will be described with reference to a flowchart of Fig. 19.

When the header information generation process starts, a process of steps S231 to S233 is performed, similarly to the process of steps S121 to S123 of Fig. 12.

In step S234, the header control unit 141 determines whether or not a value of deblocking_filter_control_present_flag is true ("1") in the picture parameter set. When a value of deblocking_filter_control_present_flag is determined to be true ("1"), the process proceeds to step S235.

A process of step S235 is performed similarly to the process of step S124 of Fig. 12.

When the process of step S235 ends, the process proceeds to step S236. Further, when a value of deblocking_filter_control_present_flag is determined to be false ("0") in step S234, the process proceeds to step S236.

A process of step S236 is performed similarly to the process of step S125 of Fig. 12.

In step S237, the header control unit 141 determines whether or not a value of deblocking_filter_override_flag is true ("1") in the slice header. When a value of deblocking_filter_override_flag is determined to be true ("1"), the process proceeds to step S238.

A process of step S238 is performed similarly to the process of step S126 of Fig. 12.

When the process of step S238 ends, the header information generation process ends, and the process returns to Fig. 11. Further, when a value of deblocking_filter_override_flag is determined to be false ("0") in step S237, the header information generation process ends, and the process returns to Fig. 11.

Since the control information for controlling the deblocking filter process for the chroma is generated according to the value of the control parameter related to the existing deblocking filter a described above, the image encoding device 100 (the header information generation unit 131) can omit the control information for controlling the deblocking filter process for the chroma for the slice in which the deblocking filter process for the chroma is explicitly unnecessary. Thus, by applying the present technology, the image encoding device 100 (the header information generation unit 131) can suppress an increase in the coding amount while suppressing a reduction in the image quality and thus suppress a reduction in the encoding efficiency.

### <Flow of loop filter process>

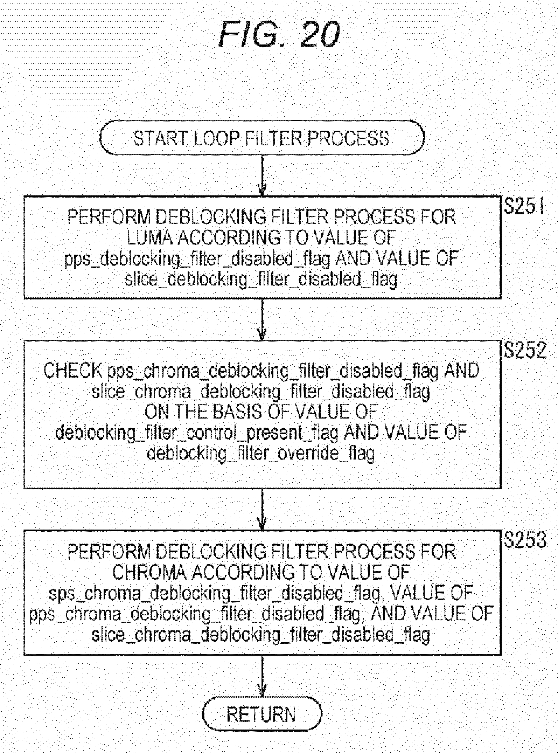

Next, an example of a flow of the loop filter process performed in step S112 of the encoding process in this case will be described with reference to a flowchart of Fig. 20.

When the loop filter process starts, a process of step S251 is performed similarly to the process of step S141 of Fig. 13.

In step S252, the deblocking filter control unit 181 checks a value of pps_chroma_deblocking_filter_disabled_flag on the basis of a value of deblocking_filter_control_present_flag included in the header information. For example, when a value of deblocking_filter_control_present_flag is true ("1"), the deblocking filter control unit 181 checks a value of pps_chroma_deblocking_filter_disabled_flag, and uses the value in a process of step S253. Further, for example, when a value of deblocking_filter_control_present_flag is false ("0"), the deblocking filter control unit 181 does not check a value of pps_chroma_deblocking_filter_disabled_flag, and does not use the value of pps_chroma_deblocking_filter_disabled_flag in the process of step S253.

Further, the deblocking filter control unit 181 checks a value of slice_chroma_deblocking_filter_disabled_flag on the basis of a value of deblocking_filter_override_flag included in the header information. For example, when a value of deblocking_filter_override_flag is true ("1"), the deblocking filter control unit 181 checks a value of slice_chroma_deblocking_filter_disabled_flag, and uses the value in the process of step S253. Further, for example, when a value of deblocking_filter_override_flag is false ("0"), the deblocking filter control unit 181 does not check a value of slice_chroma_deblocking_filter_disabled_flag, and does not use the value of slice_chroma_deblocking_filter_disabled_flagin the process of step S253.

The process of step S253 is performed similarly to the process of step S142 of Fig. 13. Here, when a value of pps_chroma_deblocking_filter_disabled_flag and a value of slice_chroma_deblocking_filter_disabled_flag are not checked in step S252, the deblocking filter process for the chroma of the decoded image is performed regardless of the values.

When the process of step S253 ends, the loop filter process ends, and the process returns to Fig. 11.

The loop filter process is performed as described above, and thus the image encoding device 100 (the loop filter 120) can omit reference to the control information for controlling the deblocking filter process for the chroma for the slice in which the deblocking filter process for the chroma is explicitly unnecessary. Thus, by applying the present technology, the image encoding device 100 (the loop filter 120) can suppress an increase in a processing load while suppressing a reduction in the image quality.

### <Image decoding device and loop filter>

In this case, a configuration of the image decoding device which is one aspect of the image processing device to which the present technology is applied is similar to that of the first embodiment (Fig. 14). Further, in this case, a configuration of the loop filter 216 is also similar to that of the first embodiment (Fig. 15).

### <Flow of decoding process>

Further, in this case, a flow of the decoding process performed by the image decoding device 200 is similar to that of the first embodiment (Fig. 16).

In other words, similarly to the first embodiment, in step S208 of the decoding process, the loop filter 216 performs the loop filter process similarly to the example of the loop filter process performed by the loop filter 120 of the image encoding device 100 described above with reference to the flowchart of Fig. 20. In other words, the description of the example of the flow of the loop filter process illustrated in Fig. 20 can be also applied to description of the loop filter process performed by the loop filter 216 (that is, the process of step S208 of the decoding process in this case).

In other words, the image decoding device 200 (the loop filter 216) generates the control information for controlling the deblocking filter process for the chroma according to a value of the control parameter related to the existing deblocking filter. Thus, the image decoding device 200 (the loop filter 216) can omit reference to the control information for controlling the deblocking filter process for the chroma for the slice in which the deblocking filter process for the chroma is explicitly unnecessary. Thus, by applying the present technology, the image decoding device 200 (the loop filter 216) can suppress an increase in a processing load while suppressing a reduction in the image quality.

Further, the above-described generation of the control information for controlling the deblocking filter process for the chroma according to the value of the control parameter related to the existing deblocking filter can be performed in the header information of an arbitrary layer in which there is the control parameter related to the existing deblocking filter and may be performed in only one of the picture parameter set and the slice header, for example.

### <3. Third embodiment>

### <Use of control parameter of deblocking filter>

Note that the control parameter relatedto the deblocking filter for the chroma may be generated according to the control parameter related to the existing deblocking filter. Thus, it is possible to indicate the presence of the control information for controlling the deblocking filter process for the chroma in the header information of each layer independently of the control information for controlling the existing deblocking filter process. In other words, the generation of the control information for controlling the deblocking filter process for the chroma can be controlled independently of the deblocking filter process for the luma. Further, using such a control parameter, it is possible to omit the control information for controlling the deblocking filter process for the chroma for the slice in which it is unnecessary to control the deblocking filter process for the chroma independently of the deblocking filter process for the luma, and thus it is possible to suppress an increase in the coding amount accordingly and suppress a reduction in the encoding efficiency.

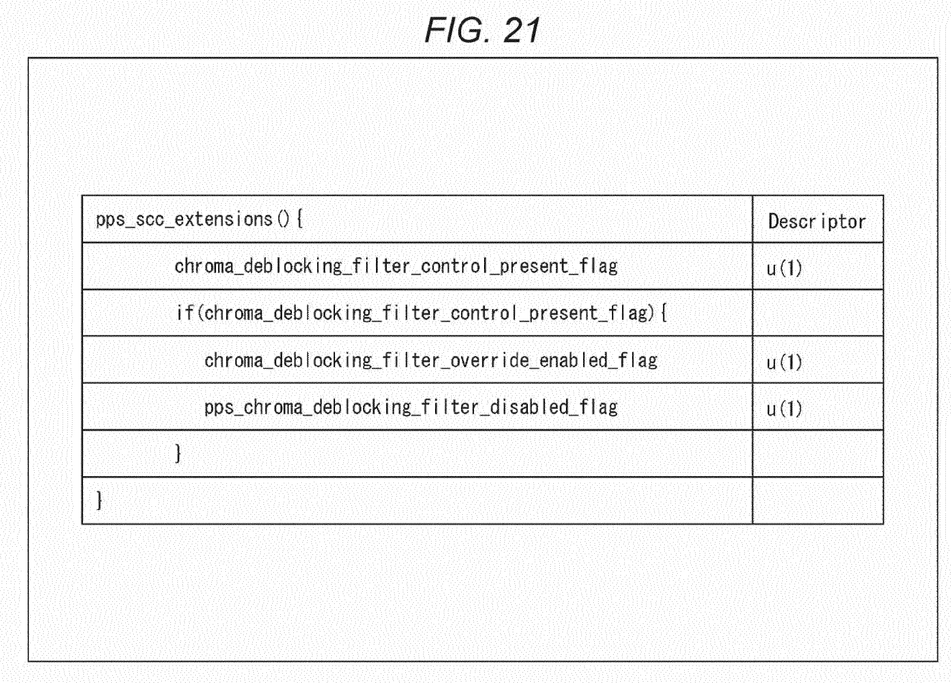

A more specific example will be described. As illustrated in Fig. 21, for example, in the picture parameter set, chroma_deblocking_filter_control_present_flag may be set as the extended syntax element, and pps_chroma_deblocking_filter_disabled_flag may be set as the extended syntax element only when a value of chroma_deblocking_filter_control_present_flag is true (for example, "1"). Further, at this time, chroma_deblocking_filter_override_enabled_flag may be set as the extended syntax.

chroma_deblocking_filter_control_present_flag is a flag indicating whether or not a syntax element for controlling the deblocking filter for the chroma is included in the picture parameter set. In other words, this flag corresponds to deblocking_filter_control_present_flag. For example, when a value of chroma_deblocking_filter_control_present_flag is true (for example, "1"), it indicates that the syntax element is included in the picture parameter set. In other words, in this case, pps_chroma_deblocking_filter_disabled_flag is set. Further, for example, when a value of chroma_deblocking_filter_control_present_flag is false (for example, "0"), it indicates that the syntax element is not included in the picture parameter set. In other words, in this case, a setting of pps_chroma_deblocking_filter_disabled_flag is omitted.

chroma_deblocking_filter_override_enabled_flag is a flag indicating whether or not there is chroma_deblocking_filter_override_flag (which will be described later) in a slice header of a slice belonging to a corresponding picture. In other words, this flag corresponds to deblocking_filter_override_enabled_flag. For example, when a value of chroma_deblocking_filter_override_enabled_flag is true (for example, "1"), it indicates that there is chroma_deblocking_filter_override_flag in a slice header of a slice belonging to a corresponding picture. Further, for example, when a value of chroma_deblocking_filter_override_enabled_flag is false (for example, "0"), it indicates that there is no chroma_deblocking_filter_override_flag in a slice header of a slice belonging to a corresponding picture.

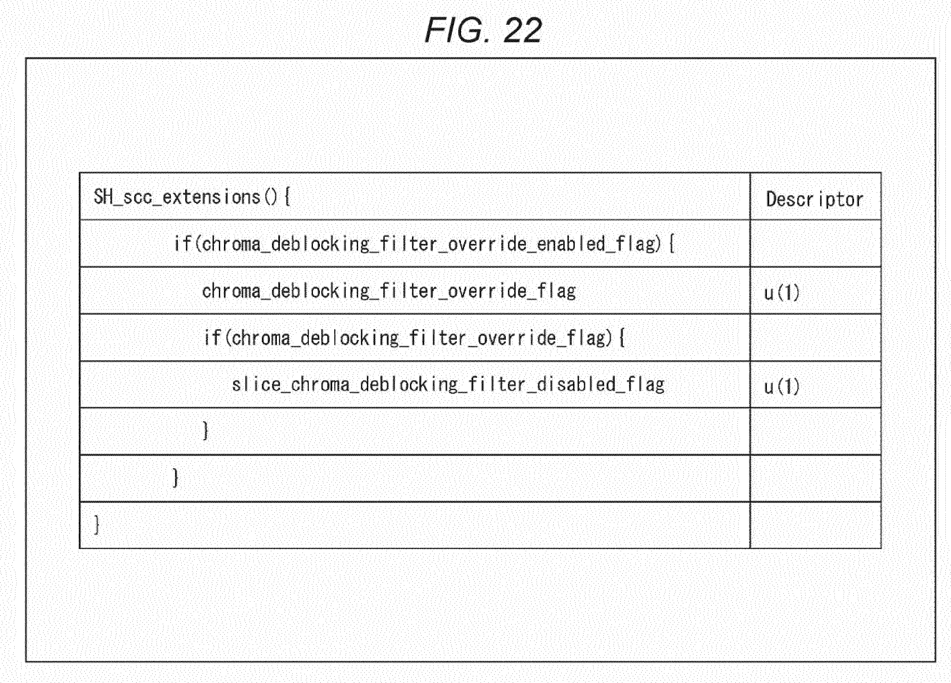

Further, for example, chroma_deblocking_filter_override_flag may be set as the extended syntax element in the slice header only when a value ofchroma_deblocking_filter_override_enabled_flag set in the picture parameter set to which the slice header belongs is true (for example, "1") as illustrated in Fig. 22. Further, slice_chroma_deblocking_filter_disabled_flag may be set as the extended syntax element only when a value of chroma_deblocking_filter_override_flag is true (for example, "1").

chroma_deblocking_filter_override_flag is a flag indicating whether or not the syntax element for controlling the deblocking filter for the chroma is included in the slice header. In other words, this flag corresponds to deblocking_filter_override_flag. For example, when a value of chroma_deblocking_filter_override_flag is true (for example, "1"), it indicates that the syntax element is included in the slice header. In other words, in this case, slice_chroma_deblocking_filter_disabled_flag is set. Further, for example, when a value of chroma_deblocking_filter_override_flag is false (for example, "0"), it indicates that the syntax element is not included in the slice header. In other words, in this case, a setting of slice_chroma_deblocking_filter_disabled_flag is omitted.

Accordingly, it is possible to control the presence of the control information for controlling the deblocking filter process for the chroma in the header information of each layer independently of the control information for controlling the existing deblocking filter process. Further, using the control parameter, it is possible to omit the control information for controlling the deblocking filter process for the chroma for the slice in which it is unnecessary to control the deblocking filter process for the chroma independently of the deblocking filter process for the luma, and thus it is possible to suppress an increase in the coding amount accordingly and suppress a reduction in the encoding efficiency.

### <Image encoding device and loop filter>

In this case, a configuration of the image encoding device which is one aspect of the image processing device to which the present technology is applied is similar to that of the first embodiment (Fig. 8). Further, in this case, a configuration of the loop filter 120 is similar to that of the first embodiment (Fig. 10).

### <Header information generation unit>

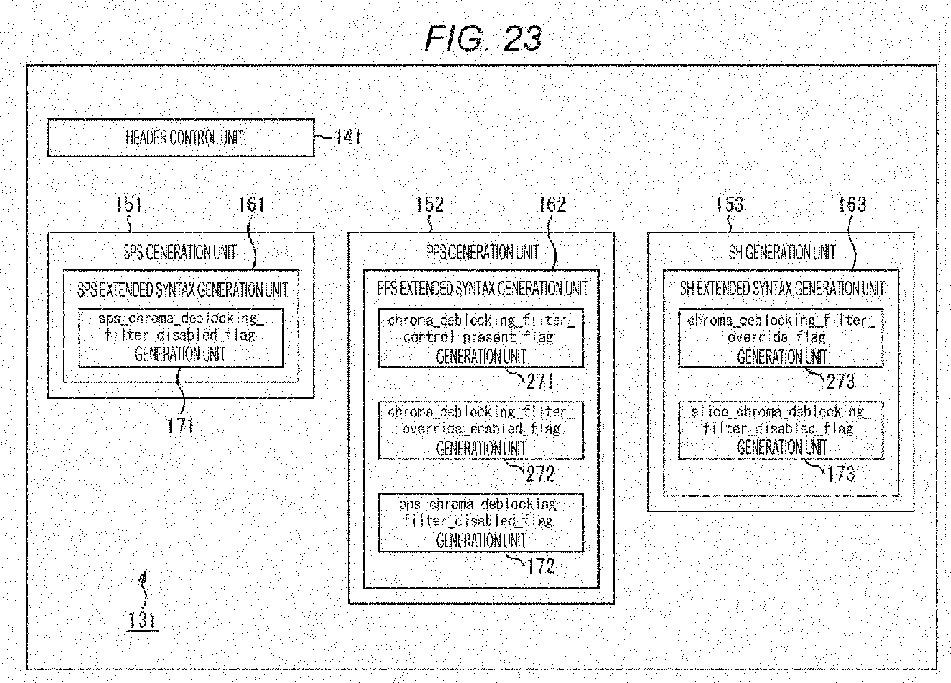

An exemplary main configuration of the header information generation unit 131 in this case is illustrated in Fig. 23. As illustrated in Fig. 23, the header information generation unit 131 basically has a similar configuration to that of the first embodiment (Fig. 9), but the PPS extended syntax generation unit 162 further includes a the chroma_deblocking_filter_control_present_flag generation unit 271, and a chroma_deblocking_filter_override_enabled_flag generation unit 272. Further, the SH extended syntax generation unit 163 further includes a chroma_deblocking_filter_override_flag generation unit 273.

The chroma_deblocking_filter_control_present_flag generation unit 271 generates chroma_deblocking_filter_control_present_flag in the picture parameter set as the extended syntax. As described above with reference to Fig. 21, chroma_deblocking_filter_control_present_flag is a flag indicating whether or not the syntax element for controlling the deblocking filter for the chroma is included in the picture parameter set.

The chroma_deblocking_filter_override_enabled_flag generation unit 272 generates chroma_deblocking_filter_override_enabled_flag in the picture parameter set as the extended syntax. As described above with reference to Fig. 21, chroma_deblocking_filter_override_enabled_flag is a flag indicating whether or not chroma_deblocking_filter_override_flag (which will be described later) is included in a slice header of a slice belonging to a corresponding picture.

The chroma_deblocking_filter_override_flag generation unit 273 generates chroma_deblocking_filter_override_flag in the slice header as the extended syntax. As described above with reference to Fig. 22, chroma_deblocking_fil ter_override_flag is a flag indicating whether or not the syntax element for controlling the deblocking filter for the chroma is included in the slice header.

### <Flow of encoding process>

Further, in this case, a flow of the encoding process performed by the image encoding device 100 is similar to that of the first embodiment (Fig. 11).

### <Flow of header information generation process>

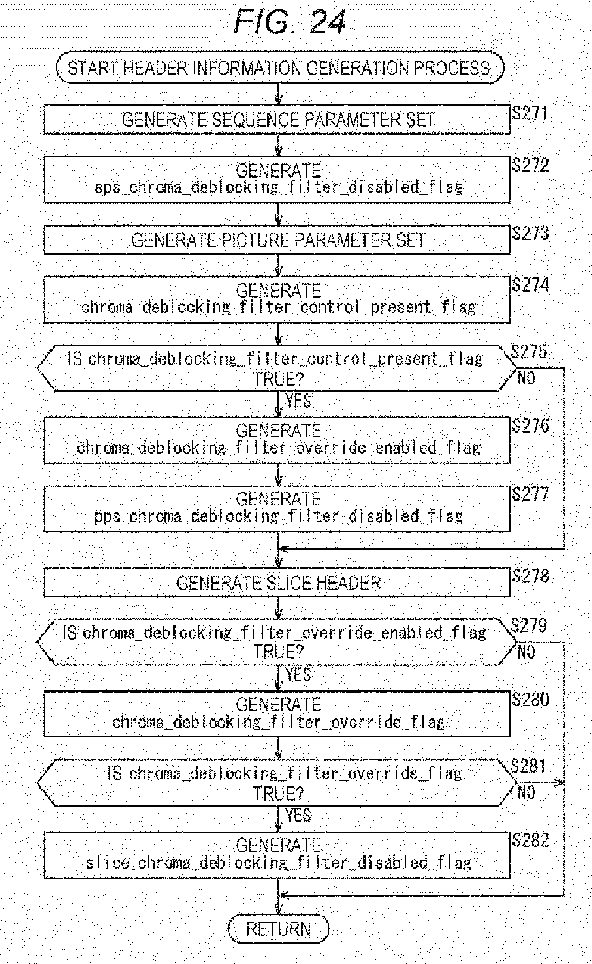

Next, an example of a flow of the header information generation process performed in step S101 of the encoding process in this case will be described with reference to a flowchart of Fig. 24.

When the header information generation process starts, a process of steps S271 to S273 is performed similarly to the process of steps S121 to S123 in Fig. 12.

In step S274, the chroma_deblocking_filter_control_present_flag generation unit 271 generates chroma_deblocking_filter_control_present_flag of the picture parameter set as the extended syntax.

In step S275, the header control unit 141 determines whether or not a value of chroma_deblocking_filter_control_present_flag of the picture parameter set set in step S274 is true (for example, "1"). When a value of chroma_deblocking_filter_control_present_flag is determined to be true (for example, "1"), the process proceeds to step S276.

In step S276, the chroma_deblocking_filter_override_enabled_flag generation unit 272 generates chroma_deblocking_filter_override_enabled_flag of the picture parameter set as the extended syntax.

A process of step S277 is performed similarly to the process of step S124 of Fig. 12.

When the process of step S277 ends, the process proceeds to step S278. Further, when a value of chroma_deblocking_filter_control_present_flag is determined to be false (for example, "0") in step S275, the process proceeds to step S278.

A process of step S278 is performed similarly to the process of step S125 of Fig. 12.

In step S279, the header control unit 141 determines whether or not a value of chroma_deblocking_filter_override_enabled_flag is true (for example, "1") in the slice header. When a value of chroma_deblocking_filter_override_enabled_flag is determined to be true (for example, "1"), the process proceeds to step S280.

In step S280, the chroma_deblocking_filter_override_flag generation unit 273 generates chroma_deblocking_filter_override_flag of the slice header as the extended syntax.

In step S281, the header control unit 141 determines whether or not a value of chroma_deblocking_filter_override_flag generated in step S280 is true (for example, "1") in the slice header. When a value of deblocking_filter_override_flag is determined to be true (for example, "1"), the process proceeds to step S282.

A process of step S282 is performed similarly to the process of step S126 of Fig. 12.

When the process of step S282 ends, the header information generation process ends, and the process returns to Fig. 11. Further, when a value of chroma_deblocking_filter_override_enabled_flag is determined to be false (for example, "0") in step S279, the header information generation process ends, and the process returns to Fig. 11. Further, when a value of chroma_deblocking_filter_override_flag is determined to be false (for example, "0") in step S281, the header information generation process ends, and the process returns to Fig. 11.

The control parameter related to the deblocking filter for the chroma is generated as described above, and thus the generation of the control information for controlling the deblocking filter process for the chroma can be controlled independently of the deblocking filter process for the luma. Further, using the control parameter, it is possible to suppress an increase in the coding amount and suppress a reduction in the encoding efficiency.

### <Flow of loop filter process>

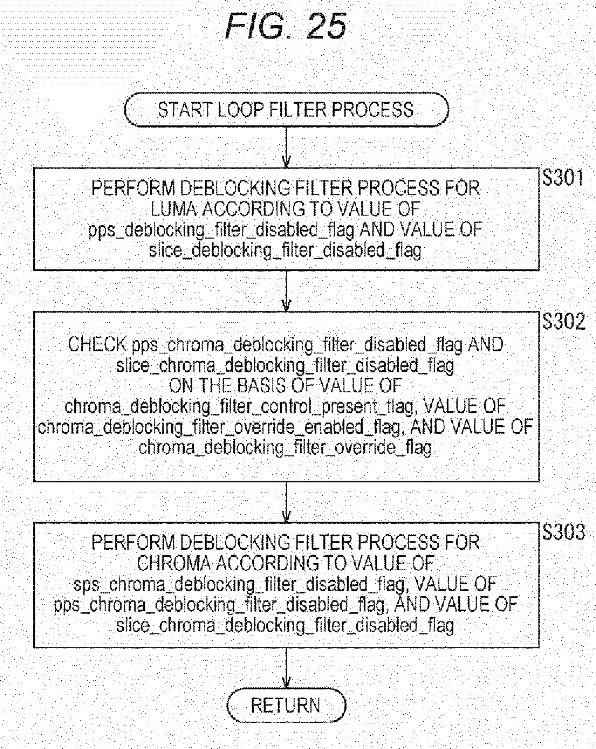

Next, an example of a flow of the loop filter process performed in step S112 of the encoding process in this case will be described with reference to a flowchart of Fig. 25.

When the loop filter process starts, a process of step S301 is performed similarly to the process of step S141 of Fig. 13.

In step S302, the deblocking filter control unit 181 checks a value of pps_chroma_deblocking_filter_disabled_flag on the basis of a value of chroma_deblocking_filter_control_present_flag included in the header information. For example, when a value of chroma_deblocking_filter_control_present_flag is true (for example, "1"), the deblocking filter control unit 181 checks a value of pps_chroma_deblocking_filter_disabled_flag, and uses the value in a process of step S303. Further, for example, when a value of chroma_deblocking_filter_control_present_flag is false (for example, "0"), the deblocking filter control unit 181 does not check a value of pps_chroma_deblocking_filter_disabled_flag, and does not use a value of pps_chroma_deblocking_filter_disabled_flag in the process of step S303.

Further, the deblocking filter control unit 181 checks a value of slice_chroma_deblocking_filter_disabled_flag on the basis of a value of chroma_deblocking_filter_override_enabled_flag and a value of chroma_deblocking_filter_override_flag included in the header information. For example, when a value of chroma_deblocking_filter_override_enabled_flag and a value of chroma_deblocking_filter_override_flag are true (for example, "1"), the deblocking filter control unit 181 checks a value of slice_chroma_deblocking_filter_disabled_flag, and uses the value in the process of step S303. Further, for example, when a value of chroma_deblocking_filter_override_enabled_flag or a value of chroma_deblocking_filter_override_flag is false (for example, "0"), the deblocking filter control unit 181 does not check a value of slice_chroma_deblocking_filter_disabled_flag, and does not use a value of slice_chroma_deblocking_filter_disabled_flag in the process of step S303.

The process of step S303 is performed similarly to the process of step S142 of Fig. 13. Here, when a value of pps_chroma_deblocking_filter_disabled_flag and a value of slice_chroma_deblocking_filter_disabled_flag are not checked in step S302, the deblocking filter process for the chroma of the decoded image is performed regardless of the values.

When the process of step S303 ends, the loop filter process ends, and the process returns to Fig. 11.

When the loop filter process is performed as described above, the image encoding device 100 (the loop filter 120) can omit reference to the control information for controlling the deblocking filter process for the chroma for the slice in which it is unnecessary to control the deblocking filter process for the chroma independently of the deblocking filter process for the luma. Thus, by applying the present technology, the image encoding device 100 (the loop filter 120) can suppress an increase in a processing load while suppressing a reduction in the image quality.

### <Image decoding device and loop filter>

In this case, a configuration of the image decoding device which is one aspect of the image processing device to which the present technology is applied is similar to that of the first embodiment (Fig. 14). Further, in this case, a configuration of the loop filter 216 is also similar to that of the first embodiment (Fig. 15).

### <Flow of decoding process>

Further, in this case, a flow of the decoding process performed by the image decoding device 200 is similar to that of the first embodiment (Fig. 16).

In other words, similarly to the first embodiment, in step S208 of the decoding process, the loop filter 216 performs the loop filter process similarly to the example of the loop filter process performed by the loop filter 120 of the image encoding device 100 described above with reference to the flowchart of Fig. 25. In other words, the description of the example of the flow of the loop filter process illustrated in Fig. 25 can be also applied to description of the loop filter process performed by the loop filter 216 (that is, the process of step S208 of the decoding process in this case).

In other words, the image decoding device 200 (the loop filter 216) refers to and uses the control information for controlling the deblocking filter process for the chroma according to the value of the control parameter related to the deblocking filter for the chroma. Thus, the image decoding device 200 (the loop filter 216) can omit reference to the control information for controlling the deblocking filter process for the chroma for the slice in which it is unnecessary to control the deblocking filter process for the chroma independently of the deblocking filter process for the luma. Thus, by applying the present technology, the image decoding device 200 (the loop filter 216) can suppress an increase in a processing load while suppressing a reduction in the image quality.

Note that the above-described generation of the control information for controlling the deblocking filter process for the chroma according to the value of the control parameter related to the deblocking filter for the chroma can be performed in the header information of an arbitrary layer and may be performed in only one of the picture parameter set and the slice header or may be performed in any other header information, for example.

### <4. Fourth embodiment>

### <Use of control parameter of deblocking filter>

Note that the generation of the control information for controlling the deblocking filter process for the chroma may be controlled on the basis of both the control parameter related to the existing deblocking filter and the control parameter related to the deblocking filter for the chroma.

Thus, it is possible to omit the control information for controlling the deblocking filter process for the chroma which is explicitly unnecessary, and it is possible to omit the control information for controlling the deblocking filter process for the chroma for the slice in which it is unnecessary to control the deblocking filter process for the chroma independently of the deblocking filter process for the luma, and thus it is possible to suppress an increase in the coding amount accordingly and suppress a reduction in the encoding efficiency.

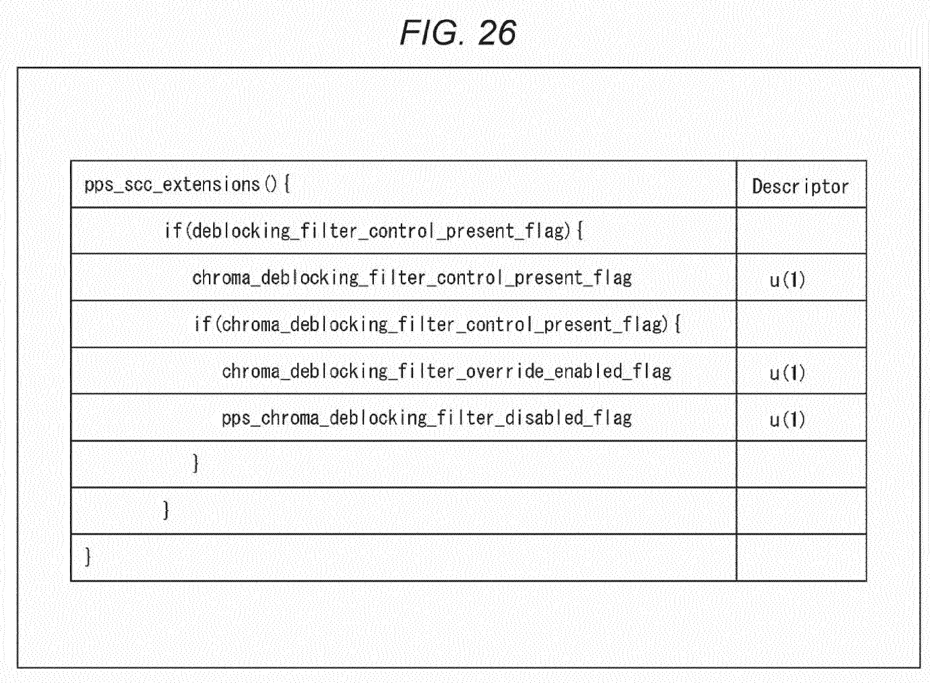

A more specific example will be described. As illustrated in Fig. 26, for example, in the picture parameter set, chroma_deblocking_filter_control_present_flag may be set as the extended syntax element only when the value of deblocking_filter_control_present_flag is true ("1"), and pps_chroma_deblocking_filter_disabled_flag may be set as the extended syntax element only when a value of chroma_deblocking_filter_control_present_flag is true (for example, "1"). Further, at this time, chroma_deblocking_filter_override_enabled_flag may be set as the extended syntax.

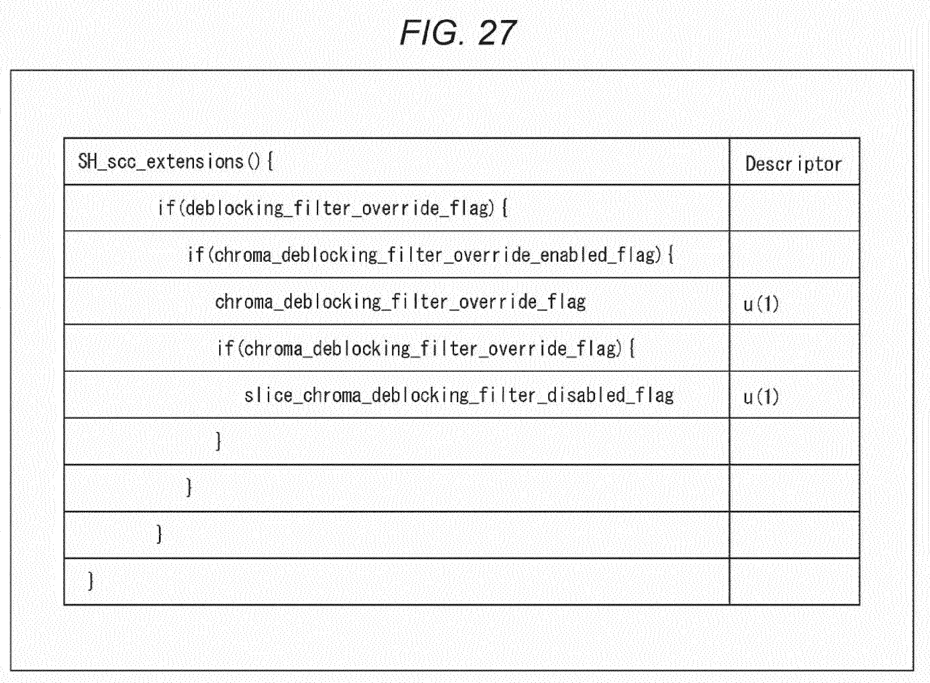

Further, as illustrated in Fig. 27, for example, in the slice header, chroma_deblocking_fil ter_override_flag may be set as the extended syntax element only when a value of deblocking_filter_override_flag is true ("1"), and a value of chroma_deblocking_filter_override_enabled_flag set in the picture parameter set to which the slice header belongs is true (for example, "1"), and slice_chroma_deblocking_filter_disabled_flag may be set as the extended syntax element only when a value of chroma_deblocking_filter_override_flag is true (for example, "1").

Accordingly, it is possible to control the presence of the control information for controlling the deblocking filter process for the chroma in the header information of each layer independently of the control information for controlling the existing deblocking filter process. Further, using the control parameter, it is possible to omit the control information for controlling the deblocking filter process for the chroma for the slice in which it is unnecessary to control the deblocking filter process for the chroma independently of the deblocking filter process for the luma. Further, since it is possible to omit the control information for controlling the deblocking filter process for the chroma which is explicitly unnecessary, it is possible to suppress an increase in the coding amount accordingly and suppress a reduction in the encoding efficiency.

### <Image encoding device, header information generation unit, and loop filter>

In this case, a configuration of the image encoding device which is one aspect of the image processing device to which the present technology is applied is similar to that of the first embodiment (Fig. 8). Further, in this case, a configuration of the header information generation unit 131 is similar to that of the third embodiment (Fig. 23). Further, in this case, a configuration of the loop filter 120 is similar to that of the first embodiment (Fig. 10).

### <Flow of encoding process>

Further, in this case, a flow of the encoding process performed by the image encoding device 100 is similar to that of the first embodiment (Fig. 11).

### <Flow of header information generation process>

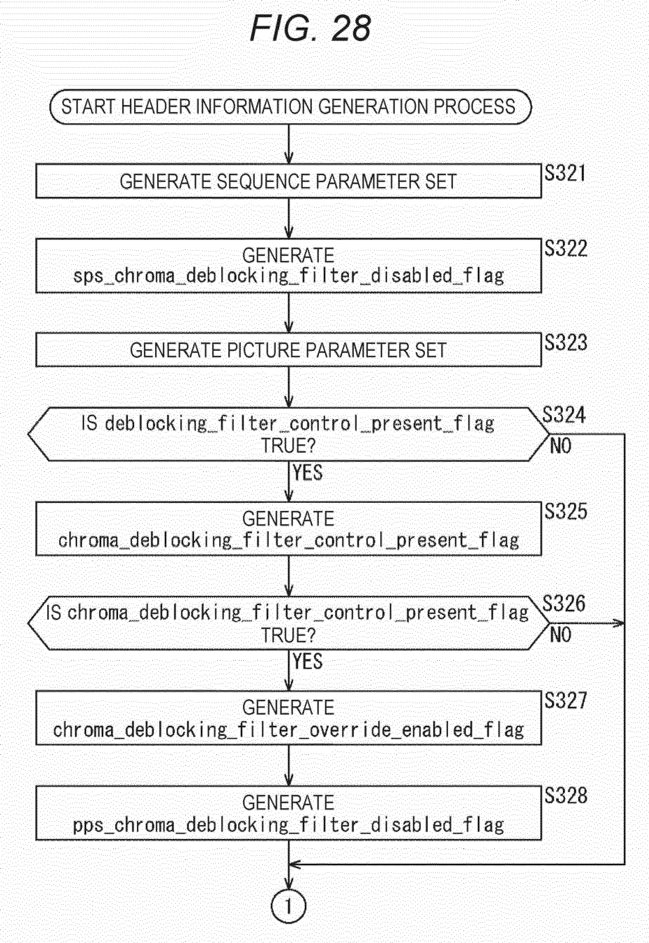

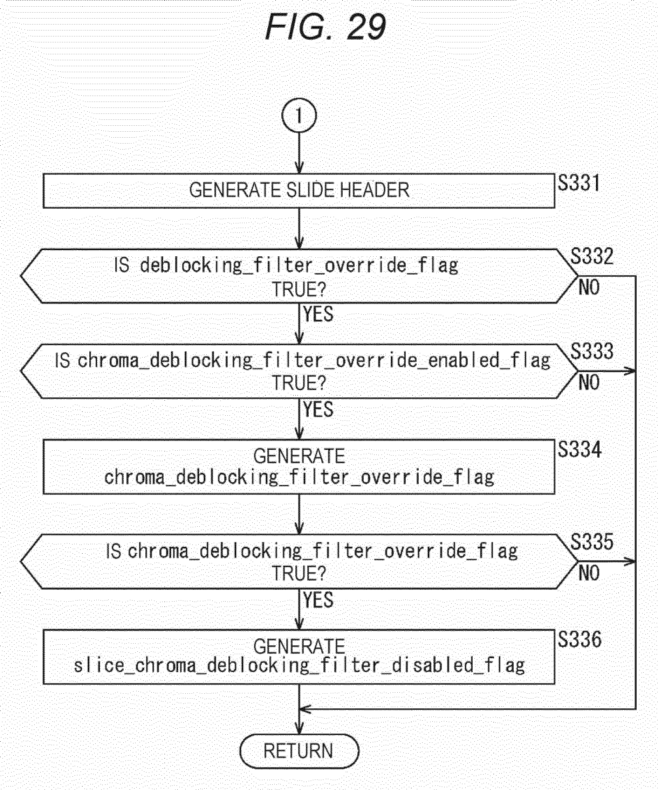

Next, an example of a flow of the header information generation process performed in step S101 of the encoding process in this case will be described with reference to flowcharts of Figs. 28 and 29.

When the header information generation process starts, a process of steps S321 to S324 is performed similarly to the process of steps S231 to S234 of Fig. 19. When a value of deblocking_filter_control_present_flag is determined to be true ("1") in step S324, the process proceeds to step S325.

A process of steps S325 to S328 is performed similarly to the process of steps S274 to S277 of Fig. 24.

When the process of step S328 ends, the process proceeds to step S331 of Fig. 29. Further, when a value of chroma_deblocking_filter_control_present_flag is determined to be false (for example, "0") in step S326 of Fig. 28, the process proceeds to step S331 of Fig. 29. Further, when a value of deblocking_filter_control_present_flag is determined to be false ("0") in step S324 of Fig. 28, the process proceeds to step S331 of Fig. 29.

A process of steps S331 and S332 of Fig. 29 is performed similarly to the process of steps S236 and S237 of Fig. 19. When a value of deblocking_filter_override_flag is determined to be true ("1") in step S332, the process proceeds to step S333.

A process of steps S333 to S336 is performed similarly to the process of steps S279 to S282 of Fig. 24.

When the process of step S336 ends, the header information generation process ends, and the process returns to Fig. 11. Further, when a value of chroma_deblocking_filter_override_flag is determined to be false (for example, "0") in step S335, the header information generation process ends, and the process returns to Fig. 11. Further, when a value of chroma_deblocking_filter_override_enabled_flag is determined to be false (for example, "0") in step S333, the header information generation process ends, and the process returns to Fig. 11. Further, when a value of deblocking_filter_override_flag is determined to be false ("0") in step S332, the header information generation process ends, and the process returns to Fig. 11.

When the process is performed as described above, the image encoding device 100 (the header information generation unit 131) can suppress an increase in the coding amount and suppress a reduction in the encoding efficiency while suppressing a reduction in the image quality.

### <Flow of loop filter process>

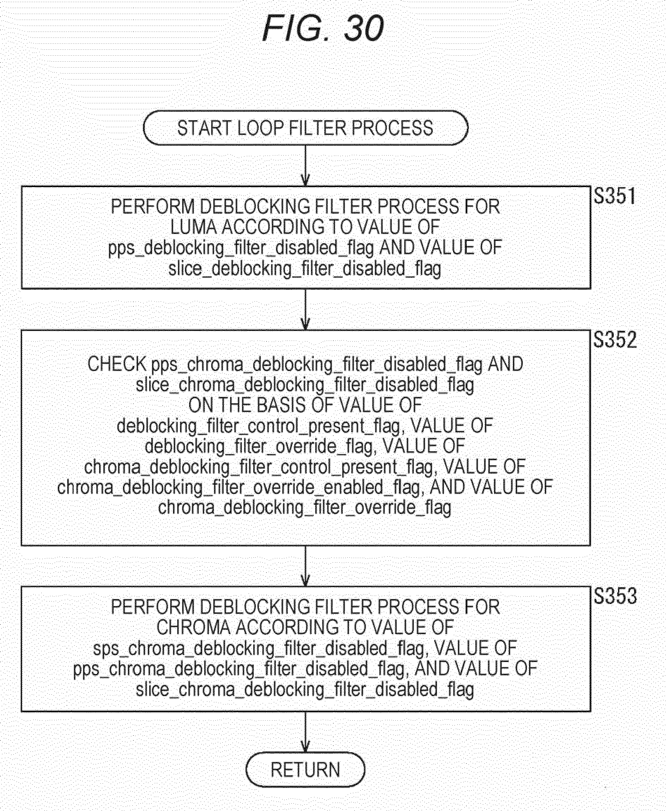

Next, an example of a flow of the loop filter process performed in step S112 of the encoding process in this case will be described with reference to a flowchart of Fig. 30.

When the loop filter process starts, a process of step S351 is performed similarly to the process of step S141 of Fig. 13.

In step S352, the deblocking filter control unit 181 checks a value of pps_chroma_deblocking_filter_disabled_flag on the basis of a value of deblocking_filter_control_present_flag and a value of chroma_deblocking_filter_control_present_flag included in the header information. For example, when a value of deblocking_filter_control_present_flag is true ("1"), and a value of chroma_deblocking_filter_control_present_flag is true (for example, "1"), the deblocking filter control unit 181 checks a value of pps_chroma_deblocking_filter_disabled_flag, and uses the value in a process of step S353. Further, for example, when a value of deblocking_filter_control_present_flag is false ("0") or when a value of chroma_deblocking_filter_control_present_flag is false (for example, "0"), the deblocking filter control unit 181 does not check a value of pps_chroma_deblocking_filter_disabled_flag, and does not use a value of pps_chroma_deblocking_filter_disabled_flag in the process of step S353.

Further, the deblocking filter control unit 181 checks a value of slice_chroma_deblocking_filter_disabled_flag on the basis of a value of deblocking_filter_override_flag, a value of chroma_deblocking_filter_override_enabled_flag, and a value of chroma_deblocking_filter_override_flag included in the header information. For example, when a value of deblocking_filter_override_flag, a value of chroma_deblocking_filter_override_enabled_flag, and a value of chroma_deblocking_filter_override_flag are true (for example, "1"), the deblocking filter control unit 181 checks a value of slice_chroma_deblocking_filter_disabled_flag, and uses the value in the process of step S353. Further, for example, when a value of deblocking_filter_override_flag, a value of chroma_deblocking_filter_override_enabled_flag, or a value of chroma_deblocking_filter_override_flag is false (for example, "0"), the deblocking filter control unit 181 does not check a value of slice_chroma_deblocking_filter_disabled_flag, and does not use a value of slice_chroma_deblocking_filter_disabled_flag in the process of step S353.

The process of step S353 is performed similarly to the process of step S142 of Fig. 13. Here, when a value of pps_chroma_deblocking_filter_disabled_flag and a value of slice_chroma_deblocking_filter_disabled_flag are not checked in step S352, the deblocking filter process for the chroma of the decoded image is performed regardless of the values.

When the process of step S353 ends, the loop filter process ends, and the process returns to Fig. 11.

When the loop filter process is performed as described above, the image encoding device 100 (the loop filter 120) can omit reference to the control information for controlling the deblocking filter process for the chroma for the slice in which the deblocking filter process for the chroma is explicitly unnecessary or the slice in which it is unnecessary to control the deblocking filter process for the chroma independently of the deblocking filter process for the luma. Thus, by applying the present technology, the image encoding device 100 (the loop filter 120) can suppress an increase in a processing load while suppressing a reduction in the image quality.

### <Image decoding device and loop filter>

In this case, a configuration of the image decoding device which is one aspect of the image processing device to which the present technology is applied is similar to that of the first embodiment (Fig. 14). Further, in this case, a configuration of the loop filter 216 is also similar to that of the first embodiment (Fig. 15).

### <Flow of decoding process>

Further, in this case, a flow of the decoding process performed by the image decoding device 200 is similar to that of the first embodiment (Fig. 16).

In other words, similarly to the first embodiment, in step S208 of the decoding process, the loop filter 216 performs the loop filter process similarly to the example of the loop filter process performed by the loop filter 120 of the image encoding device 100 described above with reference to the flowchart of Fig. 30. In other words, the description of the example of the flow of the loop filter process illustrated in Fig. 30 can be also applied to description of the loop filter process performed by the loop filter 216 (that is, the process of step S208 of the decoding process in this case).

In other words, the image decoding device 200 (the loop filter 216) refers to and uses the control information for controlling the deblocking filter process for the chroma according to a value of the control parameter related to the existing deblocking filter and a value of the control parameter related to the deblocking filter for the chroma. Thus, the image decoding device 200 (the loop filter 216) can omit reference to the control information for controlling the deblocking filter process for the chroma for the slice in which the deblocking filter process for the chroma is explicitly unnecessary or the slice in which it is unnecessary to control the deblocking filter process for the chroma independently of the deblocking filter process for the luma. Thus, by applying the present technology, the image decoding device 200 (the loop filter 216) can suppress an increase in a processing load while suppressing a reduction in the image quality.

Note that the above-described generation of the control information for controlling the deblocking filter process for the chroma according to the value of the control parameter related to the existing deblocking filter and the value of the control parameter related to the deblocking filter for the chroma can be performed in the header information of an arbitrary layer and may be performed in only one of the picture parameter set and the slice header or may be performed in any other header information, for example.

### <5. Fifth embodiment>

### <Control of filter strength>

The execution control of the filter process based on the control information for controlling the deblocking filter process for the chroma has been described, but the present technology is not limited thereto, and the filter strength may be controlled on the basis of the control information for controlling the deblocking filter process for the chroma.

Accordingly, it is possible to control the filter strength of the deblocking filter process for the chroma independently of the filter strength of the deblocking filter process for the luminance component (the luma). For example, it is possible to suppress the filter strength for the chroma without changing the filter strength for the luma. Thus, for example, it is possible to perform a more appropriate deblocking filter process on the images of the screen content in addition to the natural images, for example, it is possible to suppress a character blur of screen content. In other words, by applying the present technology, it is possible to suppress a reduction in the image quality.

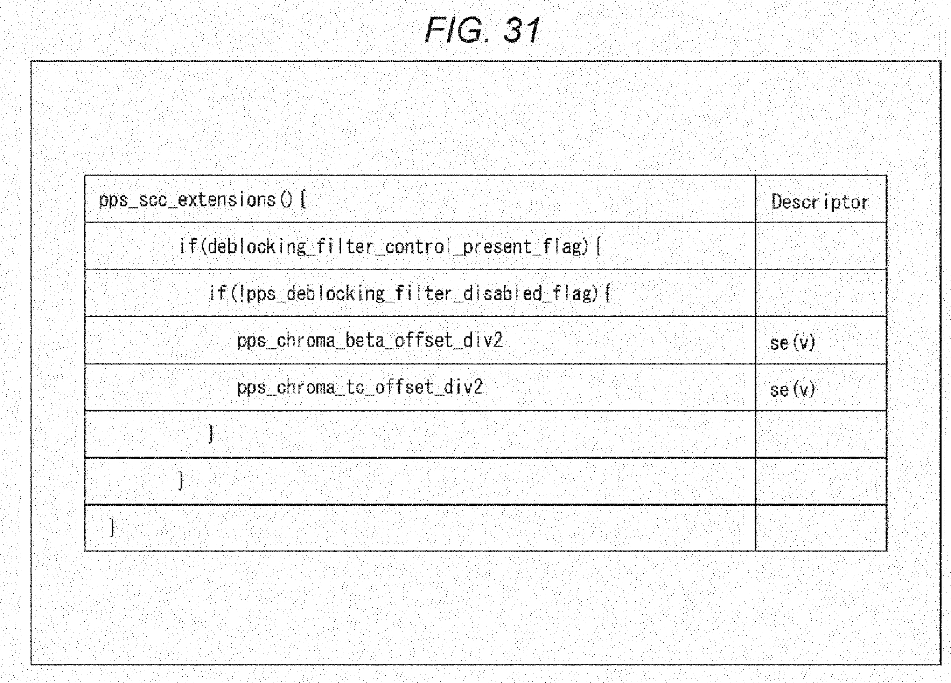

A more specific example will be described. As illustrated in Fig. 31, for example, in the picture parameter set, when a value of deblocking_filter_control_present_flag is true ("1"), and a value of pps_deblocking_filter_disabled_flag is false ("0"), pps_chroma_beta_offset_div2 and pps_chroma_tc_offset_div2 may be set as the extended syntax element.

A value which is twice as large as a value of pps_chroma_beta_offset_div2 indicates an initial offset of the parameter β of the deblocking filter for the chroma which is performed on the slice in which slice_deblocking_filter_disabled_flag is not defined among slices belonging to a corresponding picture. A value which is twice as large as a value of pps_chroma_tc_offset_div2 indicates an initial offset of the parameter tC of the deblocking filter for the chroma which is performed on the slice in which slice_deblocking_filter_disabled_flag is not defined among slices belonging to a corresponding picture. In other words, they are the syntax elements for controlling the filter strength (a degree of strength which is set).

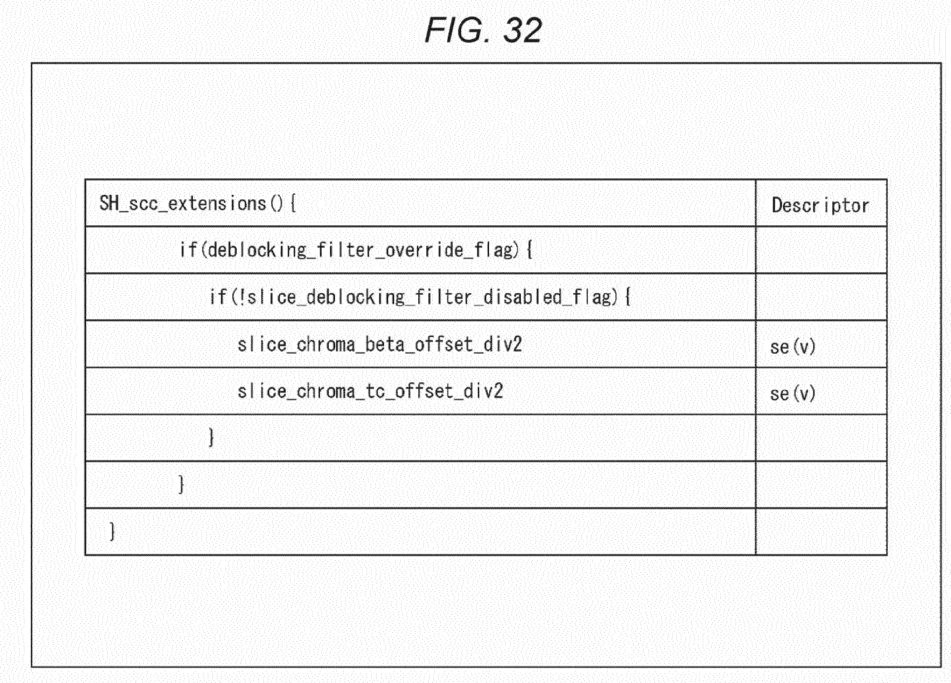

Further, as illustrated in Fig. 32, for example, in the slice header, when a value of deblocking_filter_override_flag is true ("1"), and a value of slice_deblocking_filter_disabled_flag is false ("0"), slice_chroma_beta_offset_div2 and slice_chroma_tc_offset_div2 may be set as the extended syntax element.

A value which is twice as large as a value of slice_chroma_beta_offset_div2 indicates an initial offset of the parameter β of the deblocking filter for the chroma which is performed on a corresponding slice. A value which is twice as large as a value of slice_chroma_tc_offset_div2 indicates an initial offset of the parameter tC of the deblocking filter for the chroma which is performed on a corresponding slice. In other words, they are the syntax elements for controlling the filter strength (a degree of strength which is set).

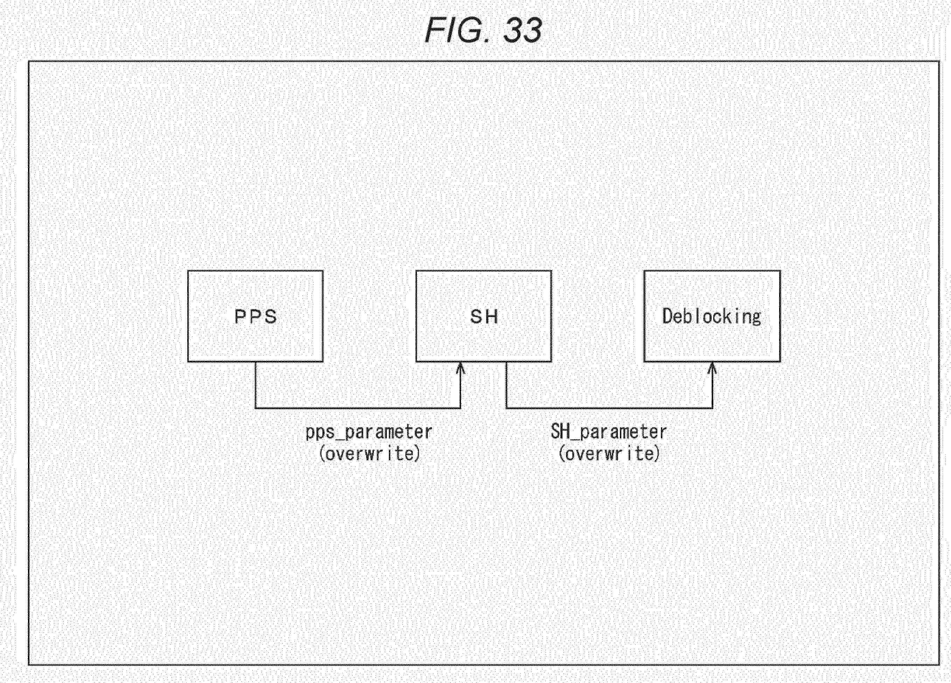

As illustrated in Fig. 33, when pps_chroma_beta_offset_div2 orpps_chroma_tc_offset_div2 is set in the picture parameter set, a value thereof is set as a control value for controlling the filter strength of the deblocking filter for the chroma, and further, when slice_chroma_beta_offset_div2 or slice_chroma_tc_offset_div2 is set in the slice header, a value thereof is overwritten on the control value. The filter strength of the deblocking filter process for the chroma is controlled on the basis of the control value which is finally set (that is, the control information of the bottom layer).

Note that the deblocking filter process for the luma is controlled on the basis of the syntax elements such as deblocking_filter_control_present_flag, deblocking_filter_override_enabled_flag, pps_deblocking_filter_disabeld_flag, pps_beta_offset_div2, pps_tc_offset_div2, deblocking_filter_override_flag, slice_deblocking_filter_disabeld_flag, slice_beta_offset_div2, and slice_tc_offset_div2, similarly to the example of the version 1 of HEVC.

Accordingly, it is possible to control the filter strength of the deblocking filter process for the chroma independently of the filter strength of the deblocking filter for the luma in the header information of each layer, and thus it is possible to suppress a reduction in the image quality.

### <Image encoding device and loop filter>

In this case, a configuration of the image encoding device which is one aspect of the image processing device to which the present technology is applied is similar to that of the first embodiment (Fig. 8). Further, in this case, a configuration of the loop filter 120 is also similar to that of the first embodiment (Fig. 10).

### <Header information generation unit>

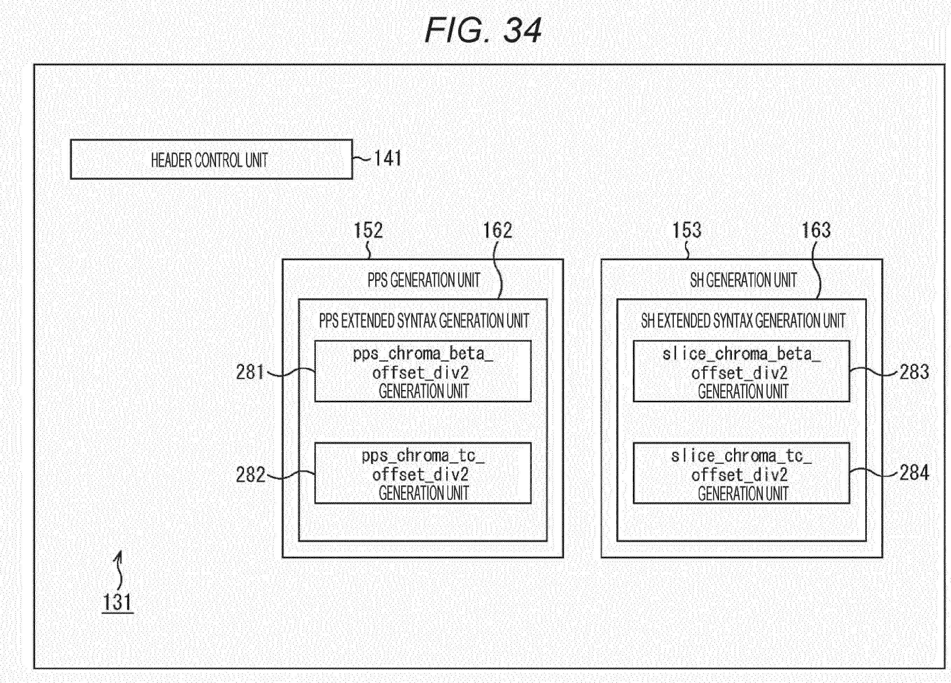

An exemplary main configuration of the header information generation unit 131 in this case is illustrated in Fig. 34. The header information generation unit 131 basically has a similar configuration to that of the first embodiment (Fig. 9) as illustrated in Fig. 34. Note that the SPS generation unit 151 is not illustrated in Fig. 34, but the SPS generation unit 151 may be installed similarly to the example of Fig. 9. In an example of Fig. 34, the PPS extended syntax generation unit 162 includes a pps_chroma_beta_offset_div2 generation unit 281 and a pps_chroma_tc_offset_div2 generation unit 282. Further, the SH extended syntax generation unit 163 includes a slice_chroma_beta_offset_div2 generation unit 283 and a slice_chroma_tc_offset_div2 generation unit 284.

The pps_chroma_beta_offset_div2 generation unit 281 generates pps_chroma_beta_offset_div2 in the picture parameter set as the extended syntax. As described above with reference to Fig. 31, pps_chroma_beta_offset_div2 is the syntax element for controlling the filter strength (a degree of strength which is set), and a value which is twice as large as a value of pps_chroma_beta_offset_div2 indicates an initial offset of the parameter β of the deblocking filter for the chroma which is performed on the slice in which slice_deblocking_filter_disabled_flag is not defined among slices belonging to a corresponding picture.

The pps_chroma_tc_offset_div2 generation unit 282 generates pps_chroma_tc_offset_div2 in the picture parameter set as the extended syntax. As described above with reference to Fig. 31, pps_chroma_tc_offset_div2 is the syntax element for controlling the filter strength (a degree of strength which is set), and a value which is twice as large as a value of pps_chroma_tc_offset_div2 indicates an initial offset of the parameter tC of the deblocking filter for the chroma which is performed on the slice in which slice_deblocking_filter_disabled_flag is not defined among slices belonging to a corresponding picture.

The slice_chroma_beta_offset_div2 generation unit 283 generates slice_chroma_beta_offset_div2 in the slice header as the extended syntax. As described above with reference to Fig. 32, slice_chroma_beta_offset_div2 is the syntax element for controlling the filter strength (a degree of strength which is set), and a value which is twice as large as a value of slice_chroma_beta_offset_div2 indicates an initial offset of the parameter β of the deblocking filter for the chroma which is performed on a corresponding slice.

The slice_chroma_tc_offset_div2 generation unit 284 generates slice_chroma_tc_offset_div2 in the slice header as the extended syntax. As described above with reference to Fig. 32, slice_chroma_tc_offset_div2 is the syntax element for controlling the filter strength (a degree of strength which is set), and a value which is twice as large as a value of slice_chroma_tc_offset_div2 indicates an initial offset of the parameter tC of the deblocking filter for the chroma which is performed on a corresponding slice.

### <Flow of encoding process>

Further, in this case, a flow of the encoding process performed by the image encoding device 100 is similar to that of the first embodiment (Fig. 11).

### <Flow of header information generation process>

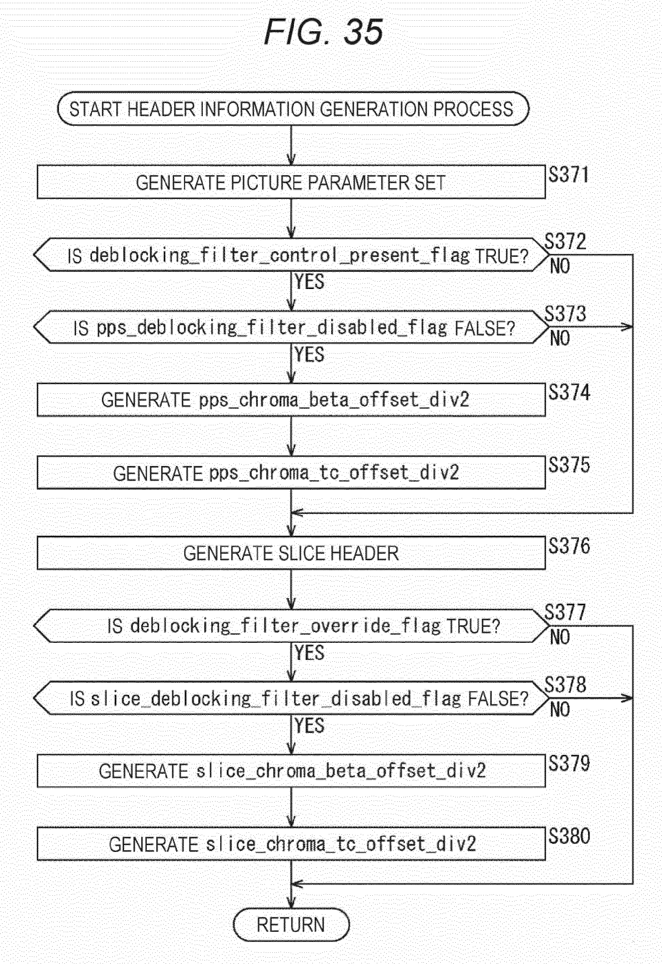

Next, an example of a flow of the header information generation process performed in step S101 of the encoding process in this case will be described with reference to a flowchart of Fig. 35.

When the header information generation process starts, a process of steps S371 and S372 is performed similarly to the process of steps S233 and S234 of Fig. 19. When a value of deblocking_filter_control_present_flag is determined to be true ("1") in step S372, the process proceeds to step S373.

In step S373, the header control unit 141 determines whether or not a value of pps_deblocking_filter_disabled_flag is false ("0") in the picture parameter set. When a value of pps_deblocking_filter_disabled_flag is determined to be false ("0"), the process proceeds to step S374.

In step S374, the pps_chroma_beta_offset_div2 generation unit 281 generates pps_chroma_beta_offset_div2 as the extended syntax. In step S375, the pps_chroma_tc_offset_div2 generation unit 282 generates pps_chroma_tc_offset_div2 as the extended syntax.

When the process of step S375 ends, the process proceeds to step S376. Further, when a value of pps_deblocking_filter_disabled_flag is determined to be true ("1") in step S373, the process proceeds to step S376. Further, when a value of deblocking_filter_control_present_flag is determined to be false ("0") in step S372, the process proceeds to step S376.

A process of steps S376 and S377 is performed similarly to the process of steps S236 and S237 of Fig. 19. When a value of deblocking_filter_override_flag is determined to be true ("1") in step S377, the process proceeds to step S378.

In step S378, the header control unit 141 determines whether or not a value of slice_deblocking_filter_disabled_flag is false ("0") in the slice header. When a value of slice_deblocking_filter_disabled_flag is determined to be false ("0"), the process proceeds to step S379.

In step S379, the slice_chroma_beta_offset_div2 generation unit 283 generates slice_chroma_beta_offset_div2 as the extended syntax. In step S380, the slice_chroma_tc_offset_div2 generation unit 284 generates slice_chroma_tc_offset_div2 as the extended syntax.

When the process of step S380 ends, the header information generation process ends, and the process returns to Fig. 11. Further, when a value of slice_deblocking_filter_disabled_flag is determined to be true ("1") in step S378, the header information generation process ends, and the process returns to Fig. 11. Further, when a value of deblocking_filter_override_flag is determined to be false ("0") in step S377, the header information generation process ends, and the process returns to Fig. 11.

When the control information for controlling the filter strength of the deblocking filter process for the chrominance component (the chroma) of the image data is generated as the header information as described above, the image encoding device 100 (the header information generation unit 131) can control the filter strength of the deblocking filter process for the chroma independently of the filter strength of the deblocking filter process for the luminance component (the luma). For example, it is possible to suppress the filter strength for the chroma without changing the filter strength for the luma. Thus, by applying the present technology, the image encoding device 100 (the header information generation unit 131) can more appropriately process the images of the screen content as well as the natural images in the deblocking filter process when the image data is encoded or decoded, and thus it is possible to suppress a reduction in the image quality.

### <Flow of loop filter process>

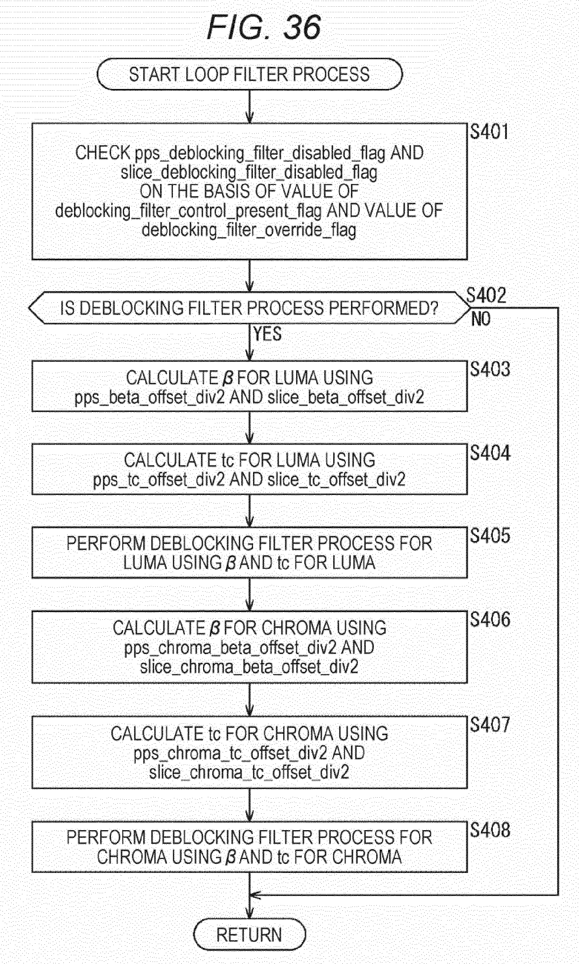

Next, an example of a flow of the loop filter process performed in step S112 of the encoding process in this case will be described with reference to a flowchart of Fig. 36.

When the loop filter process starts, in step S401, the deblocking filter control unit 181 checks a value of pps_ deblocking_filter_disabled_flag on the basis of a value of deblocking_filter_control_present_flag included in the header information. For example, when a value of deblocking_filter_control_present_flag is true ("1"), the deblocking filter control unit 181 checks a value of pps_deblocking_filter_disabled_flag, and uses the value in a process of step S402. Further, for example, when a value of deblocking_filter_control_present_flag is false ("0"), the deblocking filter control unit 181 does not check a value of pps_deblocking_filter_disabled_flag, and does not use a value of pps_deblocking_filter_disabled_flag in the process of step S402.

Further, the deblocking filter control unit 181 checks a value of slice_deblocking_filter_disabled_flag on the basis of a value of deblocking_filter_override_flag included in the header information. For example, when a value of deblocking_filter_override_flag is true ("1"), the deblocking filter control unit 181 checks a value of slice_deblocking_filter_disabled_flag, and uses the value in the process of step S402. Further, for example, when a value of deblocking_filter_override_flag is false ("0"), the deblocking filter control unit 181 does not check a value of slice_deblocking_filter_disabled_flag, and, does not use a value of slice_deblocking_filter_disabled_flag in the process of step S402.

In step S402, the deblocking filter control unit 181 determines whether or not the deblocking filter process is performed on the basis of a value of pps_deblocking_filter_disabled_flag and a value of slice_deblocking_filter_disabled_flag. Here, the deblocking filter control unit 181 performs the determination on the basis of only the value of the syntax element checked in step S401. When the deblocking filter process is determined to be performed, the process proceeds to step S403.

In step S403, the deblocking filter control unit 181 calculates the parameter β of the deblocking filter for the luma using pps_beta_offset_div2 and slice_beta_offset_div2.

In step S404, the deblocking filter control unit 181 calculates the parameter tC of the deblocking filter for the luma using pps_tc_offset_div2 and slice_tc_offset_div2.

In step S405, the luma deblocking filter processing unit 191 performs the deblocking filter process for the luma using the parameter β for the luma calculated in step S403 and the parameter tC for the luma calculated in step S404.

In step S406, the deblocking filter control unit 181 calculates the parameter β of the deblocking filter for the chroma using pps_chroma_beta_offset_div2 and slice_chroma_beta_offset_div2.

In step S407, the deblocking filter control unit 181 calculates the parameter tC of the deblocking filter for the chroma using pps_chroma_tc_offset_div2 and slice_chroma_tc_offset_div2.

In step S408, the chroma deblocking filter processing unit 192 performs the deblocking filter process for the chroma using the parameter β for the chroma calculated in step S406 and the parameter tC for the chroma calculated in step S407.

When the process of step S408 ends, the loop filter process ends, and the process returns to Fig. 11. Further, when the deblocking filter process is determined not to be performed in step S402, the loop filter process ends, and the process returns to Fig. 11.

As described above, the deblocking filter process is performed on the basis of the control information for controlling the deblocking filter process for the chrominance component (the chroma) of the image data included in the header information, and thus the image encoding device 100 (the loop filter 120) can control the filter strength of the deblocking filter process for the chroma independently of the filter strength of the deblocking filter process for the luminance component (the luma). For example, it is possible to suppress the filter strength for the chroma without changing the filter strength for the luma. Thus, by applying the present technology, the image encoding device 100 (the loop filter 120) can more appropriately perform the deblocking filter process on the images of the screen content as well as the natural images when image data is encoded and thus suppress a reduction in the image quality.

### <Image decoding device and loop filter>

In this case, a configuration of the image decoding device which is one aspect of the image processing device to which the present technology is applied is similar to that of the first embodiment (Fig. 14). Further, in this case, a configuration of the loop filter 216 is also similar to that of the first embodiment (Fig. 15).

### <Flow of decoding process>

Further, in this case, a flow of the decoding process performed by the image decoding device 200 is similar to that of the first embodiment (Fig. 16).

In other words, similarly to the first embodiment, in step S208 of the decoding process, the loop filter 216 performs the loop filter process similarly to the example of the loop filter process performed by the loop filter 120 of the image encoding device 100 described above with reference to the flowchart of Fig. 36. In other words, the description of the example of the flow of the loop filter process illustrated in Fig. 36 can be also applied to description of the loop filter process performed by the loop filter 216 (that is, the process of step S208 of the decoding process in this case).

In other words, by performing the deblocking filter process on the basis of the control information for controlling the deblocking filter process for the chrominance component (the chroma) of the image data included in the header information, the image decoding device 200 (the loop filter 216) can control the filter strength of the deblocking filter process for the chroma independently of the filter strength of the deblocking filter process for the luminance component (the luma). For example, it is possible to suppress the filter strength for the chroma without changing the filter strength for the luma. Thus, by applying the present technology, the image decoding device 200 (the loop filter 216) can more appropriately perform the deblocking filter process on the images of the screen content as well as the natural images when the image data is decoded and thus suppress a reduction in the image quality.

Note that the above-described generation of the control information for controlling the filter strength of the deblocking filter process for the chroma can be performed in the header information of an arbitrary layer and may be performed in only one of the picture parameter set and the slice header or may be performed in any other header information, for example.

### <6. Sixth embodiment>

### <Execution control of filter process and control of filter strength>

Note that both the control information for controlling the execution of the deblocking filter process for the chroma and the control information for controlling the filter strength of the deblocking filter process for the chroma may be generated. Accordingly, it is possible to perform both the execution control of the deblocking filter process for the chroma and the control of the filter strength independently of the control of the deblocking filter process for the luminance component (the luma). Thus, for example, it is possible to perform a more appropriate deblocking filter process on the images of the screen content in addition to the natural images, for example, it is possible to suppress a character blur of screen content. In other words, by applying the present technology, it is possible to suppress a reduction in the image quality.

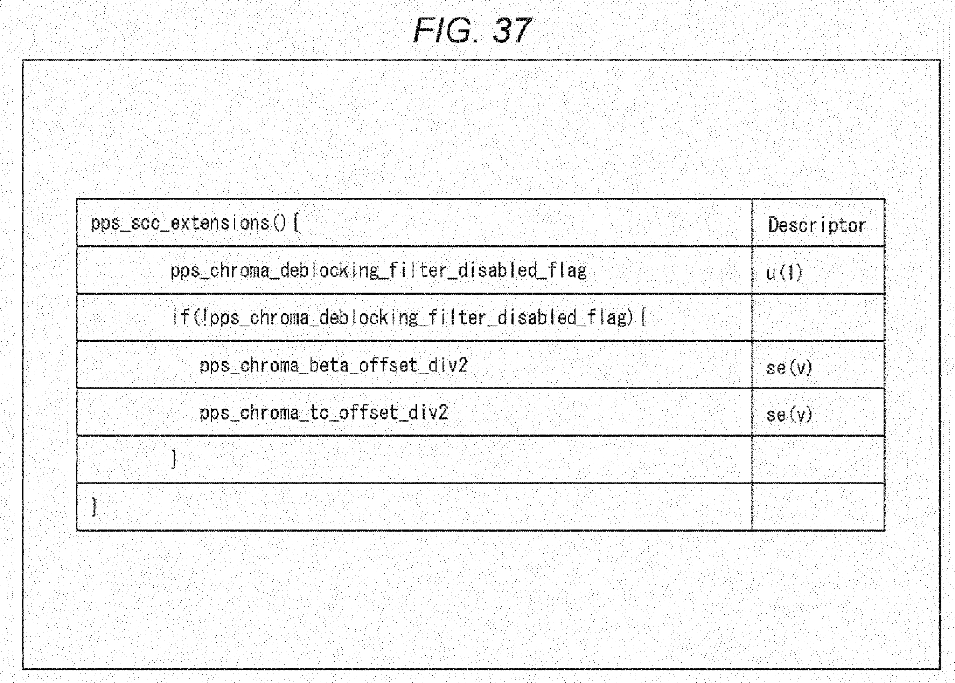

A more specific example will be described. As illustrated in Fig. 37, for example, in the picture parameter set, pps_chroma_deblocking_filter_disabled_flag may be set as the extended syntax element, and when a value of pps_chroma_deblocking_filter_disabled_flag is false (for example, "0"), pps_chroma_beta_offset_div2 and pps_chroma_tc_offset_div2 may be set as the extended syntax element.

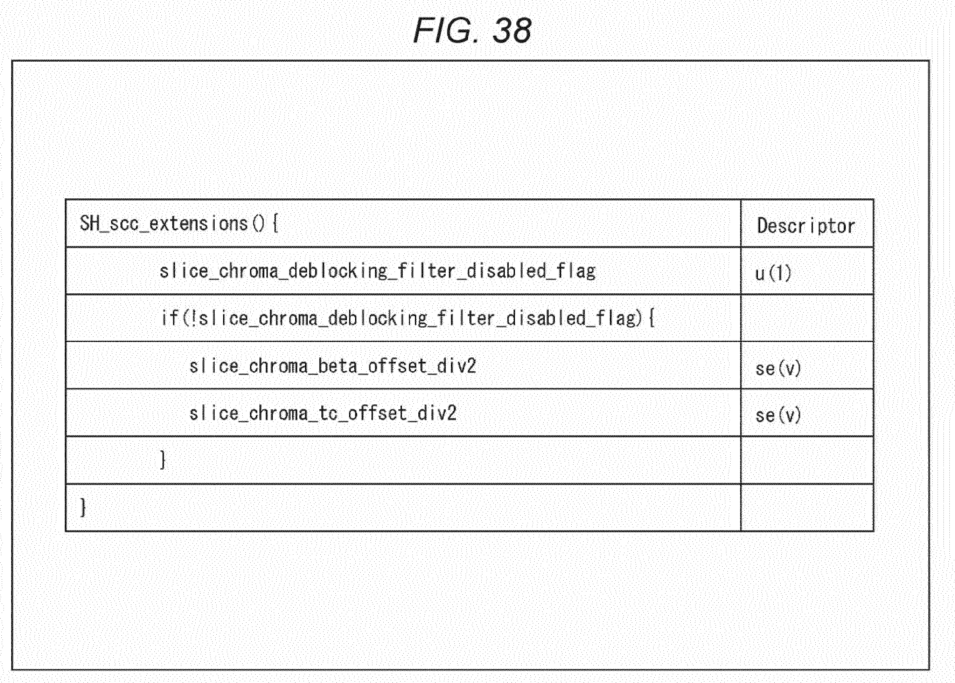

Further, as illustrated in Fig. 38, for example, in the slice header, slice_chroma_deblocking_filter_disabled_flag may be set as the extended syntax element, and when a value of slice_chroma_deblocking_filter_disabled_flag is false (for example, "0"), slice_chroma_beta_offset_div2 and slice_chroma_tc_offset_div2 may be set as the extended syntax element.

Accordingly, it is possible to control the execution of the deblocking filter process for the chroma and the filter strength independently of the deblocking filter process for the luma in the header information of each layer, and thus it is possible to suppress a reduction in the image quality.

### <Image encoding device and loop filter>

In this case, a configuration of the image encoding device which is one aspect of the image processing device to which the present technology is applied is similar to that of the first embodiment (Fig. 8). Further, in this case, a configuration of the loop filter 120 is also similar to that of the first embodiment (Fig. 10).

### <Header information generation unit>

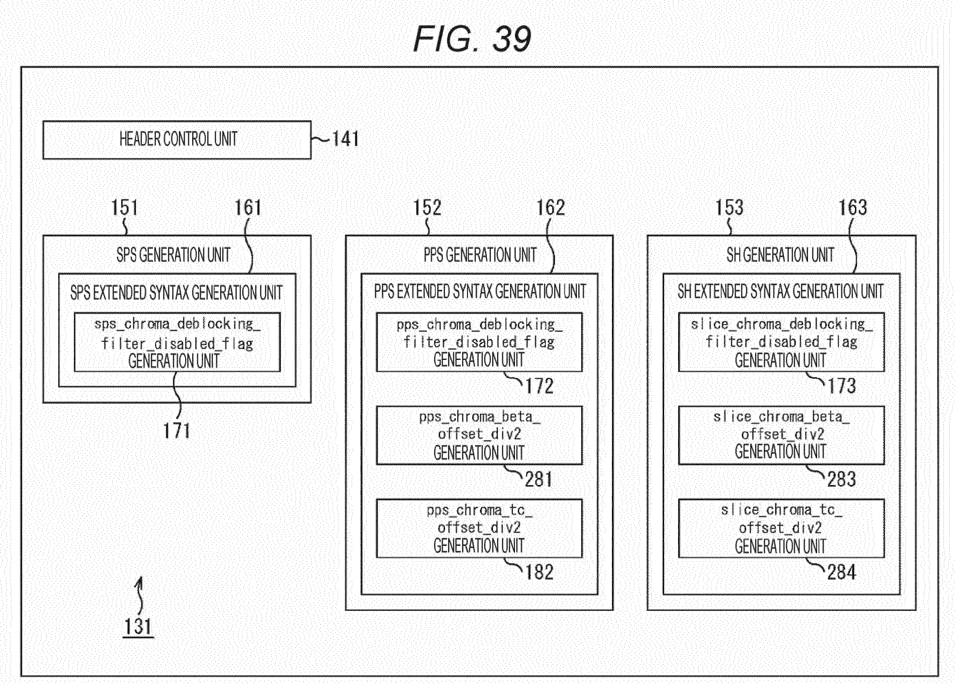

An exemplary main configuration of the header information generation unit 131 in this case is illustrated in Fig. 39. The header information generation unit 131 basically has a similar configuration to that of the fifth embodiment (Fig. 34) as illustrated in Fig. 39. Note that the SPS generation unit 151 is also illustrated in Fig. 39. In an example of Fig. 39, the PPS extended syntax generation unit 162 further includes a pps_chroma_deblocking_filter_disabled_flag generation unit 172. Further, the SH extended syntax generation unit 163 further includes a slice_chroma_deblocking_filter_disabled_flag generation unit 173.

### <Flow of encoding process>

Further, in this case, a flow of the encoding process performed by the image encoding device 100 is similar to that of the first embodiment (Fig. 11).

### <Flow of header information generation process>

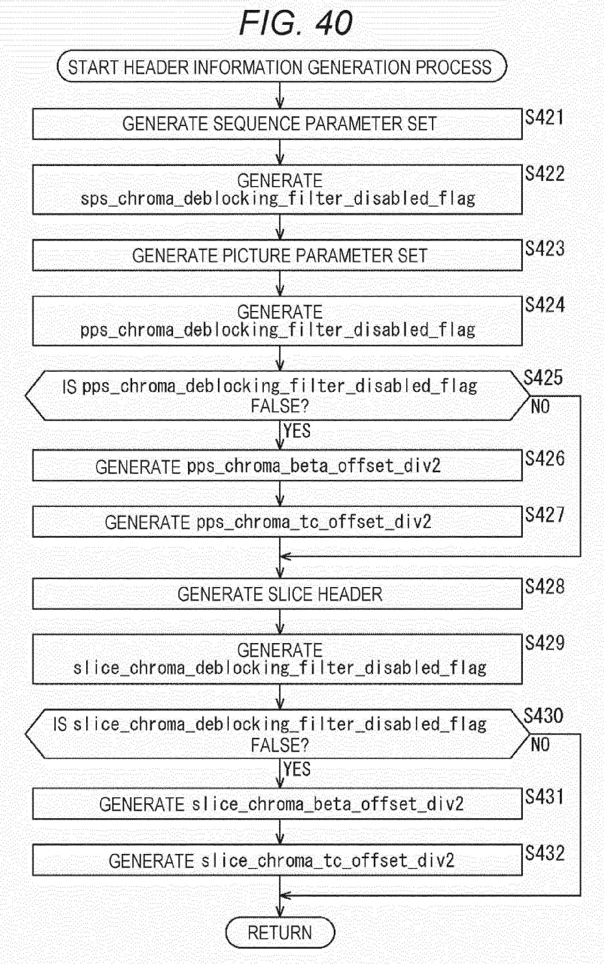

Next, an example of a flow of the header information generation process performed in step S101 of the encoding process in this case will be described with reference to a flowchart of Fig. 40.

When the header information generation process starts, a process of steps S421 to S424 is performed similarly to the process of steps S121 to S124 of Fig. 12.

In step S425, the header control unit 141 determines whether or not a value of pps_chroma_deblocking_filter_disabled_flagisfalse ("0") in the picture parameter set. When a value of pps_chroma_deblocking_filter_disabled_flag is determined to be false ("0"), the process proceeds to step S426.

A process of steps S426 and S427 is performed similarly to the process of steps S374 and S375 of Fig. 35.

When the process of step S427 ends, the process proceeds to step S428. Further, when a value of pps_chroma_deblocking_filter_disabled_flag is determined to be true ("1") in step S425, the process proceeds to step S428.

A process of steps S428 and S429 is performed similarly to the process of steps S125 and S126 of Fig. 12.

In step S430, the header control unit 141 determines whether or not a value of slice_chroma_deblocking_filter_disabled_flag is false ("0") in the slice header. When a value of slice_chroma_deblocking_filter_disabled_flag is determined to be false ("0"), the process proceeds to step S431.

A process of steps S431 and S432 is performed similarly to the process of steps S379 and S380 of Fig. 35.

When the process of step S432 ends, the header information generation process ends, and the process returns to Fig. 11. Further, when a value of slice_chroma_deblocking_filter_disabled_flag is determined to be true ("1") in step S430, the header information generation process ends, and the process returns to Fig. 11.

As described above, the control information for controlling the execution of the deblocking filter process for the chrominance component (the chroma) of the image data and the control information for controlling the filter strength are generated as the header information, and the image encoding device 100 (the header information generation unit 131) can control the deblocking filter process for the chroma independently of the deblocking filter process for the luminance component (the luma). Thus, by applying the present technology, the image encoding device 100 (the header information generation unit 131) can more appropriately process the images of the screen content as well as the natural images in the deblocking filter process when the image data is encoded or decoded, and thus it is possible to suppress a reduction in the image quality.

### <Flow of loop filter process>

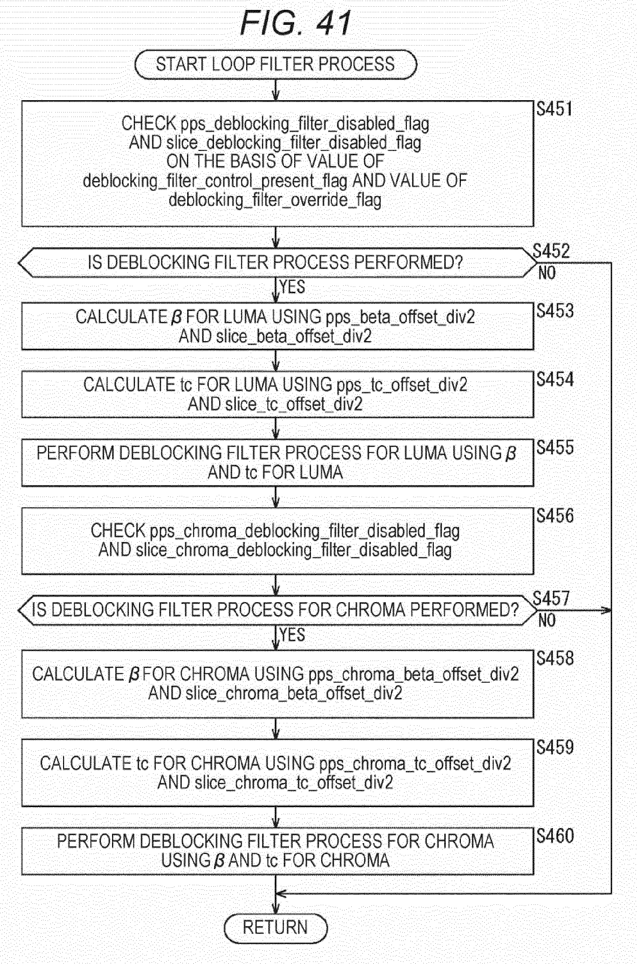

Next, an example of a flow of the loop filter process performed in step S112 of the encoding process in this case will be described with reference to a flowchart of Fig. 41.

When the loop filter process starts, a process of steps S451 to S455 is performed similarly to the process of steps S401 to S405 of Fig. 36.

In step S456, the deblocking filter control unit 181 checks a value of pps_chroma_deblocking_filter_disabled_flag and a value of slice_chroma_deblocking_filter_disabled_flag included in the header information.

In step S457, the deblocking filter control unit 181 determines whether or not the deblocking filter process for the chroma is performed on the basis of a value of pps_chroma_deblocking_filter_disabled_flag and a value of slice_chroma_deblocking_filter_disabled_flag. When the deblocking filter process for the chroma is determined to be performed, the process proceeds to step S458.

A process of steps S458 to S460 is performed similarly to the process of steps S406 to S408 of Fig. 36.

When the process of step S460 ends, the loop filter process ends, and the process returns to Fig. 11. Further, when the deblocking filter process for the chroma is determined not to be performed in step S457, the loop filter process ends, and the process returns to Fig. 11. Further, when the deblocking filter process is determined not to be performed in step S452, the loop filter process ends, and the process returns to Fig. 11.

As described above, the deblocking filter process is performed on the basis of the control information for controlling the deblocking filter process for the chrominance component (the chroma) of the image data included in the header information, and the image encoding device 100 (the loop filter 120) can perform the execution control of the deblocking filter process for the chroma and the control of the filter strength independently of the control of the deblocking filter process for the luminance component (the luma). Thus, by applying the present technology, the image encoding device 100 (the loop filter 120) can more appropriately perform the deblocking filter process on the images of the screen content as well as the natural images when image data is encoded and thus suppress a reduction in the image quality.

### <Image decoding device and loop filter>

In this case, a configuration of the image decoding device which is one aspect of the image processing device to which the present technology is applied is similar to that of the first embodiment (Fig. 14). Further, in this case, a configuration of the loop filter 216 is also similar to that of the first embodiment (Fig. 15).

### <Flow of decoding process>

Further, in this case, a flow of the decoding process performed by the image decoding device 200 is similar to that of the first embodiment (Fig. 16).

In other words, similarly to the first embodiment, in step S208 of the decoding process, the loop filter 216 performs the loop filter process similarly to the example of the loop filter process performed by the loop filter 120 of the image encoding device 100 described above with reference to the flowchart of Fig. 41. In other words, the description of the example of the flow of the loop filter process illustrated in Fig. 41 can be also applied to description of the loop filter process performed by the loop filter 216 (that is, the process of step S208 of the decoding process in this case).

In other words, the image decoding device 200 (the loop filter 216) performs the deblocking filter process on the basis of the control information for controlling the deblocking filter process for the chrominance component (the chroma) of the image data included in the header information, and thus it is possible to perform both the execution control of the deblocking filter process for the chroma and the control of the filter strength independently of the control of the deblocking filter process for the luminance component (the luma). Thus, by applying the present technology, the image decoding device 200 (the loop filter 216) can more appropriately perform the deblocking filter process on the images of the screen content as well as the natural images when the image data is decoded and thus suppress a reduction in the image quality.

Note that the above-described generation of the control information for controlling the execution of the deblocking filter process for the chroma and the filter strength can be performed in the header information of an arbitrary layer and may be performed in only one of the picture parameter set and the slice header or may be performed in any other header information, for example.

### <7. Seventh embodiment>

### <Use of control parameter of deblocking filter>

Note that the control parameter related to the deblocking filter for the chroma may be generated, corresponding to the control parameter related to the existing deblocking filter. Accordingly, it is possible to indicate the presence of the control information for controlling the deblocking filter process for the chroma in the header information of each layer independently of the control information for controlling the existing deblocking filter process. In other words, the generation of the control information for controlling the deblocking filter process for the chroma can be controlled independently of the deblocking filter process for the luma. Further, using the control parameter, it is possible to omit the control information for controlling the deblocking filter process for the chroma for the slice in which it is unnecessary to control the deblocking filter process for the chroma independently of the deblocking filter process for the luma, and it is possible to suppress an increase in the coding amount accordingly and suppress a reduction in the encoding efficiency.

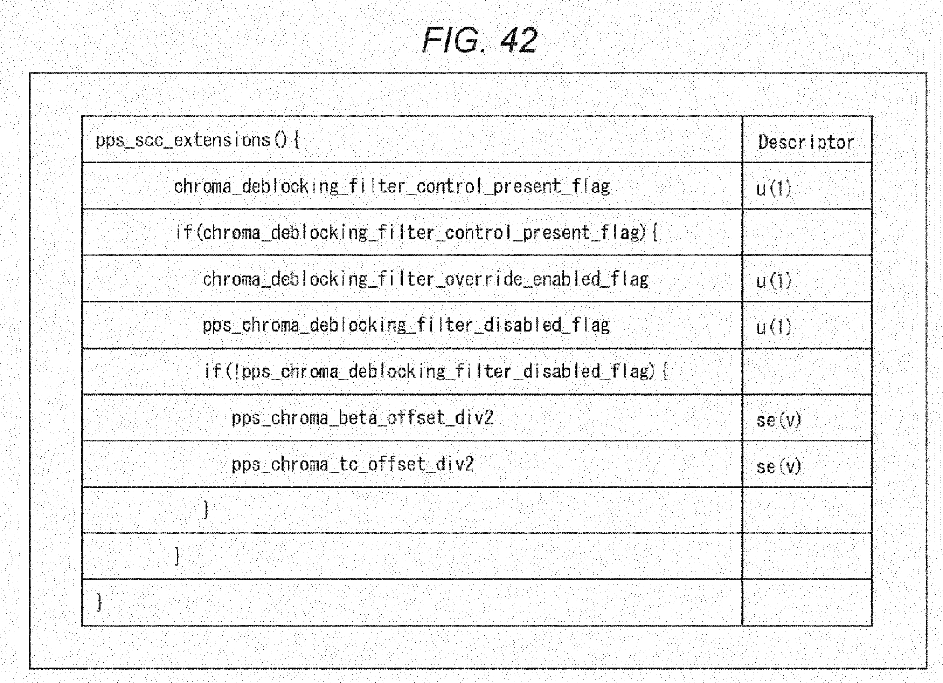

A more specific example will be described. As illustrated in Fig. 42, for example, in the picture parameter set, chroma_deblocking_filter_control_present_flag may be set as the extended syntax element, and only when a value of chroma_deblocking_filter_control_present_flag is true (for example, "1"), chroma_deblocking_filter_override_enabled_flag and pps_chroma_deblocking_filter_disabled_flag may be set as the extended syntax element.

Further, when a value of pps_chroma_deblocking_filter_disabled_flag is false (for example, "0"), pps_chroma_beta_offset_div2 and pps_chroma_tc_offset_div2 may be set as the extended syntax element.

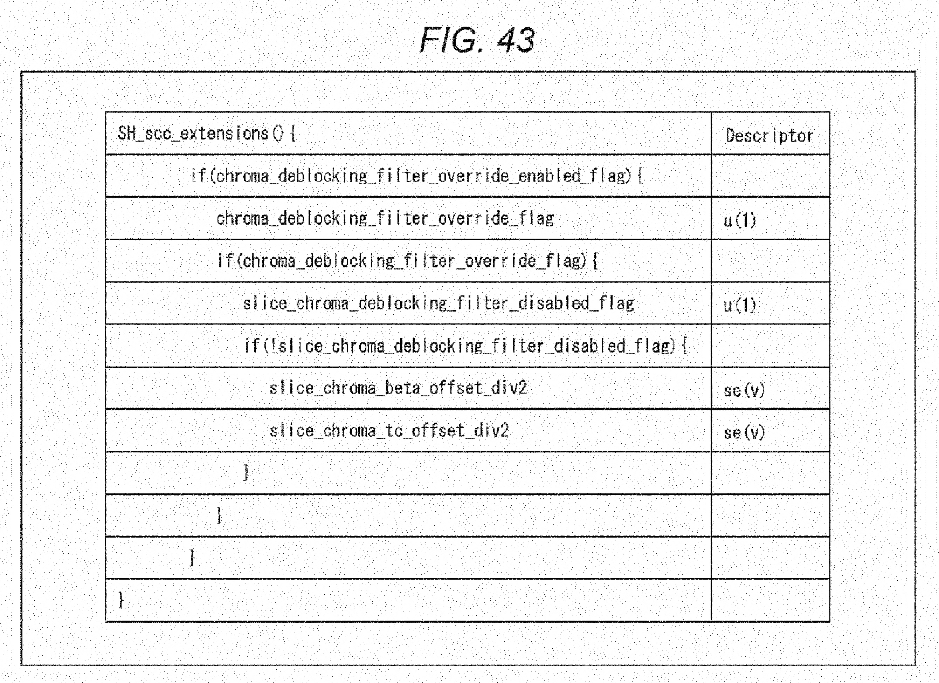

Further, as illustrated in Fig. 43, for example, in the slice header, when a value of chroma_deblocking_filter_override_enabled_flag set in the picture parameter set to which the slice header belongs is true (for example, "1"), chroma_deblocking_filter_override_flag may be set as the extended syntax element, and when a value of chroma_deblocking_filter_override_flagistrue (for example, "1"), slice_chroma_deblocking_filter_disabled_flag may be set as the extended syntax element.

Further, when a value of slice_chroma_deblocking_filter_disabled_flag is false (for example, "0"), slice_chroma_beta_offset_div2 and slice_chroma_tc_offset_div2 may be set as the extended syntax element.

Accordingly, it is possible to control the execution of the deblocking filter process for the chroma and the filter strength independently of the deblocking filter process for the luma in the header information of each layer, and thus it is possible to suppress a reduction in the image quality. Further, using the control parameter, it is possible to omit the control information for controlling the deblocking filter process for the chroma for the slice in which it is unnecessary to control the deblocking filter process for the chroma independently of the deblocking filter process for the luma, and thus it is possible to suppress an increase in the coding amount accordingly and suppress a reduction in the encoding efficiency.

### <Image encoding device and loop filter>

In this case, a configuration of the image encoding device which is one aspect of the image processing device to which the present technology is applied is similar to that of the first embodiment (Fig. 8). Further, in this case, a configuration of the loop filter 120 is also similar to that of the first embodiment (Fig. 10).

### <Header information generation unit>

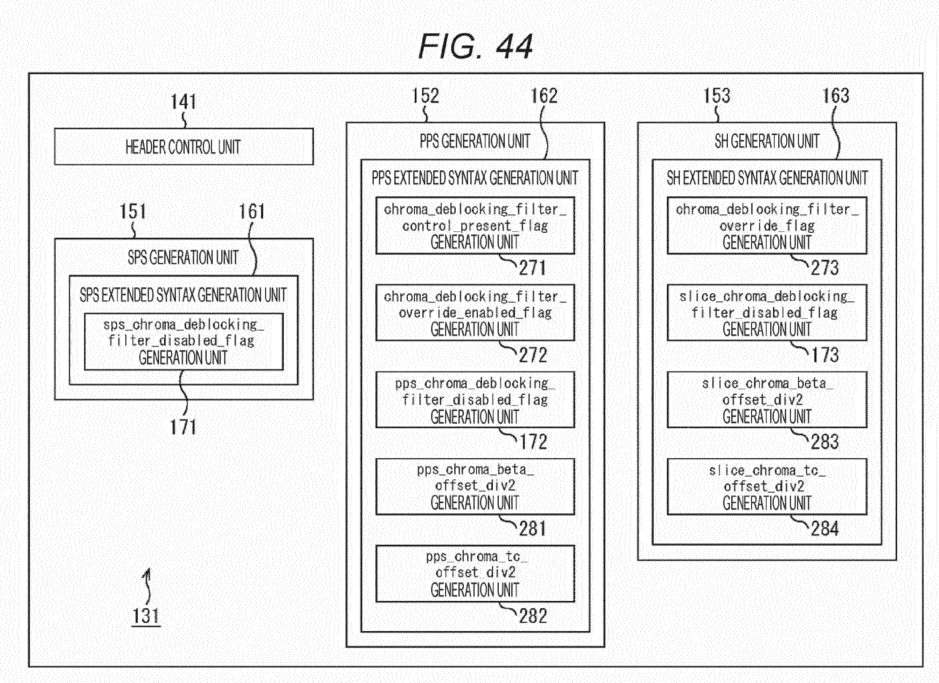

An exemplary main configuration of the header information generation unit 131 in this case is illustrated in Fig. 44. As illustrated in Fig. 44, the header information generation unit 131 basically has a similar configuration to that of the sixth embodiment (Fig. 39). Here, in an example of Fig. 44, the PPS extended syntax generation unit 162 further includes a chroma_deblocking_filter_control_present_flag generation unit 271 and a chroma_deblocking_filter_override_enabled_flag generation unit 272. Further, the SH extended syntax generation unit 163 further includes a chroma_deblocking_filter_override_flag generation unit 273.

### <Flow of encoding process>

Further, in this case, a flow of the encoding process performed by the image encoding device 100 is similar to that of the first embodiment (Fig. 11).

### <Flow of header information generation process>

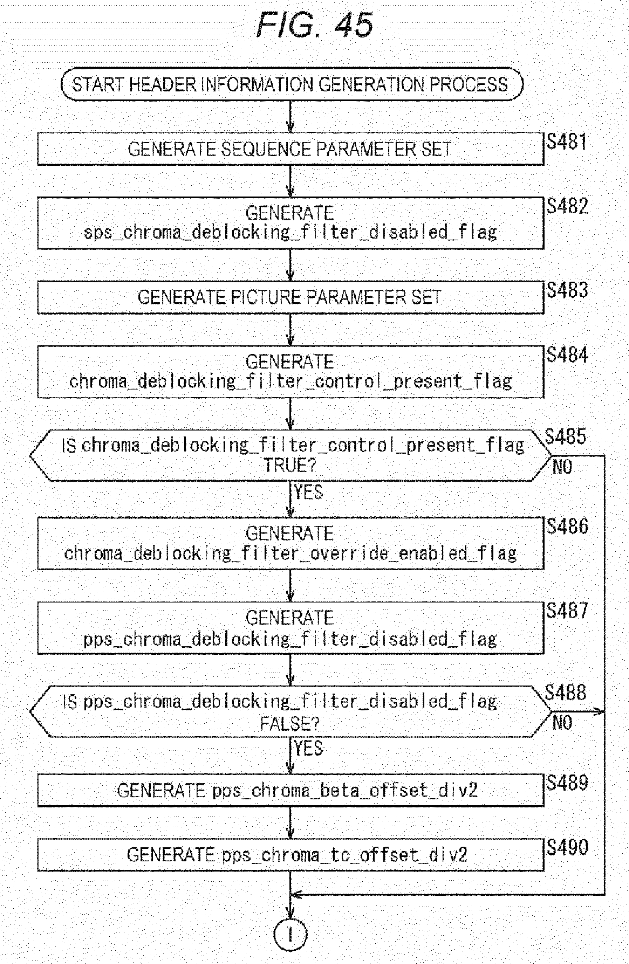

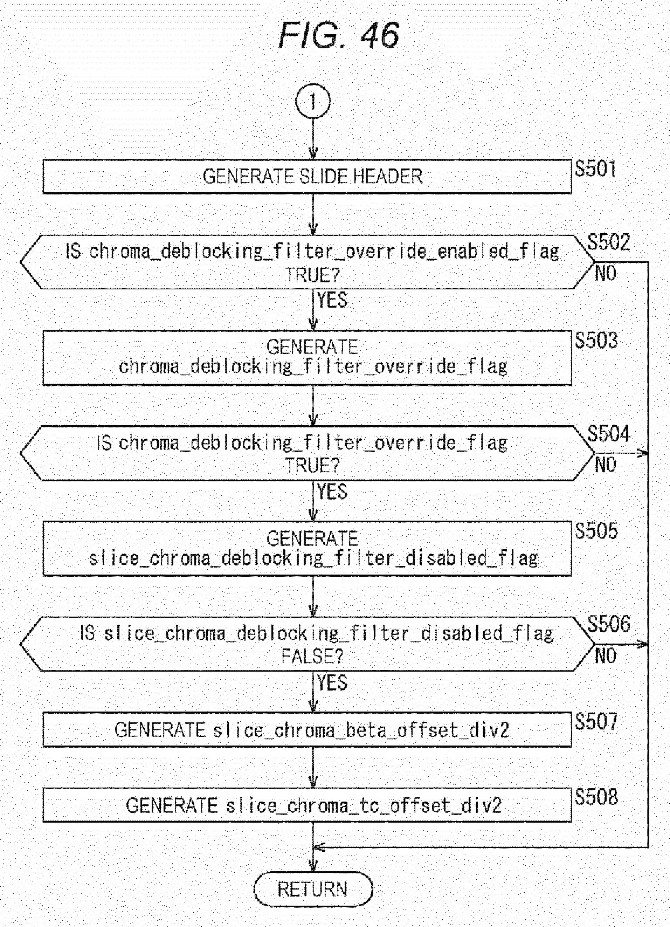

Next, an example of a flow of the header information generation process performed in step S101 of the encoding process in this case will be described with reference to flowcharts of Figs. 45 and 46.

When the header information generation process starts, a process of steps S481 to S487 is performed similarly to the process of steps S271 to S277 of Fig. 24. When the process of step S487 ends, the process proceeds to step S488.

A process of steps S488 to S490 is performed similarly to the process of steps S425 to S427 of Fig. 40.

When the process of step S490 ends, the process proceeds to step S501 of Fig. 46. Further, when a value of pps_chroma_deblocking_filter_disabled_flag is determined to be true ("1") in step S488 of Fig. 45, the process proceeds to step S501 of Fig. 46. Further, when a value of chroma_deblocking_filter_control_present_flag is determined to be false (for example, "0") in step S485 of Fig. 45, the process proceeds to step S501 of Fig. 46.

A process of steps S501 to S505 of Fig. 46 is performed similarly to the process of steps S278 to S282 of Fig. 24. When the process of step S505 ends, the process proceeds to step S506.

A process of steps S506 to S508 is performed similarly to the process of steps S430 to S432 of Fig. 40.

When the process of step S508 ends, the header information generation process ends, and the process returns to Fig. 11. Further, when a value of slice_chroma_deblocking_filter_disabled_flag is determined to be true ("1") in step S506, the header information generation process ends, and the process returns to Fig. 11. Further, when a value of chroma_deblocking_filter_override_flag is determined to be false (for example, "0") in step S504, the header information generation process ends, and the process returns to Fig. 11. Further, when a value of chroma_deblocking_filter_override_enabled_flag is determined to be false (for example, "0") in step S502, the header information generation process ends, and the process returns to Fig. 11.

As described above, the control information for controlling the execution of the deblocking filter process for the chrominance component (the chroma) of the image data and the control information for controlling the filter strength are generated as the header information, and thus the image encoding device 100 (the header information generation unit 131) can control the deblocking filter process for the chroma independently of the deblocking filter process for the luminance component (the luma). Further, using the control parameters, it is possible to omit the control information for controlling the deblocking filter process for the chroma for the slice in which it is unnecessary to control the deblocking filter process for the chroma independently of the deblocking filter process for the luma, and thus it is possible to suppress an increase in the coding amount accordingly and suppress a reduction in the encoding efficiency. Thus, by applying the present technology, the image encoding device 100 (the header information generation unit 131) can suppress a reduction in the encoding efficiency while suppressing a reduction in the image quality.

### <Flow of loop filter process>

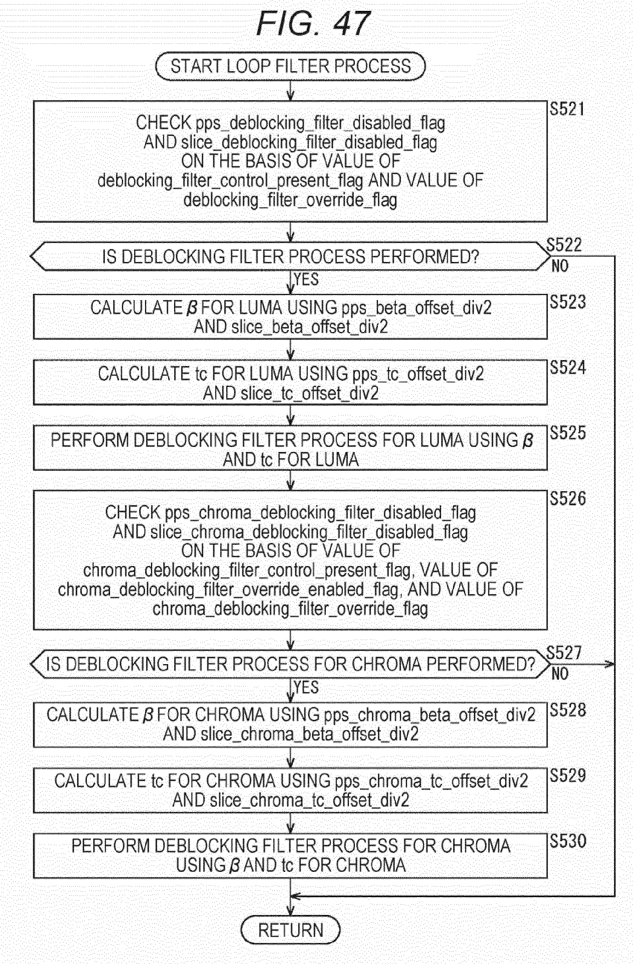

Next, an example of a flow of the loop filter process performed in step S112 of the encoding process in this case will be described with reference to a flowchart of Fig. 47.

When the loop filter process starts, a process of steps S521 to S525 is performed similarly to the process of steps S451 to S455 of Fig. 41.

In step S526, the deblocking filter control unit 181 checks a value of pps_chroma_deblocking_filter_disabled_flag and a value of slice_chroma_deblocking_filter_disabled_flag on the basis of a value of chroma_deblocking_filter_control_present_flag, a value of chroma_deblocking_filter_override_enabled_flag, and a value of chroma_deblocking_filter_override_flag included in the header information.

A process of steps S527 to S530 is performed similarly to the process of steps S457 to S460 of Fig. 41.

When the process of step S530 ends, the loop filter process ends, and the process returns to Fig. 11. Further, when the deblocking filter process for the chroma is determined not to be performed in step S527, the loop filter process ends, and the process returns to Fig. 11. Further, when the deblocking filter process is determined not to be performed in step S522, the loop filter process ends, and the process returns to Fig. 11.

As described above, the image encoding device 100 (the loop filter 120) can omit reference to the control information for controlling the deblocking filter process for the chroma for the slice in which it is unnecessary to control the deblocking filter process for the chroma independently of the deblocking filter process for the luma. Thus, by applying the present technology, the image encoding device 100 (the loop filter 120) can suppress an increase in a processing load while suppressing a reduction in the image quality.

### <Image decoding device and loop filter>

In this case, a configuration of the image decoding device which is one aspect of the image processing device to which the present technology is applied is similar to that of the first embodiment (Fig. 14). Further, in this case, a configuration of the loop filter 216 is also similar to that of the first embodiment (Fig. 15).

### <Flow of decoding process>

Further, in this case, a flow of the decoding process performed by the image decoding device 200 is similar to that of the first embodiment (Fig. 16).

In other words, similarly to the first embodiment, in step S208 of the decoding process, the loop filter 216 performs the loop filter process similarly to the example of the loop filter process performed by the loop filter 120 of the image encoding device 100 described above with reference to the flowchart of Fig. 47. In other words, the description of the example of the flow of the loop filter process illustrated in Fig. 47 can be also applied to description of the loop filter process performed by the loop filter 216 (that is, the process of step S208 of the decoding process in this case).

In other words, the image decoding device 200 (the loop filter 216) refers to and uses the control information for controlling the deblocking filter process for the chroma according to the value of the control parameter related to the deblocking filter for the chroma and thus can omit reference to the control information for controlling the deblocking filter process for the chroma for the slice in which it is unnecessary to control the deblocking filter process for the chroma independently of the deblocking filter process for the luma. Thus, by applying the present technology, the image decoding device 200 (the loop filter 216) can suppress an increase in a processing load while suppressing a reduction in the image quality.

Note that the above-described generation of the control information for controlling the deblocking filter process for the chroma according to a value of the control parameter related to the deblocking filter for the chroma can be performed in the header information of an arbitrary layer and may be performed in only one of the picture parameter set and the slice header or may be performed in any other header information, for example.

### <8. Eighth embodiment>

### <Use of control parameter of deblocking filter>

Note that, in the sixth embodiment, further, similarly to the fifth embodiment, the generation of the control information for controlling the deblocking filter process for the chroma may be controlled using the control parameter related to the existing deblocking filter additionally. Accordingly, since it is possible to omit the control information for controlling the deblocking filter process for the chroma which is explicitly unnecessary, it is possible to suppress an increase in the coding amount accordingly and suppress a reduction in the encoding efficiency.

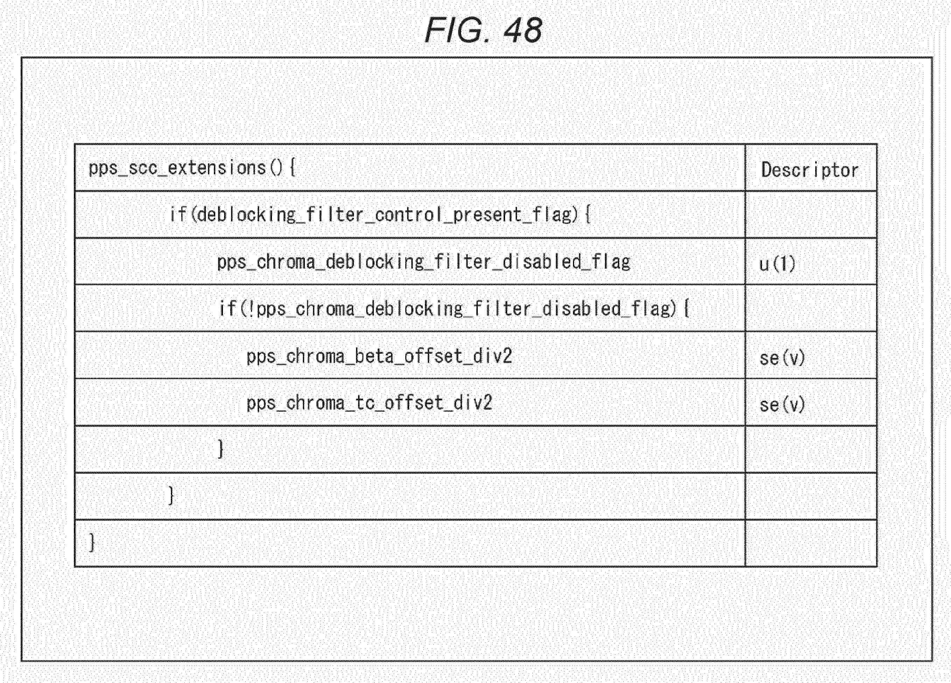

A more specific example will be described. As illustrated in Fig. 48, for example, in the picture parameter set, only when a value of deblocking_filter_control_present_flag is true ("1"), pps_chroma_deblocking_filter_disabled_flag may be set as the extended syntax element. Further, only when a value of pps_chroma_deblocking_filter_disabled_flag is false (for example, "0"), pps_chroma_beta_offset_div2 and pps_chroma_tc_offset_div2 may be set as the extended syntax element.

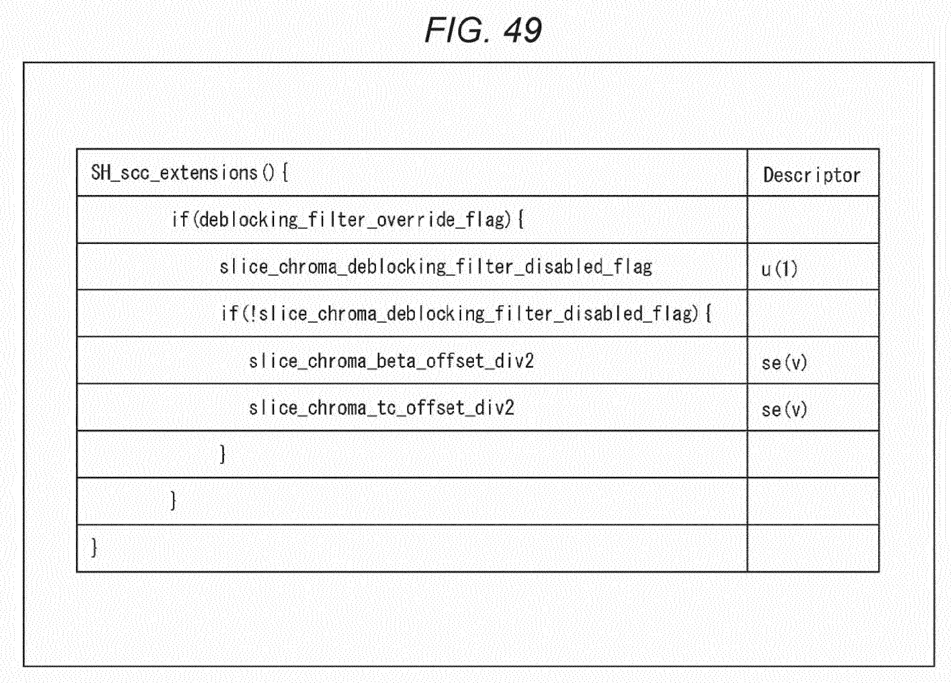

Further, as illustrated in Fig. 49, for example, in the slice header, only when a value of deblocking_filter_override_flag is true ("1"), slice_chroma_deblocking_filter_disabled_flag may be set as the extended syntax element. Further, only when a value of slice_chroma_deblocking_filter_disabled_flag is false (for example, "0"), slice_chroma_beta_offset_div2 and slice_chroma_tc_offset_div2 may be set as the extended syntax element.

Accordingly, since it is possible to omit the control information for controlling the deblocking filter process for the chroma which is explicitly unnecessary in the header information of each layer, it is possible to suppress an increase in the coding amount accordingly and suppress a reduction in the encoding efficiency.

### <Image encoding device, header information generation unit, and loop filter>

In this case, a configuration of the image encoding device which is one aspect of the image processing device to which the present technology is applied is similar to that of the first embodiment (Fig. 8). Further, in this case, a configuration of the header information generation unit 131 is similar to that of the sixth embodiment (Fig. 39). Further, in this case, a configuration of the loop filter 120 is similar to that of the first embodiment (Fig. 10).

### <Flow of encoding process>

Further, in this case, a flow of the encoding process performed by the image encoding device 100 is similar to that of the first embodiment (Fig. 11).

### <Flow of header information generation process>

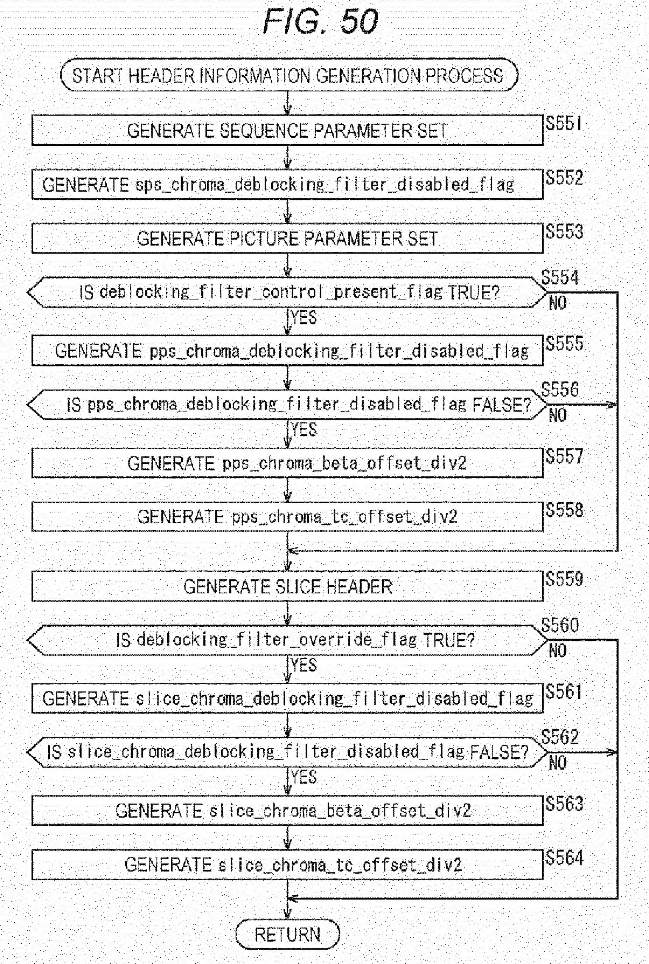

Next, an example of a flow of the header information generation process performed in step S101 of the encoding process in this case will be described with reference to a flowchart of Fig. 50.

When the header information generation process starts, a process of steps S551 and S552 is performed similarly to the process of steps S421 and S422 of Fig. 40. When the process of step S552 ends, the process proceeds to step S553.

A process of steps S553 and S554 is performed similarly to the process of steps S371 and S372 of Fig. 35. When a value of deblocking_filter_control_present_flag is determined to be true ("1") in step S554, the process proceeds to step S555.

A process of steps S555 to S558 is performed similarly to the process of steps S424 to S427 of Fig. 40.

When the process of step S558 ends, the process proceeds to step S559. Further, when pps_chroma_deblocking_filter_disabled_flag is true (for example, "1") in step S556, the process proceeds to step S559. Further, when a value of deblocking_filter_control_present_flag is determined to be false ("0") in step S554, the process proceeds to step S559.

A process of steps S559 and S560 is performed similarly to the process of steps S376 and S377 of Fig. 35. When a value of deblocking_filter_override_flag is determined to be true ("1") in step S560, the process proceeds to step S561.

A process of steps S561 to S564 is performed similarly to the process of steps S429 to S432 of Fig. 40.

When the process of step S564 ends, the header information generation process ends, and the process returns to Fig. 11. Further, when slice_chroma_deblocking_filter_disabled_flag is true (for example, "1") in step S562, the header information generation process ends, and the process returns to Fig. 11. Further, when a value of deblocking_filter_override_flag is determined to be false ("0") in step S560, the header information generation process ends, and the process returns to Fig. 11.

When the header information generation process is performed as described above, the image encoding device 100 (the header information generation unit 131) can omit the control information for controlling the deblocking filter process for the chroma for the slice in which the deblocking filter process for the chroma is explicitly unnecessary . Thus, by applying the present technology, the image encoding device 100 (the header information generation unit 131) can suppress an increase in the coding amount while suppressing a reduction in the image quality and thus suppress a reduction in the encoding efficiency.

### <Flow of loop filter process>

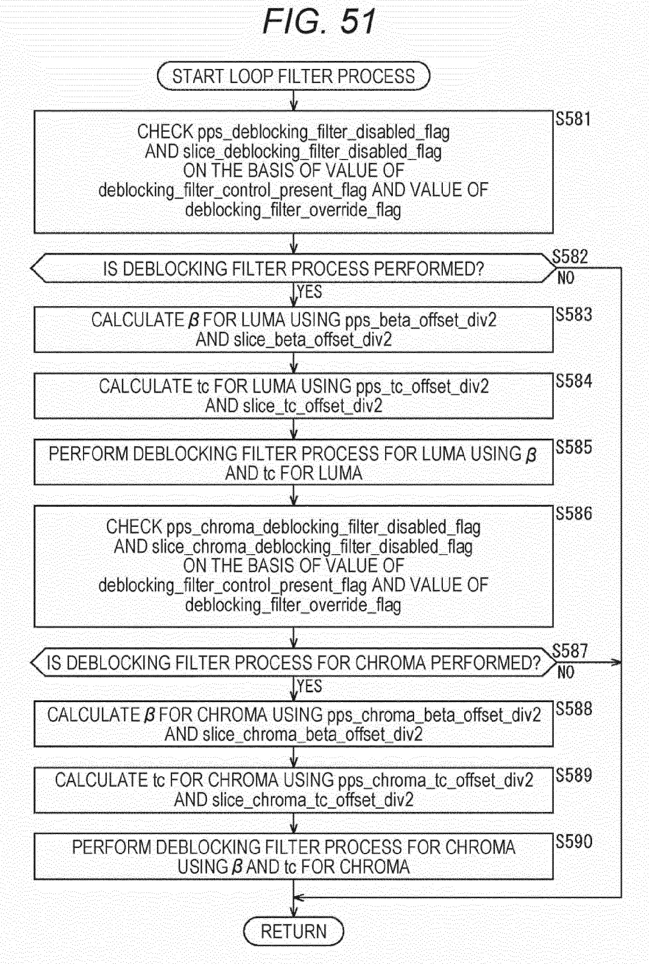

Next, an example of a flow of the loop filter process performed in step S112 of the encoding process in this case will be described with reference to a flowchart of Fig. 51.

When the loop filter process starts, a process of steps S581 to S585 is performed similarly to the process of steps S451 to S455 of Fig. 41.

In step S586, the deblocking filter control unit 181 checks a value of pps_chroma_deblocking_filter_disabled_flag and a value of slice_chroma_deblocking_filter_disabled_flag on the basis of a value of deblocking_filter_control_present_flag and a deblocking_filter_override_flag included in the header information.

A process of steps S587 to S590 is performed similarly to the process of steps S457 to S460 of Fig. 41.

When the process of step S590 ends, the loop filter process ends, and the process returns to Fig. 11. Further, when the deblocking filter process for the chroma is determined not to be performed in step S587, the loop filter process ends, and the process returns to Fig. 11. Further, when the deblocking filter process is determined not to be performed in step S582, the loop filter process ends, and the process returns to Fig. 11.

When the loop filter process is performed as described above, the image encoding device 100 (the loop filter 120) can omit reference to the control information for controlling the deblocking filter process for the chroma for the slice in which the deblocking filter process for the chroma is explicitly unnecessary. Thus, by applying the present technology, the image encoding device 100 (the loop filter 120) can suppress an increase in a processing load while suppressing a reduction in the image quality.

### <Image decoding device and loop filter>

In this case, a configuration of the image decoding device which is one aspect of the image processing device to which the present technology is applied is similar to that of the first embodiment (Fig. 14). Further, in this case, a configuration of the loop filter 216 is also similar to that of the first embodiment (Fig. 15).

### <Flow of decoding process>

Further, in this case, a flow of the decoding process performed by the image decoding device 200 is similar to that of the first embodiment (Fig. 16).

In other words, in step S208 of the decoding process, the loop filter 216 performs the loop filter process similarly to the example of the loop filter process performed by the loop filter 120 of the image encoding device 100 described above with reference to the flowchart of Fig. 51. In other words, the description of the example of the flow of the loop filter process illustrated in Fig. 51 can be also applied to description of the loop filter process performed by the loop filter 216 (that is, the process of step S208 of the decoding process in this case).

In other words, the image decoding device 200 (the loop filter 216) can omit reference to the control information for controlling the deblocking filter process for the chroma for the slice in which the deblocking filter process for the chroma is explicitly unnecessary. Thus, by applying the present technology, the image decoding device 200 (the loop filter 216) can suppress an increase in a processing load while suppressing a reduction in the image quality.

Note that the above-described generation of the control information for controlling the deblocking filter process for the chroma according to the value of the control parameter related to the existing deblocking filter and the value of the control parameter related to the deblocking filter for the chroma can be performed in the header information of an arbitrary layer and may be performed in only one of the picture parameter set and the slice header or may be performed in any other header information, for example.

### <9. Ninth embodiment>

### <Use of control parameter of deblocking filter>

Note that, in the seventh embodiment, further, similarly to the fifth embodiment, the generation of the control information for controlling the deblocking filter process for the chroma may be controlled using the control parameter related to the existing deblocking filter additionally. Accordingly, since it is possible to omit the control information for controlling the deblocking filter process for the chroma which is explicitly unnecessary, it is possible to suppress an increase in the coding amount accordingly and suppress a reduction in the encoding efficiency.

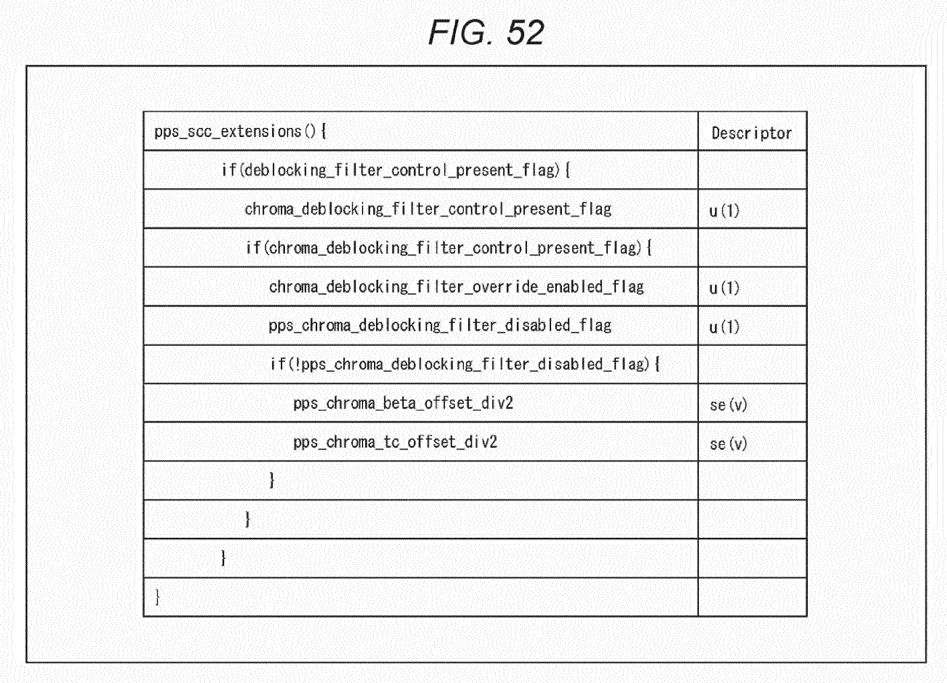

A more specific example will be described. As illustrated in Fig. 52, for example, in the picture parameter set, only when a value of deblocking_filter_control_present_flag is true ("1"), chroma_deblocking_filter_control_present_flag may be set as the extended syntax element, and only when a value of chroma_deblocking_filter_control_present_flag is true (for example, "1"), chroma_deblocking_filter_override_enabled_flag and pps_chroma_deblocking_filter_disabled_flag may be set as the extended syntax element.

Further, only when a value of pps_chroma_deblocking_filter_disabled_flag is false (for example, "0"), pps_chroma_beta_offset_div2 and pps_chroma_tc_offset_div2 may be set as the extended syntax element.

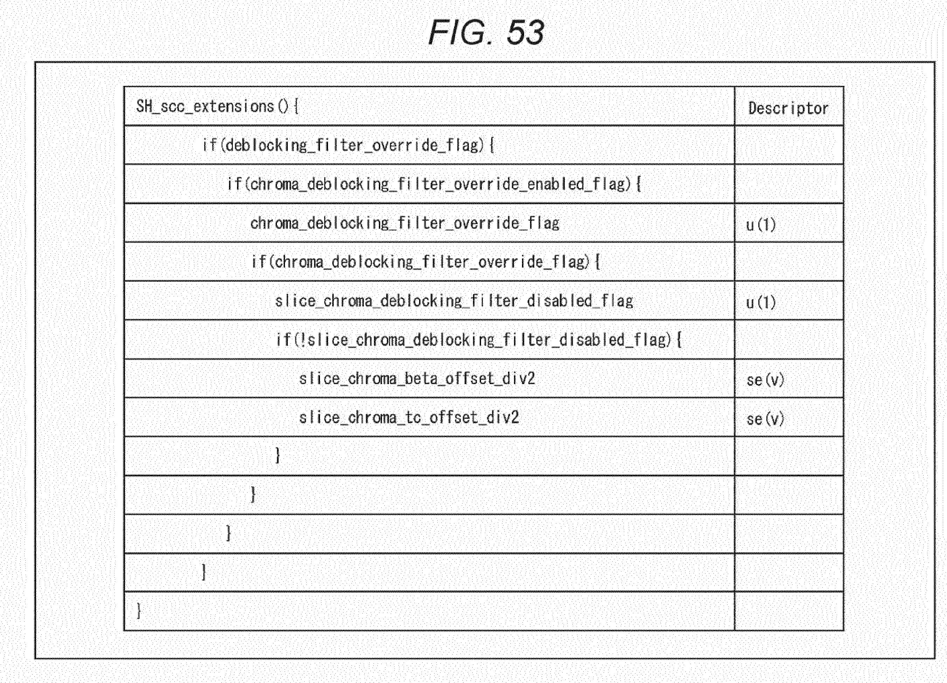

Further, as illustrated in Fig. 53, for example, in the slice header, only when a value of deblocking_filter_override_flag is true ("1"), and a value of chroma_deblocking_filter_override_enabled_flag set in the picture parameter set to which the slice header belongs is true (for example, "1"), chroma_deblocking_filter_override_flag may be set as the extended syntax element, and only when a value of chroma_deblocking_filter_override_flag is true (for example, "1"), slice_chroma_deblocking_filter_disabled_flag may be set as the extended syntax element.

Further, only when a value of slice_chroma_deblocking_filter_disabled_flag is false (for example, "0"), slice_chroma_beta_offset_div2 and slice_chroma_tc_offset_div2 may be set as the extended syntax element.

Accordingly, it is possible to omit the control information for controlling the deblocking filter process for the chroma which is explicitly unnecessary in the header information of each layer, and it is possible to omit the control information for controlling the deblocking filter process for the chroma for the slice in which it is unnecessary to control the deblocking filter process for the chroma independently of the deblocking filter process for the luma as well, it is possible to suppress an increase in the coding amount accordingly and suppress a reduction in the encoding efficiency.

### <Image encoding device, header information generation unit, and loop filter>

In this case, a configuration of the image encoding device which is one aspect of the image processing device to which the present technology is applied is similar to that of the first embodiment (Fig. 8). Further, in this case, a configuration of the header information generation unit 131 is similar to that of the seventh embodiment (Fig. 44). Further, in this case, a configuration of the loop filter 120 is similar to that of the first embodiment (Fig. 10).

### <Flow of encoding process>

Further, in this case, a flow of the encoding process performed by the image encoding device 100 is similar to that of the first embodiment (Fig. 11).

### <Flow of header information generation process>

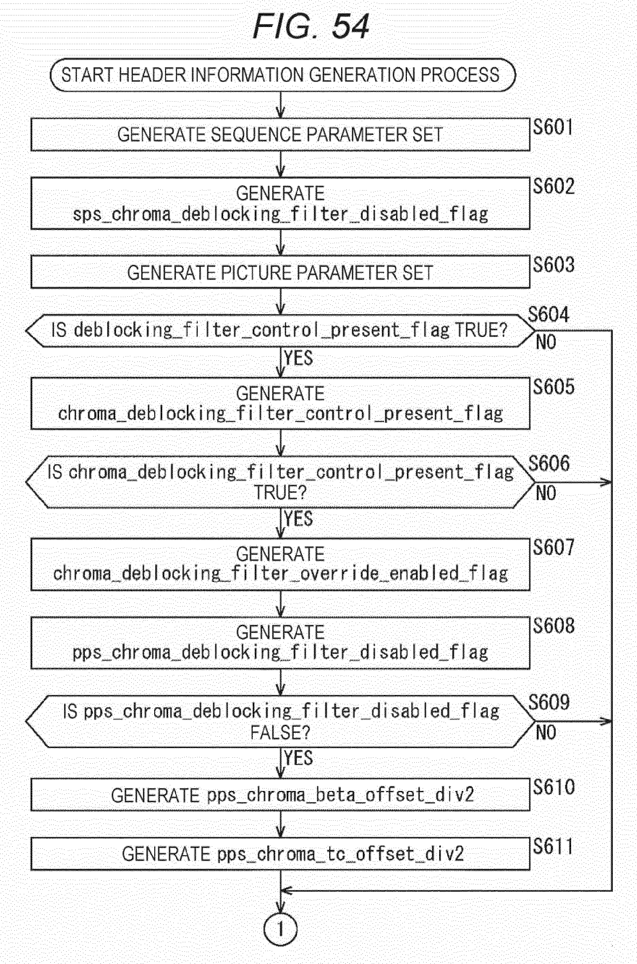

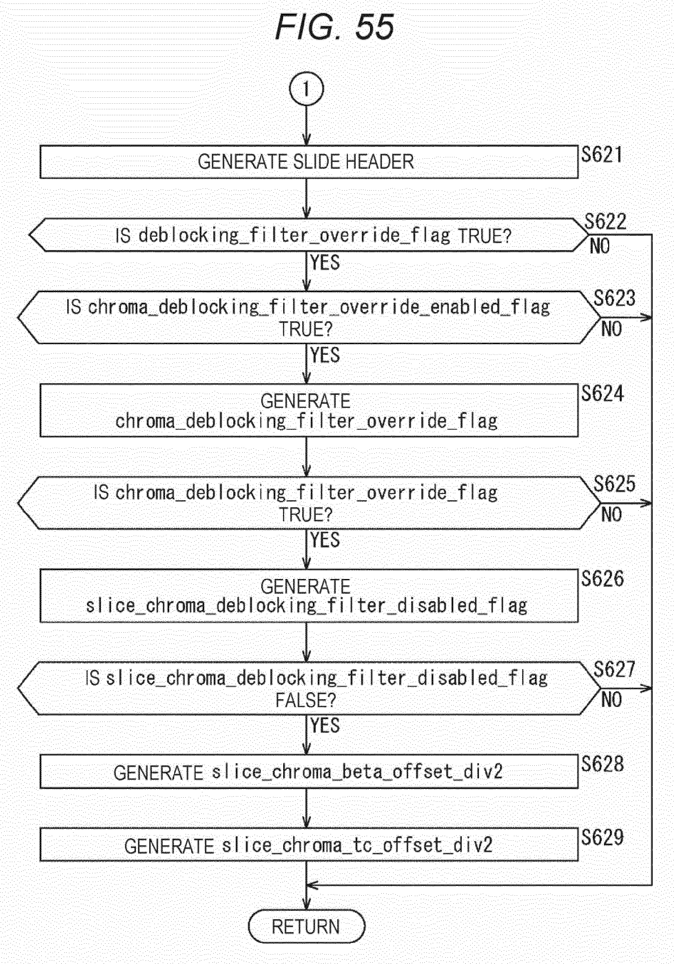

Next, an example of a flow of the header information generation process performed in step S101 of the encoding process in this case will be described with reference to flowcharts of Figs. 54 and 55.

When the header information generation process starts, a process of steps S601 and S602 is performed similarly to the process of steps S481 and S482 of Fig. 45. When the process of step S602 ends, the process proceeds to step S603.

A process of steps S603 and S604 is performed similarly to the process of steps S371 and S372 of Fig. 35. When a value of deblocking_filter_control_present_flag is determined to be true ("1") in step S604, the process proceeds to step S605.

A process of steps S605 to S611 is performed similarly to the process of steps S484 to S490 of Fig. 45.

When the process of step S611 ends, the process proceeds to step S621 of Fig. 55. Further, when pps_chroma_deblocking_filter_disabled_flag is true (for example, "1") in step S609 of Fig. 54, the process proceeds to step S621 of Fig. 55. Further, when a value of chroma_deblocking_filter_control_present_flag is determinedtobe false ("0") in step S606 of Fig. 54, the process proceeds to step S621 of Fig. 55. Further, when a value of deblocking_filter_control_present_flag is determined to be false ("0") in step S604 of Fig. 54, the process proceeds to step S621 of Fig. 55.

A process of steps S621 and S622 of Fig. 55 is performed similarly to the process of steps S376 and S377 of Fig. 35. When a value of deblocking_filter_override_flag is determined to be true ("1") in step S622 of Fig. 55, the process proceeds to step S623.

A process of steps S623 to S629 is performed similarly to the process of steps S502 to S508 of Fig. 46.

When the process of step S629 ends, the header information generation process ends, and the process returns to Fig. 11. Further, when slice_chroma_deblocking_filter_disabled_flag is true (for example, "1") in steps S627, the header information generation process ends, and the process returns to Fig. 11. Further, when a value of chroma_deblocking_filter_override_flag is determined to be false ("0") in step S625, the header information generation process ends, and the process returns to Fig. 11. Further, when a value of chroma_deblocking_filter_override_enabled_flag is determined to be false ("0") in step S623, the header information generation process ends, and the process returns to Fig. 11. Further, when a value of deblocking_filter_override_flag is determined to be false ("0") in step S622, the header information generation process ends, and the process returns to Fig. 11.

When the header information generation process is performed as described above, the image encoding device 100 (the header information generation unit 131) can omit the control information for controlling the deblocking filter process for the chroma for the slice in which the deblocking filter process for the chroma is explicitly unnecessary and omit the control information for controlling the deblocking filter process for the chroma for the slice in which it is unnecessary to control the deblocking filter process for the chroma independently of the deblocking filter process for the luma as well. Thus, by applying the present technology, the image encoding device 100 (the header information generation unit 131) can suppress an increase in the coding amount while suppressing a reduction in the image quality and thus suppress a reduction in the encoding efficiency.

### <Flow of loop filter process>

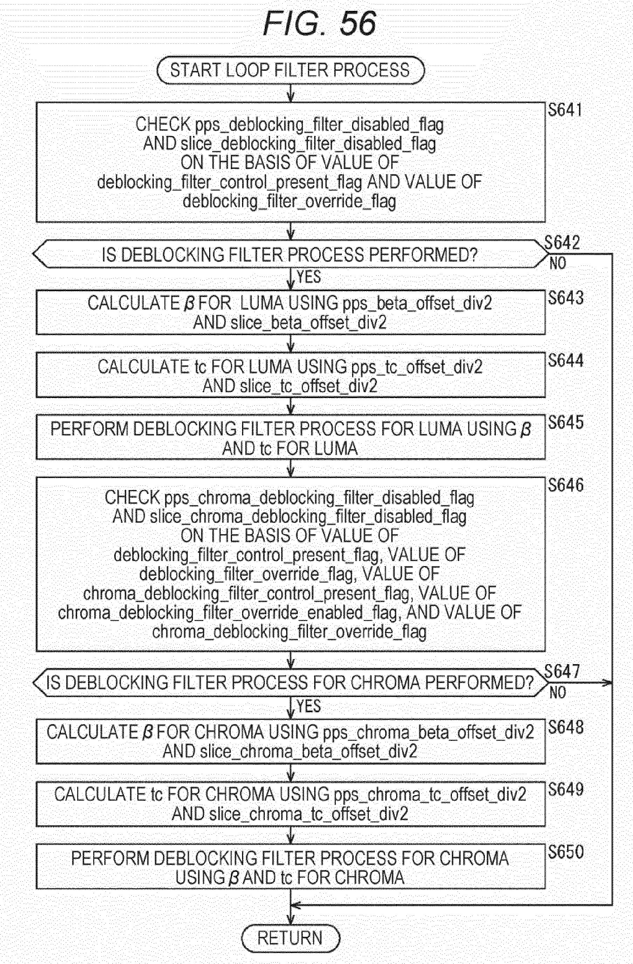

Next, an example of a flow of the loop filter process performed in step S112 of the encoding process in this case will be described with reference to a flowchart of Fig. 56.

When the loop filter process starts, a process of steps S641 to S645 is performed similarly to the process of steps S521 to S525 of Fig. 47.

In step S646, the deblocking filter control unit 181 checks a value of pps_chroma_deblocking_filter_disabled_flag and a value of slice_chroma_deblocking_filter_disabled_flag on the basis of a value of deblocking_filter_control_present_flag, a value of deblocking_filter_override_flag, a value of chroma_deblocking_filter_control_present_flag, a value of chroma_deblocking_filter_override_enabled_flag, and a value of chroma_deblocking_filter_override_flag included in the header information.

A process of steps S647 to S650 is performed similarly to the process of steps S527 to S530 of Fig. 47.

When the process of step S650 ends, the loop filter process ends, and the process returns to Fig. 11. Further, when the deblocking filter process for the chroma is determined not to be performed in step S647, the loop filter process ends, and the process returns to Fig. 11. Further, when the deblocking filter process is determined not to be performed in step S642, the loop filter process ends, and the process returns to Fig. 11.

When the loop filter process is performed as described above, the image encoding device 100 (the loop filter 120) can omit reference to the control information for controlling the deblocking filter process for the chroma for the slice in which the deblocking filter process for the chroma is explicitly unnecessary and omit reference to the control information for controlling the deblocking filter process for the chroma for the slice in which it is unnecessary to control the deblocking filter process for the chroma independently of the deblocking filter process for the luma as well. Thus, by applying the present technology, the image encoding device 100 (the loop filter 120) can suppress an increase in a processing load while suppressing a reduction in the image quality.

### <Image decoding device and loop filter>

In this case, a configuration of the image decoding device which is one aspect of the image processing device to which the present technology is applied is similar to that of the first embodiment (Fig. 14). Further, in this case, a configuration of the loop filter 216 is also similar to that of the first embodiment (Fig. 15).

### <Flow of decoding process>

Further, in this case, a flow of the decoding process performed by the image decoding device 200 is similar to that of the first embodiment (Fig. 16).

In other words, in step S208 of the decoding process, the loop filter 216 performs the loop filter process similarly to the example of the loop filter process performed by the loop filter 120 of the image encoding device 100 described above with reference to the flowchart of Fig. 56. In other words, the description of the example of the flow of the loop filter process illustrated in Fig. 56 can be also applied to description of the loop filter process performed by the loop filter 216 (that is, the process of step S208 of the decoding process in this case).

In other words, the image decoding device 200 (the loop filter 216) can omit reference to the control information for controlling the deblocking filter process for the chroma for the slice in which the deblocking filter process for the chroma is explicitly unnecessary and omit reference to the control information for controlling the deblocking filter process for the chroma for the slice in which it is unnecessary to control the deblocking filter process for the chroma independently of the deblocking filter process for the luma as well. Thus, by applying the present technology, the image decoding device 200 (the loop filter 216) can suppress an increase in a processing load while suppressing a reduction in the image quality.

Note that the above-described generation of the control information for controlling the deblocking filter process for the chroma according to the value of the control parameter related to the existing deblocking filter and the value of the control parameter related to the deblocking filter for the chroma can be performed in the header information of an arbitrary layer and may be performed in only one of the picture parameter set and the slice header or may be performed in any other header information, for example.

Note that in the fifth to ninth embodiments, for example, the syntax element related to the parameter β or the parameter tC such as pps_beta_offset_div2, pps_tc_offset_div2, slice_beta_offset_div2, or slice_tc_offset_div2 is set, but the syntax element related to the parameter β or the parameter tC may have any value as long as the parameter β or the parameter tC can be derived.

For example, a value corresponding to a difference value between the parameter β (or the parameter tC) of the deblocking filter for the luma and the parameter β (or the parameter tC) of the deblocking filter for the chroma (or the parameter tC) (another value calculated on the basis of the difference value) may be used as the syntax element related to the parameter β or the parameter tC for the chroma.

### <10. Tenth embodiment>

### <Control of generation of control information for each area>

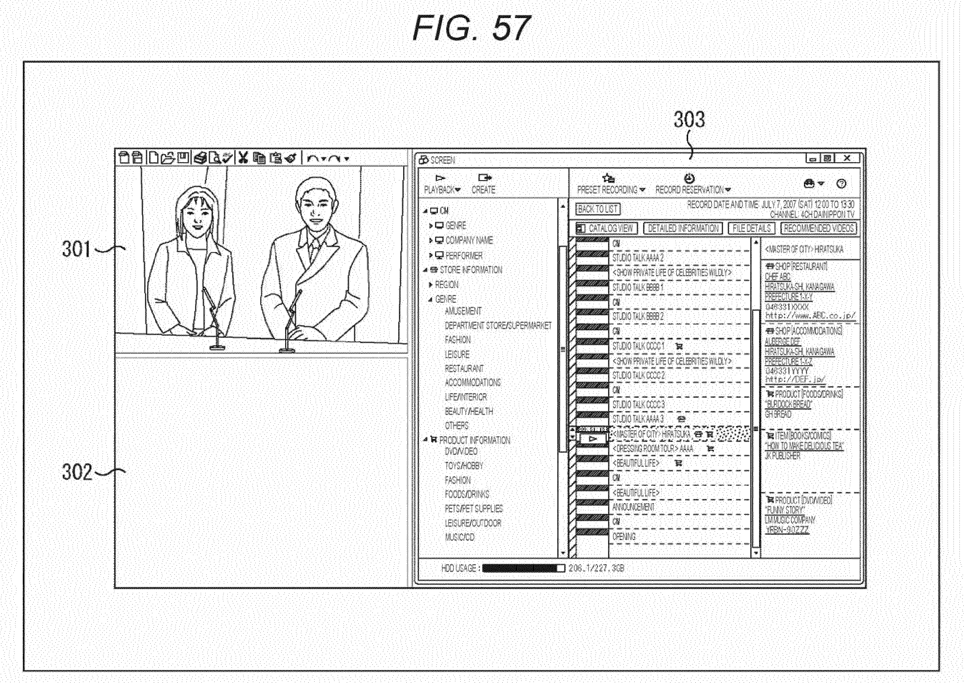

An example of a computer screen is illustrated in Fig. 57. Since a computer with a multitasking function can perform a plurality of processes in parallel, a natural image and screen content may be displayed on one screen together in a computer screen which is a display screen thereof as in an example of Fig. 57. In the example of Fig. 57, a moving image (a so-called video image) including a natural image is displayed in a window displayed in a partial area 301 of the computer screen. Further, a background image of the computer screen (a so-called desktop background) is displayed on a partial area 302, and for example, screen content generated by the computer is displayed in a window displayed in a partial area 303.

In this case, a characteristic of an image of the computer screen differs according to each partial area. In this regard, a method of controlling the deblocking filter process may be set for each area. For example, whether or not the deblocking filter process is performed, a degree of the filter strength which is set when the deblocking filter process is performed, whether or not control of the deblocking filter process for the chroma is performed independently of control of the deblocking filter process for the luma, whether or not the deblocking filter process for the chroma is performed when control of the deblocking filter process for the chroma is performed independently of control of the deblocking filter process for the luma, a degree of the filter strength which is set when the deblocking filter process for the chroma is performed, and the like may be set for each area.

In this case, the header control unit 141 of the header information generation unit 131 may perform such a setting on the basis of, for example, an image supplied from the screen rearrangement buffer 111 or an instruction input from the outside such as the user before the header information generation process.

### <Flow of deblocking filter control process>

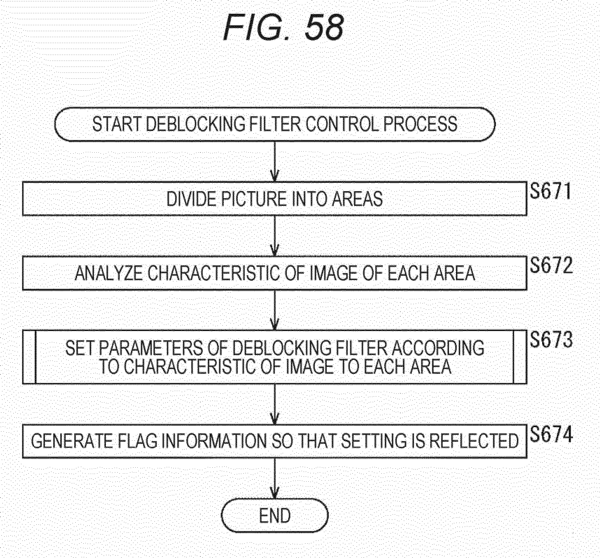

An example of a flow of the deblocking filter control process performed to perform such a setting through the header control unit 141 will be describedwith reference to a flowchart of Fig. 58.

When the deblocking filter control process starts, the header control unit 141 divides a picture to be currently processed into a plurality of partial areas in step S671. A division method is arbitrary. For example, the area division may be performed according to the details of an image to be currently processed. Further, for example, such an area division may be performed in units of tiles which are predetermined areas. In other words, an area to which each tile belongs may be selected.

In step S672, the header control unit 141 analyzes a characteristic of an image of each divided partial area. A method of analyzing the characteristic is arbitrary. For example, through the analysis, the header control unit 141 may specify whether an image of each partial area is a natural image or screen content or the like. Further, it is possible to specify, for example, the natural image or the screen content specifically by analyzing more finely. Of course, the analysis may be performed without using a concept such as a natural image or screen content. Further, the header control unit 141 may actually analyze an image to be currently processed according to a predetermined method or may obtain information related to a characteristic of an image from the outside or the like.

In step S673, the header control unit 141 sets the parameters of the deblocking filter to each partial area according to a characteristic of the image on the basis of an analysis result of step S672.

In step S674, the header control unit 141 controls the header information generation process and generates flag information so that a setting decided in step S673 is reflected. In other words, when the header information generation process is performed as in the above embodiments, the parameters are set on the basis of this setting.

When the process of step S674 ends, the deblocking filter control process ends.

### <Flow of parameter setting process>

A method of the process of step S673 of Fig. 58 (a method of setting the parameter) is arbitrary. For example, a setting of whether or not control of the deblocking filter process for the chroma is performed independently of control of the deblocking filter process for the luma may be performed according to whether or not an image of a partial area to be currently processed is a natural image.

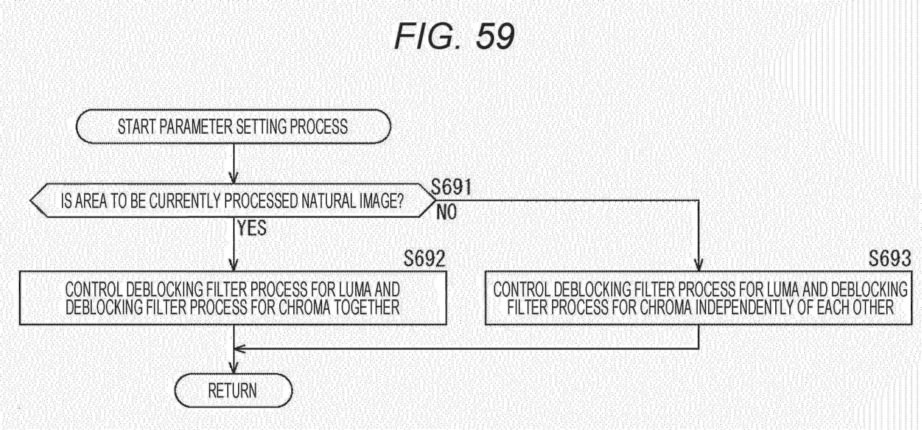

As an example of the parameter setting process performed in step S673 of Fig. 58, an example of a flow of a process in this case will be described with reference to a flowchart of Fig. 59.

When the parameter setting process starts, in step S691, the header control unit 141 determines whether or not an image of a partial area to be currently processed is a natural image. When an image of a partial area to be currently processed is determined to be a natural image, the process proceeds to step S692.

In step S692, the header control unit 141 performs the deblocking filter process for the luma and the deblocking filter process for the chroma together. In other words, the deblocking filter process for the luma and the deblocking filter process for the chroma are controlled using known control information for controlling the deblocking filter process which is used in the version 1 of HEVC. When the process of step S692 ends, the parameter setting process ends, and the process returns to Fig. 58.

Further, when an image of a partial area to be currently processed is determined not to be a natural image in step S691, the process proceeds to step S693.

In step S693, the header control unit 141 controls the deblocking filter process for the luma and the deblocking filter process for the chroma independently of each other. In other words, the deblocking filter process for the chroma is controlled using the control information for controlling the deblocking filter process for the chroma described in the above embodiments. When the process of step S693 ends, the parameter setting process ends, and the process returns to Fig. 58.

When the respective processes are performed as described above, the header control unit 141 can control the deblocking filter process for each area. Thus, for example, even when the natural image and the screen content are displayed together as in the example of Fig. 57, the deblocking filter process can be performed on each partial area using a more appropriate parameter, and thus the image encoding device 100 (the loop filter 120) or the image decoding device 200 (the loop filter 216) can suppress a reduction in the image quality.

### <11. Eleventh embodiment>

### <Control of generation of control information for each region>

Note that a method of controlling the deblocking filter process may be set on the basis of a color format of an image. Generally, when image data of a RGB format is encoded, G having a signal characteristic similar to Y in a YUV format is selected as a first component, but the remaining R and B components have different characteristics from U and V in the YUV format. Therefore, when the deblocking filter designed for YUV is applied without change, the image quality is likely to be lowered. Further, the encoding efficiency is also likely to be lowered accordingly.

Further, when encoding in the RGB format is performed using an SCC Codec, a possibility that a computer screen will be used as an input of an encoder without change is also high. In other words, a possibility that an image to be currently processed will be screen content is high.

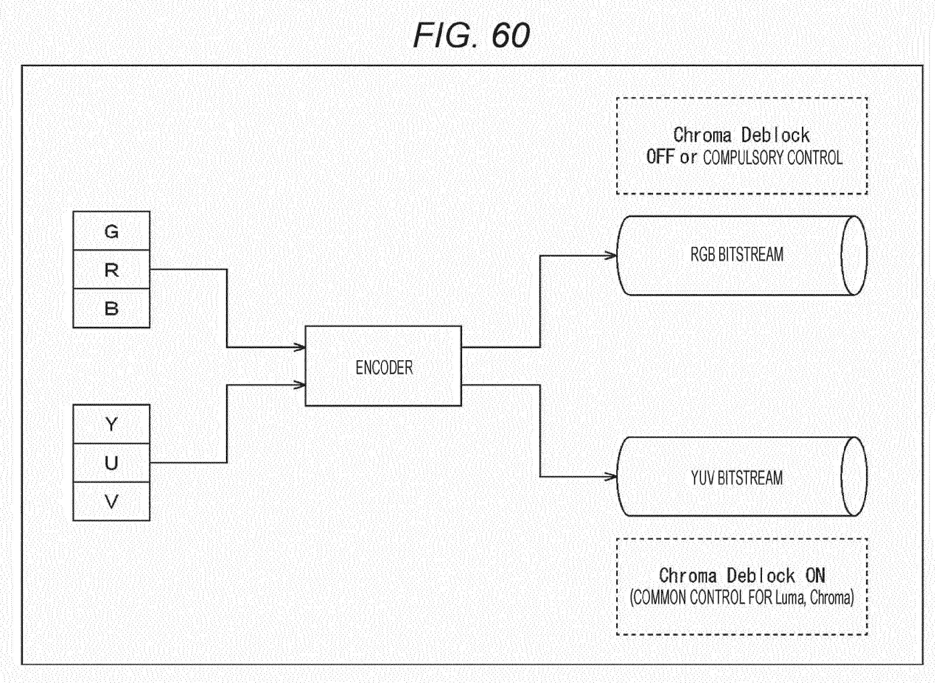

In this regard, when image data having a color format of RGB is encoded in the color format to generate a bitstream (RGB bitstream) as in an example illustrated in Fig. 60, the control information for controlling the deblocking filter process for the chroma may be generated and used as the header information of the bitstream (the encoded data). Further, when encoding is performed using a color format of YUV to generate a bitstream (YUV bitstream), the control information for controlling the deblocking filter process may be generated and used as the header information of the bitstream (the encoded data) so that the chroma and the luma are controlled together.

### <Flow of deblocking filter control process>

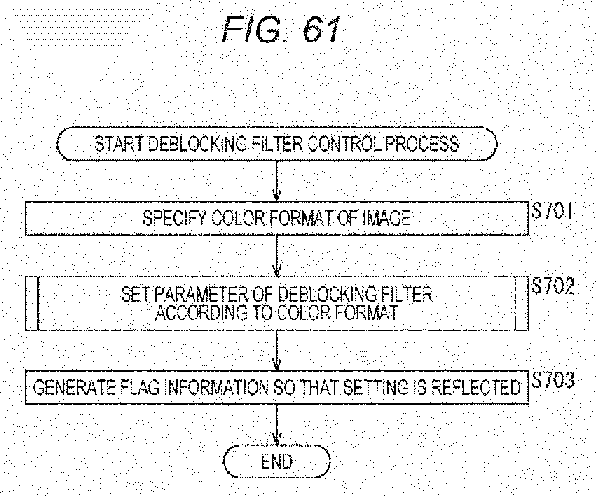

An example of a flow of the deblocking filter control process performed by the header control unit 141 in this case will be described with reference to a flowchart of Fig. 61.

When the deblocking filter control process starts, in step S701, the header control unit 141 specifies a color format of an image to be currently processed. A specifying method is arbitrary. For example, a color format may be specified on the basis of analysis of an image to be currently processed or may be specified on the basis of acquisition of information related to a color format of an image to be currently processed from the outside.

In step S702, the header control unit 141 sets a parameter of the deblocking filter according to the color format specified in step S701.

In step S703, the header control unit 141 controls the header information generation process such that flag information reflecting a setting decided in step S702 is generated. In other words, when the header information generation process is performed as in the above embodiments, the parameters are set on the basis of this setting.

When the process of step S703 ends, the deblocking filter control process ends.

### <Flow of parameter setting process>

A method of the process of step S702 in Fig. 61 (a method of setting the parameter) is arbitrary. For example, a setting of whether or not control of the deblocking filter process for the chroma is performed independently of control of the deblocking filter process for the luma may be performed according to whether or not a color format of an image to be currently processed is YUV.

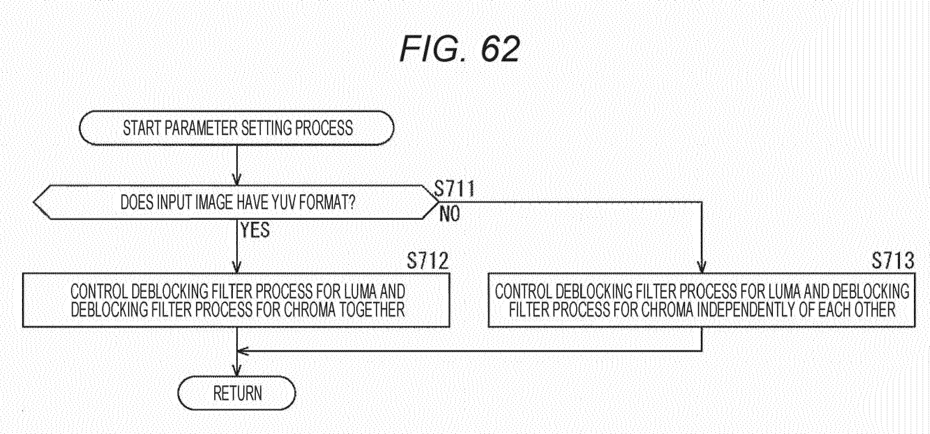

As an example of the parameter setting process performed in step S702 of Fig. 61, an example of a flow of a process in this case will be described with reference to a flowchart of Fig. 62.

When the parameter setting process starts, in step S711, the header control unit 141 determines whether or not a color format of an image to be currently processed is the YUV format. When a color format of an image to be currently processed is determined to be the YUV format, the process proceeds to step S712.

In step S712, the header control unit 141 controls the deblocking filter process for the luma and the deblocking filter process for the chroma together. In other words, the deblocking filter process for the luma and the deblocking filter process for the chroma are controlled using known control information for controlling the deblocking filter process which is used in the version 1 of HEVC. When the process of step S692 ends, the parameter setting process ends, and the process returns to Fig. 61.

Further, when a color format of an image to be currently processed is determined not to be the YUV format in step S711, the process proceeds to step S713.

In step S713, the header control unit 141 controls the deblocking filter process for the luma and the deblocking filter process for the chroma independently of each other. In other words, the deblocking filter process for the chroma is controlled using the control information for controlling the deblocking filter process for the chroma described in the above embodiments. When the process of step S713 ends, the parameter setting process ends, and the process returns to Fig. 61.

When the respective processes are performed as described above, the header control unit 141 can control the deblocking filter process according to a color format. Thus, the image encoding device 100 (the loop filter 120) or the image decoding device 200 (the loop filter 216) can suppress a reduction in the image quality more easily.

The present technology can be applied to all image decoding devices that can decode encoded data obtained by encoding image data and performs a filter process at the time of decoding.

Further, the present technology can be applied to image decoding devices used when image information (bitstream) compressed by an orthogonal transform such as a discrete cosine transform and motion compensation as in, for example, MPEG, H.26x, or the like is received via satellite broadcasting, a cable television, the Internet, or a network medium such as a mobile phone. Further, the present technology can be applied to image decoding devices used when processing is performed on an optical disk, a magnetic disk, or a storage medium such as a flash memory.

### <12. Twelfth embodiment>

### <Application to multi-view image encoding and multi-view image decoding>

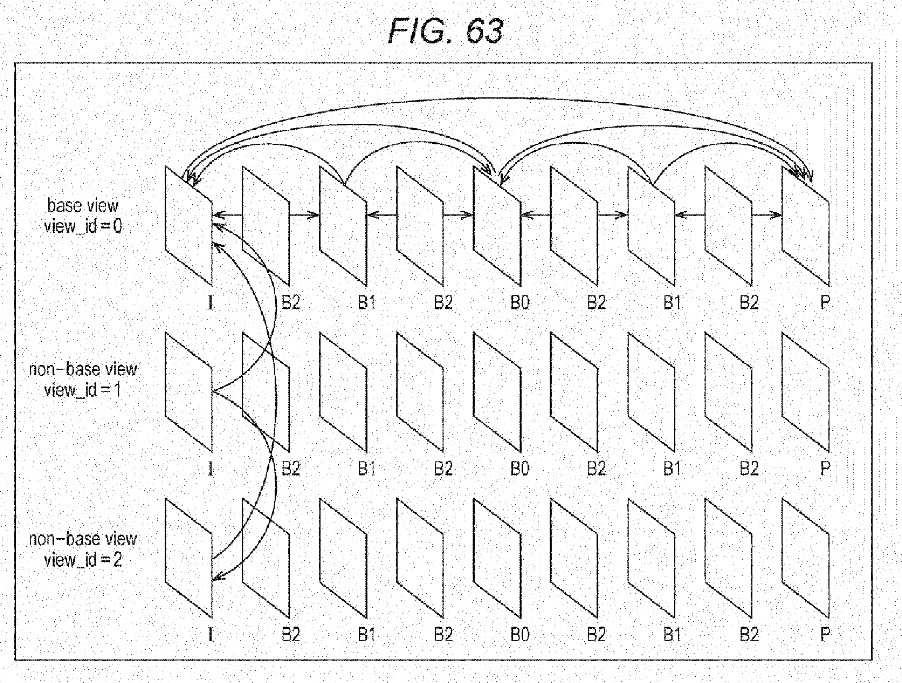

A series of processes described above can be applied to multi-view image decoding. Fig. 63 illustrates an example of a multi-view image encoding scheme.

A multi-view image includes images of a plurality of views as illustrated in Fig. 63. The plurality of views of the multi-view image include a base view in which encoding and decoding are performed using only an image of its own view without using information of other views and a non-base view in which encoding and decoding are performed using information of other views. The non-base view may be encoded or decoded using information of the base view or may be encoded or decoded using information of another non-base view.

When the multi-view image illustrated in Fig. 63 is encoded or decoded, the multi-view image is encoded for each view. Further, when encoded data obtained as a result is decoded, the encoded data of each view is decoded (that is, for each view). The methods described in the above embodiments may be applied to encoding or decoding of each view. Accordingly, it is possible to suppress a reduction in the image quality of an image of each view. In other words, even in the case of the multi-view image, similarly, it is possible to suppress a reduction in the image quality.

### <Multi-view image encoding device>

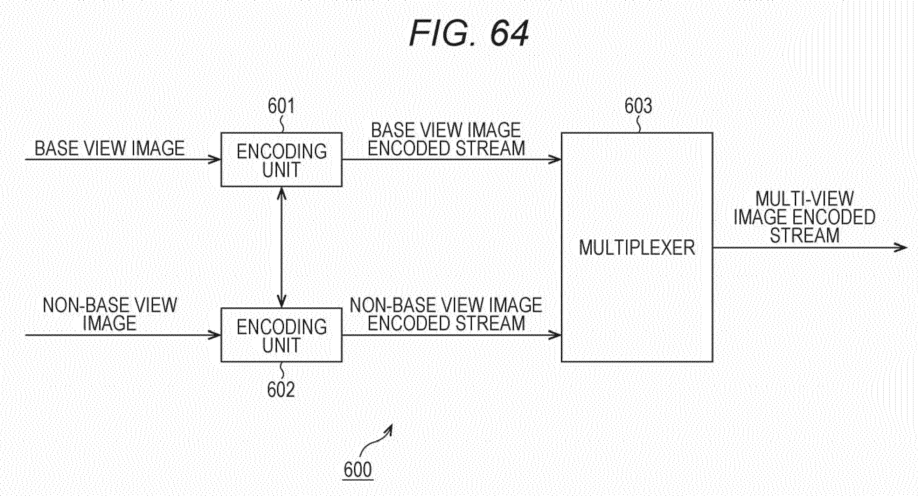

Fig. 64 is a diagram illustrating a multi-view image encoding device that performs the above-described multi-view image encoding. A multi-view image encoding device 600 includes an encoding unit 601, an encoding unit 602, and a multiplexer 603 as illustrated in Fig. 64.

The encoding unit 601 encodes a base view image, and generates a base view image encoded stream. The encoding unit 602 encodes a non-base view image, and generates a non-base view image encoded stream. The multiplexer 603 performs multiplexing of the base view image encoded stream generated by the encoding unit 601 and the non-base view image encoded stream generated by the encoding unit 602, and generates a multi-view image encoded stream.

For example, the image encoding device 100 described in the above embodiments may be applied as the encoding unit 601 and the encoding unit 602 of the multi-view image encoding device 600. Accordingly, the methods described in the above embodiments can be applied to encoding of the multi-view image. In other words, the multi-view image encoding device 600 can suppress a reduction in the image quality of the multi-view image.

### <Multi-view image decoding device>

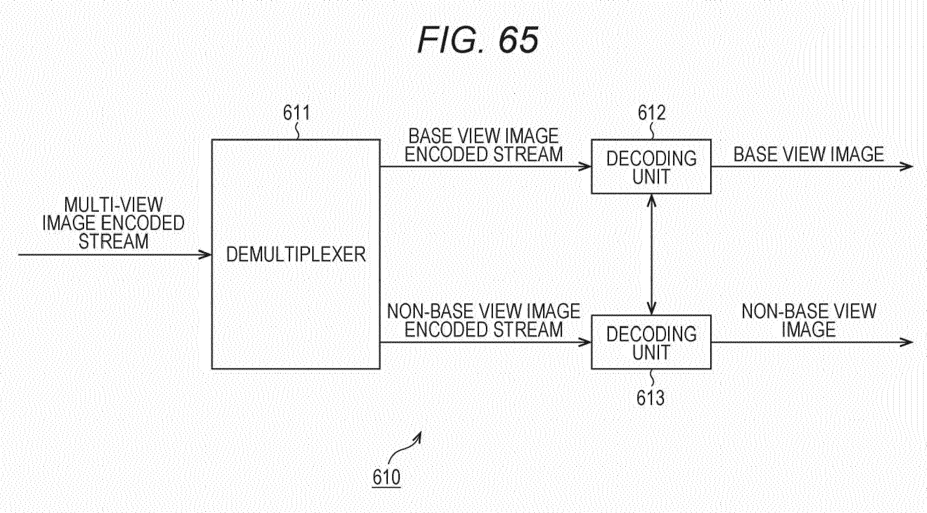

Fig. 65 is a diagram illustrating a multi-view image decoding device that performs the above-described multi-view image decoding. A multi-view image decoding device 610 includes a demultiplexer 611, a decoding unit 612, and a decoding unit 613 as illustrated in Fig. 65.

The demultiplexer 611 performs demultiplexing of the multi-view image encoded stream obtained by multiplexing the base view image encoded stream and the non-base view image encoded stream, and extracts the base view image encoded stream and the non-base view image encoded stream. The decoding unit 612 decodes the base view image encoded stream extracted by the demultiplexer 611, and obtains the base view image. The decoding unit 613 decodes the non-base view image encoded stream extracted by the demultiplexer 611, and obtains the non-base view image.

For example, the image decoding device 200 described in the above embodiments may be applied as the decoding unit 612 and the decoding unit 613 of the multi-view image decoding device 610. Accordingly, the methods described in the above embodiments can be applied to decoding of the encoded data of the multi-view image. In other words, the multi-view image decoding device 610 can suppress a reduction in the image quality of the multi-view image.

### <13. Thirteenth embodiment>

### <Application to scalable image encoding and scalable image decoding>

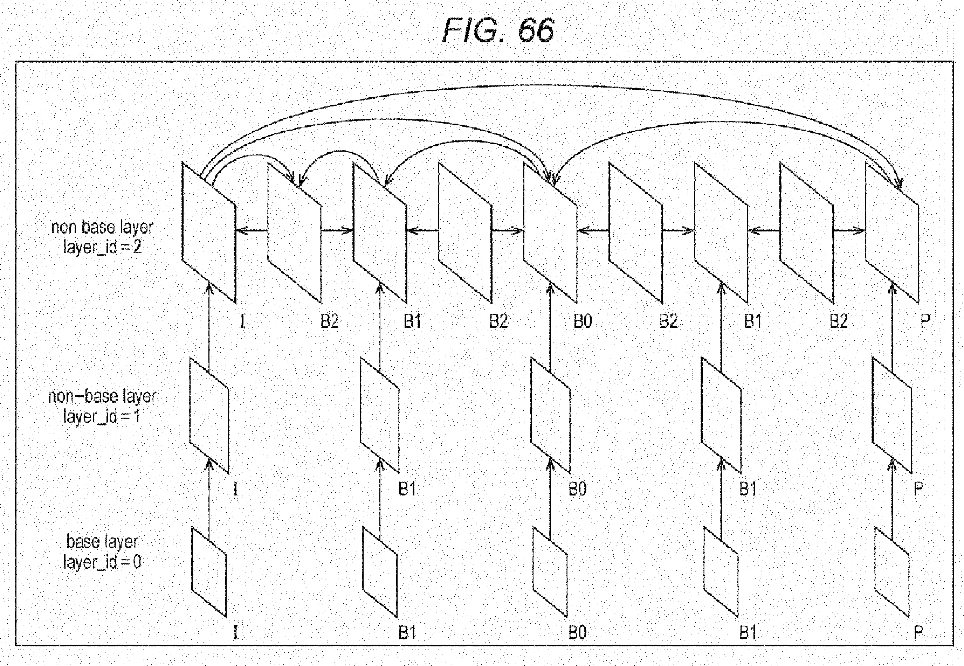

Further, a series of processes described above can be applied to scalable image decoding (scalable decoding). Fig. 66 illustrates an example of a scalable image encoding scheme.

The scalable image encoding (scalable encoding) is a scheme in which an image is divided into a plurality of layers (hierarchized) so that image data has a predetermined scalability function for a certain parameter, and encoding is performed for each layer. The scalable image decoding (scalable decoding) is decoding corresponding to the scalable image encoding.

For hierarchization of an image, an image is divided into a plurality of images (layers) on the basis of a certain parameter having a scalability function as illustrated in Fig. 66. In other words, a hierarchized image (a scalable image) includes images of a plurality of layers that differ in a value of the certain parameter from one another. The plurality of layers of the scalable image include a base layer in which encoding and decoding are performed using only an image of its own layer without using images of other layers and non-base layers (which are also referred to as enhancement layers) in which encoding and decoding are performed using images of other layers. As the non-base layer, an image of the base layer may be used, and an image of any other non-base layer may be used.

Generally, the non-base layer is configured with data (differential data) of a differential image between its own image and an image of another layer so that the redundancy is reduced. For example, when one image is hierarchized into two layers, that is, a base layer and a non-base layer (which is also referred to as an enhancement layer), an image of a quality lower than an original image is obtained when only data of the base layer is used, and an original image (that is, a high quality image) is obtained when both data of the base layer and data of the non-base layer are combined.

When an image is hierarchized as described above, images of various qualities can be obtained depending on a situation easily. For example, for a terminal having a low processing capability such as a mobile terminal, image compression information of only the base layer is transmitted, and a moving image of low spatial and temporal resolutions or a low quality is reproduced, and for a terminal having a high processing capability such as a television or a personal computer, image compression information of the enhancement layer as well as the base layer is transmitted, and a moving image of high spatial and temporal resolutions or a high quality is reproduced. In otherwords, without performing the transcoding process, image compression information according to a capability of a terminal or a network can be transmitted from a server.

When the scalable image illustrated in Fig. 66 is encoded and decoded, the scalable image is encoded for each layer. Further, when the encoded data obtained as a result is decoded, the encoded data of each layer is decoded (that is, for each layer). The methods described in the above embodiments may be applied to encoding and decoding of each layer. Accordingly, it is possible to suppress a reduction in the image quality of an image of each layer. In other words, even in the case of the scalable image, similarly, it is possible to suppress a reduction in the image quality.

### <scalable parameter>

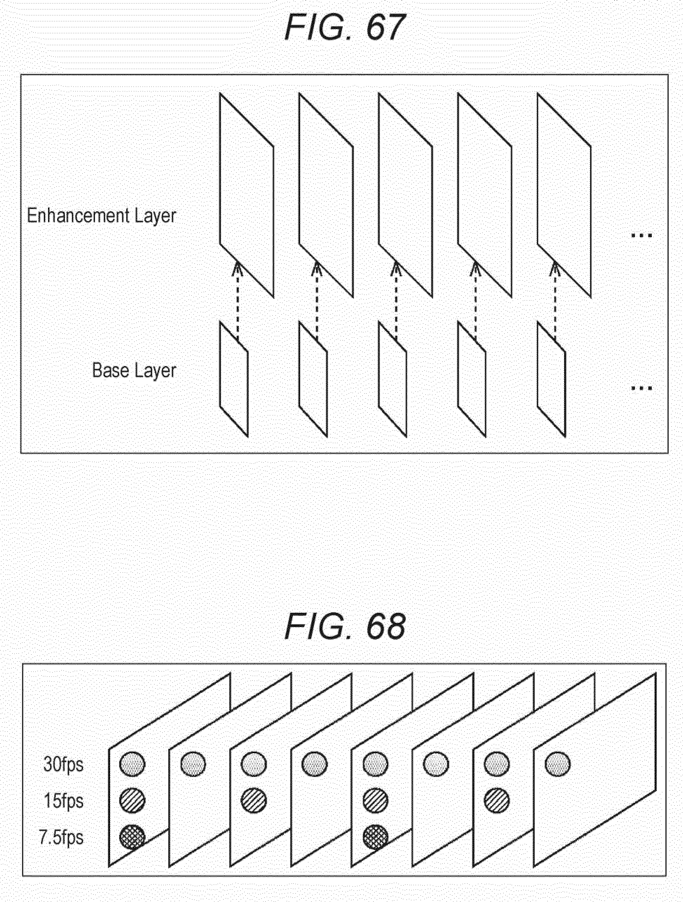

In the scalable image encoding and the scalable image decoding (the scalable encoding and the scalable decoding), any parameter can have a scalability function. For example, a spatial resolution may be used as the parameter (spatial scalability) as illustrated in Fig. 67. In the case of the spatial scalability, respective layers have different image resolutions. In other words, each picture is hierarchized into two layers, that is, a base layer of a resolution spatially lower than that of an original image and an enhancement layer that is combined with an image of the base layer to obtain an original image (an original spatial resolution) as illustrated in Fig. 67. Of course, the number of layers is an example, and each picture can be hierarchized into an arbitrary number of layers.

Further, as a parameter having such scalability, for example, a temporal resolution may be applied (temporal scalability) as illustrated in Fig. 68. In the case of the temporal scalability, respective layers having different frame rates. In other words, in this case, each picture is hierarchized into layers having different frame rates, a moving image of a high frame rate can be obtained by adding a layer of a high frame rate to a layer of a low frame rate, and an original moving image (an original frame rate) can be obtained by adding all layers as illustrated in Fig. 68. Of course, the number of layers is an example, and each picture can be hierarchized into an arbitrary number of layers.

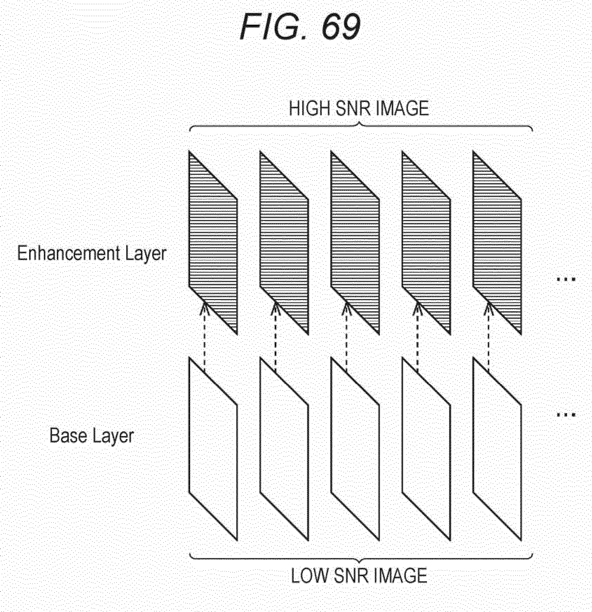

Further, as a parameter having such scalability, for example, a signal-to-noise ratio (SNR) may be applied (SNR scalability). In the case of the SNR scalability, respective layers having different SNRs. In other words, in this case, each picture is hierarchized into two layers, that is, a base layer of a SNR lower than that of an original image and an enhancement layer that is combined with an image of the base layer to obtain an original image (an original SNR) as illustrated in Fig. 69. In other words, for base layer image compression information, information related to an image of a low PSNR is transmitted, and a high PSNR image can be reconstructed by adding enhancement layer image compression information to the base layer image compression information. Of course, the number of layers is an example, and each picture can be hierarchized into an arbitrary number of layers.

A parameter other than the above-described examples may be applied as a parameter having scalability. For example, there is a bit-depth scalability in which the base layer includes an 8-bit image, and a 10-bit image can be obtained by adding the enhancement layer to the base layer.

Further, there is a chroma scalability in which the base layer includes a component image of a 4:2:0 format, and a component image of a 4:2:2 format can be obtained by adding the enhancement layer to the base layer.

### <Scalable image encoding device>

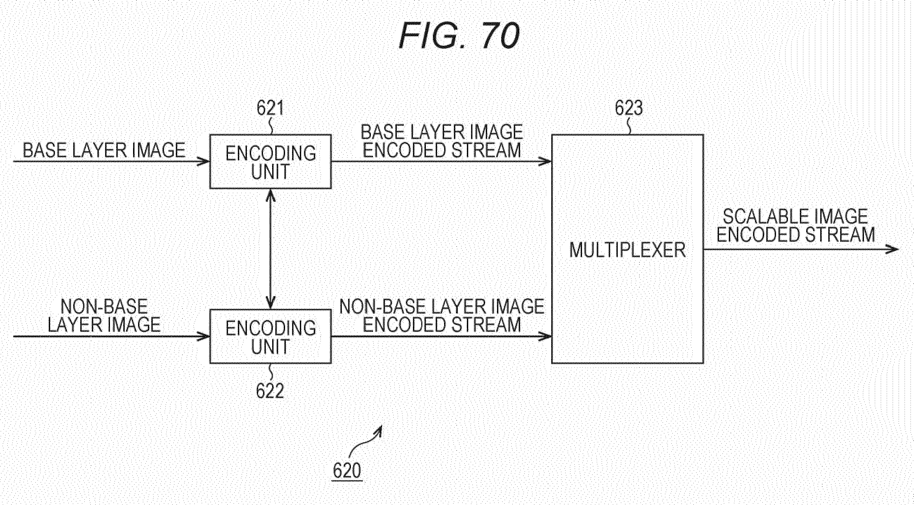

Fig. 70 is a diagram illustrating a scalable image encoding device that performs the above-described scalable image coding. A scalable image encoding device 620 includes an encoding unit 621, an encoding unit 622, and a multiplexer 623 as illustrated in Fig. 70.

The encoding unit 621 encodes a base layer image, and generates a base layer image encoded stream. The encoding unit 622 encodes a non-base layer image, and generates a non-base layer image encoded stream. The multiplexer 623 performs multiplexing of the base layer image encoded stream generated by the encoding unit 621 and the non-base layer image encoded stream generated by the encoding unit 622, and generates a scalable image encoded stream.

For example, the image encoding device 100 described in the above embodiments may be applied as the encoding unit 621 and the encoding unit 622 of the scalable image encoding device 620. Accordingly, the methods described in the above embodiments can be applied to encoding of the scalable image. In other words, the scalable image encoding device 620 can suppress a reduction in the image quality of the scalable image.

### <Scalable image decoding device>

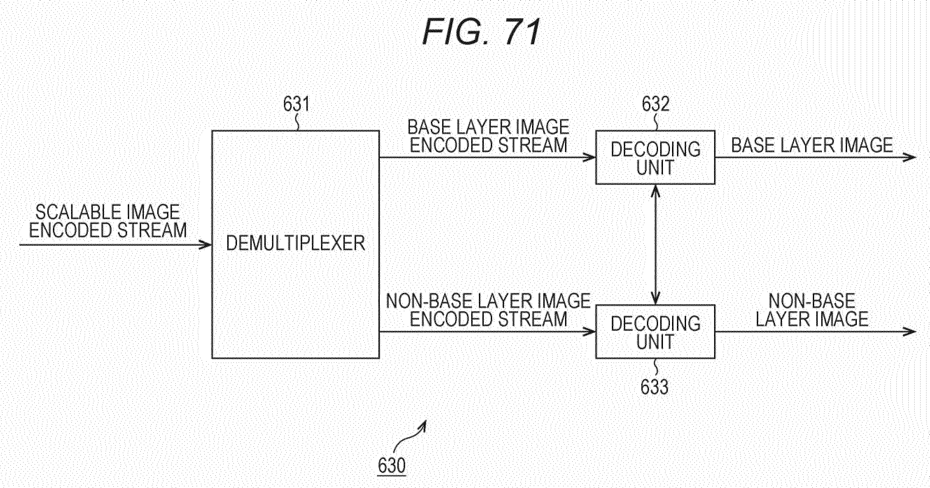

Fig. 71 is a diagram illustrating a scalable image decoding device that performs the above-described scalable image decoding. A scalable image decoding device 630 includes a demultiplexer 631, a decoding unit 632, and a decoding unit 633 as illustrated in Fig. 71.

The demultiplexer 631 performs demultiplexing of the scalable image encoded stream obtained by multiplexing the base layer image encoded stream and the non-base layer image encoded stream, and extracts the base layer image encoded stream and the non-base layer image encoded stream. The decoding unit 632 decodes the base layer image encoded stream extracted by the demultiplexer 631, and obtains the base layer image. The decoding unit 633 decodes the non-base layer image encoded stream extracted by the demultiplexer 631, and obtains the non-base layer image.

For example, the image decoding device 200 described in the above embodiments may be applied to the decoding unit 632 and the decoding unit 633 of the scalable image decoding device 630. Accordingly, the methods described in the above embodiments can be applied to decoding of the encoded data of the scalable image. In other words, the scalable image decoding device 630 ca suppress a reduction in the image quality of the scalable image.

### <14. Fourteenth embodiment>

### <Computer>

A series of processes described above may be executed by hardware or software. When the series of processes is executed by software, a program configuring the software is installed in a computer. Here, examples of the computer include a computer incorporated into dedicated hardware and a general purpose personal computer that includes various programs installed therein and is capable of executing various kinds of functions.

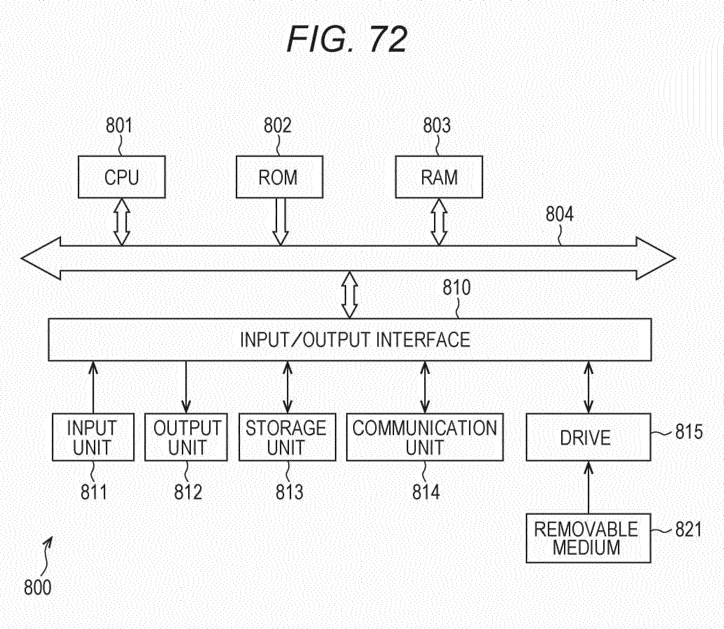

Fig. 72 is a block diagram illustrating an exemplary hardware configuration of a computer that executes the above-described series of processes by a program.

In a computer 800 illustrated in Fig. 72, a central processing unit (CPU) 801, a read only memory (ROM) 802, and a random access memory (RAM) 803 are connected with one another via a bus 804.

An input/output (I/O) interface 810 is also connected to the bus 804. An input unit 811, an output unit 812, a storage unit 813, a communication unit 814, and a drive 815 are connected to the input/output interface 810.

For example, the input unit 811 includes a keyboard, a mouse, a microphone, a touch panel, an input terminal, and the like. For example, the output unit 812 includes a display, a speaker, an output terminal, and the like. For example, the storage unit 813 includes a hard disk, a RAM disk, a non-volatile memory, and the like. For example, the communication unit 814 includes a network interface. The drive 815 drives a removable medium 821 such as a magnetic disk, an optical disk, a magneto optical disk, or a semiconductor memory.

In the computer having the above configuration, the CPU 801 executes the above-described series of processes, for example, by loading the program stored in the storage unit 813 onto the RAM 803 through the input/output interface 810 and the bus 804 and executing the program. The RAM 803 also appropriately stores, for example, data necessary when the CPU 801 executes various kinds of processes.

For example, the program executed by the computer (the CPU 801) may be recorded in the removable medium 821 as a package medium or the like and applied. In this case, the removable medium 821 may mounted to the drive 815, and then the program may be installed in the storage unit 813 through the input/output interface 810.

Further, the program may be provided via a wired or wireless transmission medium such as a local area network (LAN), the Internet, or digital satellite broadcasting. In this case, the program may be received by the communication unit 814 and then installed in the storage unit 813.

In addition, the program may be installed in the ROM 802 or the storage unit 813.

Note that the program may be a program in which the processes are chronologically performed in the order described in this disclosure or may be a program in which the processes are performed in parallel or at necessary timings such as called timings.

Further, in the present specification, steps describing a program recorded in a recording medium include not only processes chronologically performed according to a described order but also processes that are not necessarily chronologically processed but performed in parallel or individually.

In addition, in this disclosure, a system means a set of two or more configuration elements (devices, modules (parts), or the like) regardless of whether or not all configuration elements are arranged in a single housing. Thus, both a plurality of devices that are accommodated in separate housings and connected via a network and a single device in which a plurality of modules are accommodated in a single housing are systems.

Further, a configuration described as one device (or processing unit) may be divided into a plurality of devices (or processingunits). Conversely, a configuration described as a plurality of devices (or processing units) may be integrated into one device (or processing unit). Further, a configuration other than the above-described configuration may be added to a configuration of each device (or each processing unit). In addition, when a configuration or an operation in an entire system is substantially the same, a part of a configuration of a certain device (or processing unit) may be included in a configuration of another device (or another processing unit).

The preferred embodiments of the present disclosure have been described above with reference to the accompanying drawings, whilst the technical scope of the present disclosure is not limited to the above examples. A person skilled in the art of the present disclosure may find various alterations and modifications within the scope of the appended claims, and it should be understood that they will naturally come under the technical scope of the present disclosure.

For example, the present technology may have a configuration of cloud computing in which a plurality of devices share and process one function together via a network.

Further, the steps described in the above flowcharts may be executed by a single device or may be shared and executed by a plurality of devices.

Furthermore, when a plurality of processes are included in a single step, the plurality of processes included in the single step may be executed by a single device or may be shared and executed by a plurality of devices.

For example, the image decoding devices according to the above embodiments can be appliedto satellite broadcasting, cable broadcasting such as cable televisions, transmitters or receivers in delivery on the Internet or delivery to terminals by cellular communications, recording devices that record images in a medium such as an optical disk, a magnetic disk, or a flash memory, or various electronic devices such as reproducing devices that reproduce images from a storage medium. Four application examples will be described below.

### <15. Fifteenth embodiment>

### <First application example: television receiver>

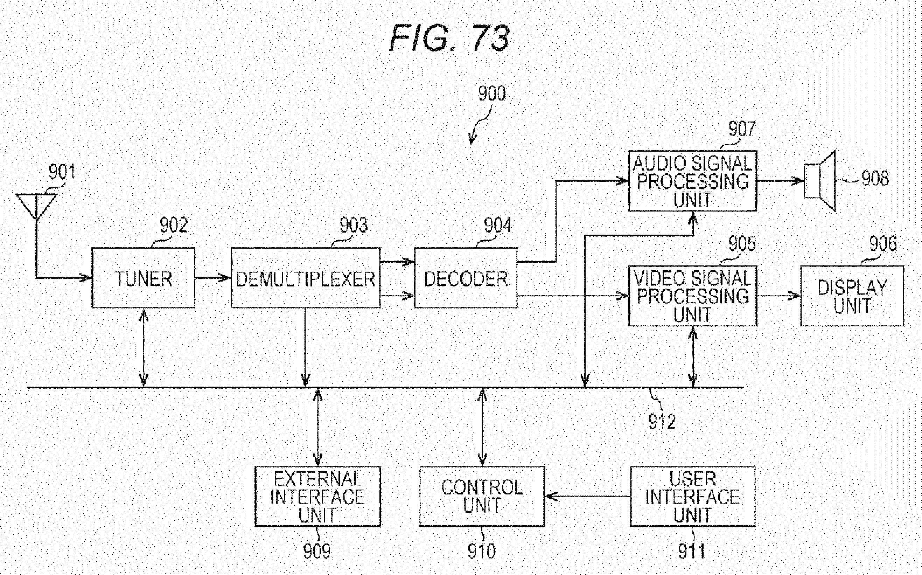

Fig. 73 illustrates an exemplary schematic configuration of a television device to which the above embodiment is applied. A television device 900 includes an antenna 901, a tuner 902, a demultiplexer 903, a decoder 904, a video signal processing unit 905, a display unit 906, an audio signal processing unit 907, a speaker 908, an external interface (I/F) unit 909, a control unit 910, a user interface (I/F) unit 911, and a bus 912.

The tuner 902 extracts a signal of a desired channel from a broadcast signal received through the antenna 901, and demodulates an extracted signal. Further, the tuner 902 outputs an encoded bit stream obtained by the demodulation to the demultiplexer 903. In other words, the tuner 902 receives an encoded stream including an encoded image, and serves as a transmitting unit in the television device 900.

The demultiplexer 903 demultiplexes a video stream and an audio stream of a program of a viewing target from an encoded bit stream, and outputs each demultiplexed stream to the decoder 904. Further, the demultiplexer 903 extracts auxiliary data such as an electronic program guide (EPG) from the encoded bit stream, and supplies the extracted data to the control unit 910. Note that, when the encoded bit stream has been scrambled, the demultiplexer 903 may perform descrambling.

The decoder 904 decodes the video stream and the audio stream input from the demultiplexer 903. The decoder 904 outputs video data generated by the decoding process to the video signal processing unit 905. Further, the decoder 904 outputs audio data generated by the decoding process to the audio signal processing unit 907.

The video signal processing unit 905 reproduces the video data input from the decoder 904, and causes a video to be displayed on the display unit 906. Further, the video signal processing unit 905 may causes an application screen supplied via a network to be displayed on the display unit 906. The video signal processing unit 905 may perform an additional process such as a noise reduction process on the video data according to a setting. The video signal processing unit 905 may generate an image of a graphical user interface (GUI) such as a menu, a button, or a cursor and cause the generated image to be superimposed on an output image.

The display unit 906 is driven by a drive signal supplied from the video signal processing unit 905, and displays a video or an image on a video plane of a display device (for example, a liquid crystal display, a plasma display, or an organic electroluminescence display (OELD) (an organic EL display)).

The audio signal processing unit 907 performs a reproduction process such as D/A conversion and amplification on the audio data input from the decoder 904, and outputs a sound through the speaker 908. Further, the audio signal processing unit 907 may perform an additional process such as a noise reduction process on the audio data.

The external interface unit 909 is an interface for connecting the television device 900 with an external device or a network . For example, the video stream or the audio stream received through the external interface unit 909 may be decoded by the decoder 904. In other words, the external interface unit 909 also undertakes a transmitting unit of the television device 900 that receives an encoded stream including an encoded image.

The control unit 910 includes a processor such as a CPU and a memory such as a RAM or a ROM. For example, the memory stores a program executed by the CPU, program data, EPG data, and data acquired via a network. For example, the program stored in the memory is read and executed by the CPU when the television device 900 is activated. The CPU executes the program, and controls an operation of the television device 900, for example, according to an operation signal input from the user interface unit 911.

The user interface unit 911 is connected with the control unit 910. For example, the user interface unit 911 includes a button and a switch used when the user operates the television device 900 and a receiving unit receiving a remote control signal. The user interface unit 911 detects the user's operation through the components, generates an operation signal, and outputs the generated operation signal to the control unit 910.

The bus 912 connects the tuner 902, the demultiplexer 903, the decoder 904, the video signal processing unit 905, the audio signal processing unit 907, the external interface unit 909, and the control unit 910 with one another.

In the television device 900 having the above configuration, the decoder 904 may have the function of the image decoding device 200 described above. In other words, the decoder 904 may decode the encoded data using the methods described in the above embodiments. Accordingly, the television device 900 can suppress a reduction in the image quality of an image obtained by decoding the received encoded bitstream.

Further, in the television device 900 having the above configuration, the video signal processing unit 905 may encodes, for example, image data supplied from the decoder 904 and output obtained encoded data to the outside of the television device 900 via the external interface unit 909. Further, the video signal processing unit 905 may have the function of the image encoding device 100. In other words, the video signal processing unit 905 may encode image data supplied from the decoder 904 using the methods described in the above embodiments. Accordingly, the television device 900 can suppress a reduction in the image quality of an image obtained by decoding encoded data to be output.

### <Second application example: mobile telephone>

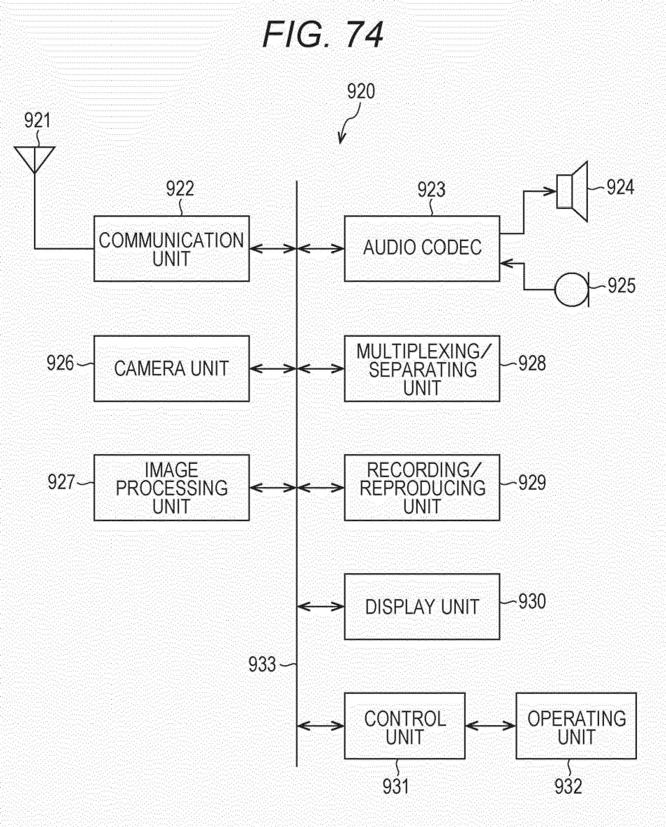

Fig. 74 illustrates an exemplary schematic configuration of a mobile telephone to which the above embodiment is applied. A mobile telephone 920 includes an antenna 921, a communication unit 922, an audio codec 923, a speaker 924, a microphone 925, a camera unit 926, an image processing unit 927, a multiplexing/separating unit 928, a recording/reproducing unit 929, a display unit 930, a control unit 931, an operating unit 932, and a bus 933.

The antenna 921 is connected to the communication unit 922. The speaker 924 and the microphone 925 are connected to the audio codec 923. The operating unit 932 is connected to the control unit 931. The bus 933 connects the communication unit 922, the audio codec 923, the camera unit 926, the image processing unit 927, the multiplexing/separating unit 928, the recording/reproducing unit 929, the display unit 930, and the control unit 931 with one another.

The mobile telephone 920 performs operations such as transmission and reception of an audio signal, transmission and reception of an electronic mail or image data, image imaging, and data recording in various operation modes such as a voice call mode, a data communication mode, a shooting mode, and a video phone mode.

In the voice call mode, an analog audio signal generated by the microphone 925 is supplied to the audio codec 923. The audio codec 923 converts the analog audio signal into audio data, and performs A/D conversion and compression on the converted audio data. Then, the audio codec 923 outputs the compressed audio data to the communication unit 922. The communication unit 922 encodes and modulates the audio data, and generates a transmission signal. Then, the communication unit 922 transmits the generated transmission signal to a base station (not illustrated) through the antenna 921. Further, the communication unit 922 amplifies a wire less signal received through the antenna 921, performs frequency transform, and acquires a reception signal. Then, the communication unit 922 demodulates and decodes the reception signal, generates audio data, and outputs the generated audio data to the audio codec 923. The audio codec 923 decompresses the audio data, performs D/A conversion, and generates an analog audio signal. Then, the audio codec 923 supplies the generated audio signal to the speaker 924 so that a sound is output.

Further, in the data communication mode, for example, the control unit 931 generates text data configuring an electronic mail according to the user's operation performed through the operating unit 932. Further, the control unit 931 causes a text to be displayed on the display unit 930. Further, the control unit 931 generates electronic mail data according to a transmission instruction given from the user through the operating unit 932, and outputs the generated electronic mail data to the communication unit 922. The communication unit 922 encodes and modulates the electronic mail data, and generates a transmission signal. Then, the communication unit 922 transmits the generated transmission signal to base station (not illustrated) through the antenna 921. Further, the communication unit 922 amplifies a wireless signal received through the antenna 921, performs frequency transform, and acquires a reception signal. Then, the communication unit 922 demodulates and decodes the reception signal, restores electronic mail data, and outputs the restored electronic mail data to the control unit 931. The control unit 931 causes content of the electronic mail to be displayed on the display unit 930, and supplies the electronic mail data to the recording/reproducing unit 929 so that the electronic mail data is written in a storage medium of the recording/reproducing unit 929.

The recording/reproducing unit 929 includes an arbitrary readable/writable storage medium. For example, the storage medium may be a built-in storage medium such as a RAM or a flash memory or a removable storage medium such as a hard disk, a magnetic disk, a magneto optical disk, an optical disk, a universal serial bus (USB) memory, or a memory card.

Further, in the shooting mode, for example, the camera unit 926 images a subject, generates image data, and outputs the generated image data to the image processing unit 927. The image processing unit 927 encodes the image data input from the camera unit 926, and supplies the encoded stream to the recording/reproducing unit 929 so that the encoded stream is stored in a storage medium of the recording/reproducing unit 929.

Further, in the image display mode, the recording/reproducing unit 929 reads the encoded stream recorded in the storage medium and outputs the encoded stream to the image processing unit 927. The image processing unit 927 decodes the encoded stream input from the recording/reproducing unit 929, and supplies the image data to the display unit 930 so that an image thereof is displayed.

Further, in the video phone mode, for example, the multiplexing/separating unit 928 multiplexes the video stream encoded by the image processing unit 927 and the audio stream input from the audio codec 923, and outputs the multiplexed stream to the communication unit 922. The communication unit 922 encodes and modulates the stream, and generates a transmission signal. Then, the communication unit 922 transmits the generated transmission signal to a base station (not illustrated) through the antenna 921. Further, the communication unit 922 amplifies a wireless signal received through the antenna 921, performs frequency transform, and acquires a reception signal. The transmission signal and the reception signal may include an encoded bit stream. Then, the communication unit 922 demodulates and decodes the reception signal, and restores a stream, and outputs the restored stream to the multiplexing/separating unit 928. The multiplexing/separating unit 928 separates a video stream and an audio stream from the input stream, and outputs the video stream and the audio stream to the image processing unit 927 and the audio codec 923, respectively. The image processing unit 927 decodes the video stream, and generates video data. The video data is supplied to the display unit 930, and a series of images is displayed by the display unit 930. The audio codec 923 decompresses the audio stream, performs D/A conversion, and generates an analog audio signal. Then, the audio codec 923 supplies the generated audio signal to the speaker 924 so that a sound is output.

In the mobile telephone 920 having the above configuration, for example, the image processing unit 927 may have the function of the image encoding device 100 and the function of the image decoding device 200. In other words, the image processing unit 927 may encode the image data and decode the encoded data using the methods described in the above embodiments. Accordingly, the mobile telephone 920 can suppress a reduction in the image quality of an image to be currently processed.

### <Third application example: recording/reproducing device>

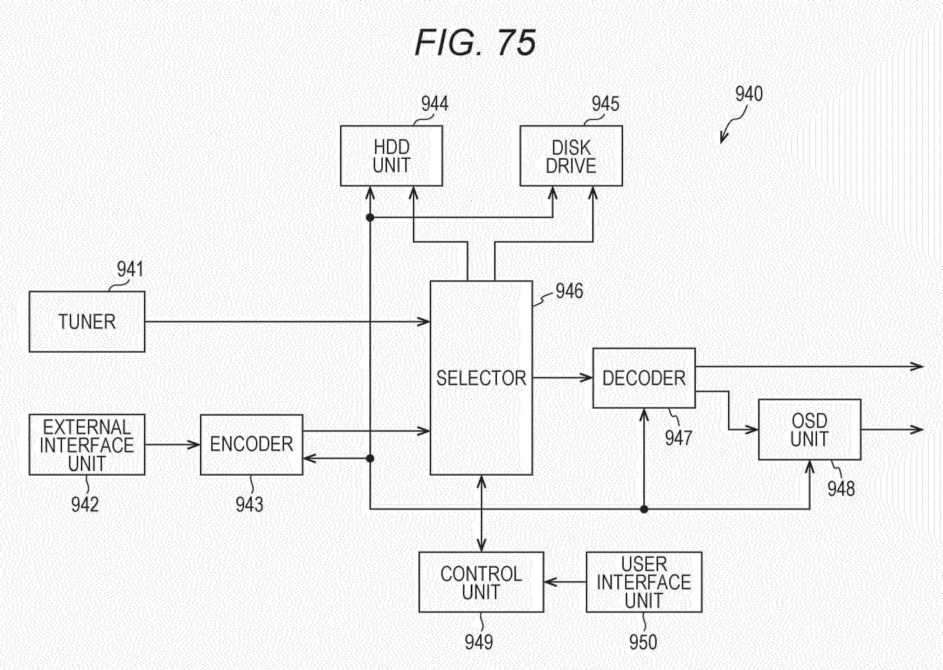

Fig. 75 illustrates an exemplary schematic configuration of a recording/reproducing device to which the above embodiment is applied. For example, a recording/reproducing device 940 encodes audio data and video data of a received broadcast program, and stores the encoded data in a recording medium. Further, for example, the recording/reproducing device 940 may encode audio data and video data acquired from another device and record the encoded data in a recording medium. Further, for example, the recording/reproducing device 940 reproduces data recorded in a recording medium through a monitor and a speaker according to the user's instruction. At this time, the recording/reproducing device 940 decodes the audio data and the video data.

The recording/reproducing device 940 includes a tuner 941, an external interface (I/F) unit 942, an encoder 943, a hard disk drive (HDD) 944, a disk drive 945, a selector 946, a decoder 947, an on-screen display (OSD) 948, a control unit 949, and a user interface (I/F) unit 950.

The tuner 941 extracts a signal of a desired channel from a broadcast signal received through an antenna (not illustrated), and demodulates the extracted signal. Then, the tuner 941 outputs an encoded bit stream obtained by the demodulation to the selector 946. In other words, the tuner 941 undertakes a transmitting unit in the recording/reproducing device 940.

The external interface unit 942 is an interface for connecting the recording/reproducing device 940 with an external device or a network. For example, the external interface unit 942 may be an Institute of Electrical and Electronic Engineers (IEEE) 1394 interface, a network interface, a USB interface, or a flash memory interface. For example, video data and audio data received via the external interface unit 942 are input to the encoder 943. In other words, the external interface unit 942 undertakes a transmitting unit in the recording/reproducing device 940.

When video data and audio data input from the external interface unit 942 are not encoded, the encoder 943 encodes the video data and the audio data. Then, the encoder 943 outputs an encoded bit stream to the selector 946.

The HDD 944 records an encoded bit stream in which content data such as a video or a sound is compressed, various kinds of programs, and other data in an internal hard disk. Further, the HDD 944 reads the data from the hard disk when a video or a sound is reproduced.

The disk drive 945 records or reads data in or from a mounted recording medium. For example, the recording medium mounted in the disk drive 945 may be a digital versatile disc (DVD) disk (DVD-Video, DVD-Random Access Memory (DVD-RAM), DVD-recordable (DVD-R), DVD-rewritable (DVD-RW), DVD+recordable (DVD+R), DVD+rewritable (DVD+RW), or the like), a Blu-ray (a registered trademark) disk, or the like.

When a video or a sound is recorded, the selector 946 selects an encoded bit stream input from the tuner 941 or the encoder 943, and outputs the selected encoded bit stream to the HDD 944 or the disk drive 945. Further, when a video or a sound is reproduced, the selector 946 outputs an encoded bit stream input from the HDD 944 or the disk drive 945 to the decoder 947.

The decoder 947 decodes the encoded bit stream, and generates video data and audio data. Then, the decoder 947 outputs the generated video data to the OSD 948. The decoder 947 outputs the generated audio data to an external speaker.

The OSD 948 reproduces the video data input from the decoder 947, and displays a video. Further, for example, the OSD 948 may cause an image of a GUI such as a menu, a button, or a cursor to be superimposed on a displayed video.

The control unit 949 includes a processor such as a CPU and a memory such as a RAM or a ROM. The memory stores a program executed by the CPU, program data, and the like. For example, the program stored in the memory is read and executed by the CPU when the recording/reproducing device 940 is activated. The CPU executes the program, and controls an operation of the recording/reproducing device 940, for example, according to an operation signal input from the user interface unit 950.

The user interface unit 950 is connected with the control unit 949. For example, the user interface unit 950 includes a button and a switch used when the user operates the recording/reproducing device 940 and a receiving unit receiving a remote control signal. The user interface unit 950 detects the user's operation through the components, generates an operation signal, and outputs the generated operation signal to the control unit 949.

In the recording/reproducing device 940 having the above configuration, for example, the encoder 943 may have the function of the image encoding device 100. In other words, the encoder 943 may encode the image data using the methods described in the above embodiments. Accordingly, the recording/reproducing device 940 can suppress a reduction in the image quality of an image to be currently processed.

In the recording/reproducing device 940 having the above configuration, for example, the decoder 947 may have the function of the image decoding device 200. In other words, the decoder 947 may decode the encoded data using the methods described in the above embodiments. Accordingly, the recording/reproducing device 940 can suppress a reduction in the image quality of an image to be currently processed.

### <Fourth application example: imaging device>

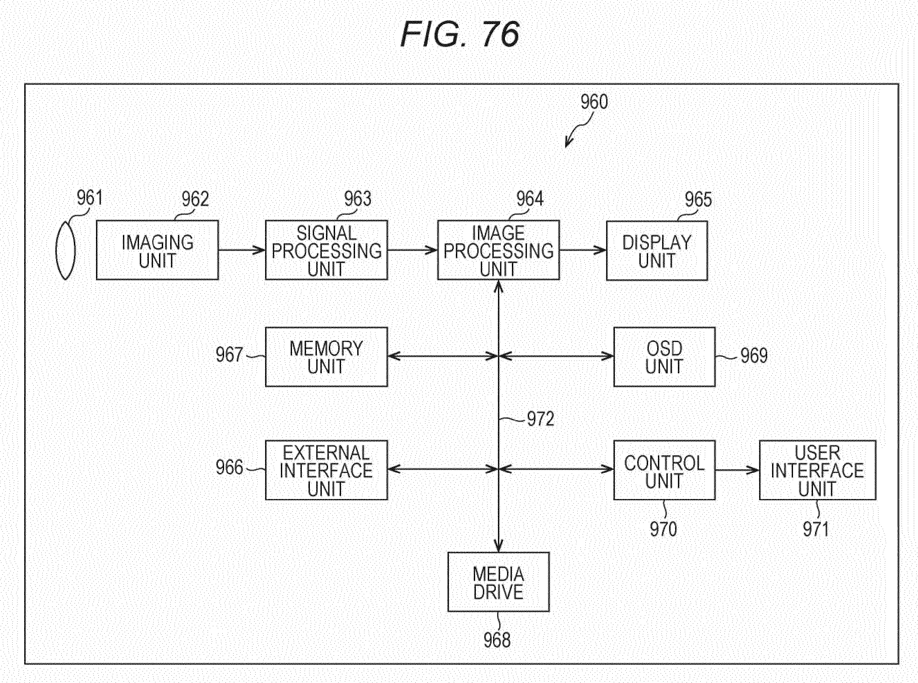

Fig. 76 illustrates an exemplary schematic configuration of an imaging device to which the above embodiment is applied. An imaging device 960 images a subject, generates an image, encodes image data, and records the encoded data in a recording medium.

The imaging device 960 includes an optical block 961, an imaging unit 962, a signal processing unit 963, an image processing unit 964, a display unit 965, an external interface (I/F) unit 966, a memory 967, a media drive 968, an OSD 969, a control unit 970, a user interface (I/F) unit 971, and a bus 972.

The optical block 961 is connected to the imaging unit 962. The imaging unit 962 is connected to the signal processing unit 963. The display unit 965 is connected to the image processing unit 964. The user interface unit 971 is connected to the control unit 970. The bus 972 connects the image processing unit 964, the external interface unit 966, the memory 967, the media drive 968, the OSD 969, and the control unit 970 with one another.

The optical block 961 includes a focus lens, a diaphragm mechanism, and the like. The optical block 961 forms an optical image of a subject on an imaging plane of the imaging unit 962. The imaging unit 962 includes a CCD (charge coupled device) image sensor or a CMOS (complementary metal oxide semiconductor) image sensor, or the like, and converts the optical image formed on the imaging plane into an image signal serving as an electric signal by photoelectric conversion. Then, the imaging unit 962 outputs the image signal to the signal processing unit 963.

The signal processing unit 963 performs various kinds of camera signal processes such as knee correction, gamma correction, and color correction on the image signal input from the imaging unit 962. The signal processing unit 963 outputs the image data that has been subjected to the camera signal processes to the image processing unit 964.

The image processing unit 964 encodes the image data input from the signal processing unit 963, and generates encoded data. Then, the image processing unit 964 outputs the generated encoded data to the external interface unit 966 or the media drive 968. Further, the image processing unit 964 decodes encoded data input from the external interface unit 966 or the media drive 968, and generates image data. Then, the image processing unit 964 outputs the generated image data to the display unit 965. Further, the image processing unit 964 may output the image data input from the signal processing unit 963 to the display unit 965 so that an image is displayed. Further, the image processing unit 964 may cause display data acquired from the OSD 969 to be superimposed on an image output to the display unit 965.

The OSD 969 generates an image of a GUI such as a menu, a button, or a cursor, and outputs the generated image to the image processing unit 964.

For example, the external interface unit 966 is configured as an USB I/O terminal. For example, the external interface unit 966 connects the imaging device 960 with a printer when an image is printed. Further, a drive is connected to the external interface unit 966 as necessary. For example, a removable medium such as a magnetic disk or an optical disk may be mounted to the drive, and a program read from the removable medium may be installed in the imaging device 960. Further, the external interface unit 966 may be configured as a network interface connected to a network such as an LAN or the Internet. In other words, the external interface unit 966 undertakes a transmitting unit in the imaging device 960.

The recording medium mounted in the media drive 968 may be an arbitrary readable/writable removable medium such as a magnetic disk, a magneto optical disk, an optical disk, or a semiconductor memory. Further, a recording medium may be fixedly mounted in the media drive 968, and for example, a non-transitory storage unit such as a built-in hard disk drive or a solid state drive (SSD) may be configured.

The control unit 970 includes a processor such as a CPU and a memory such as a RAM or a ROM. For example, the memory stores a program executed by the CPU, program data, and the like. For example, the program stored in the memory is read and executed by the CPU when the imaging device 960 is activated. The CPU executes the program, and controls an operation of the imaging device 960, for example, according to an operation signal input from the user interface unit 971.

The user interface unit 971 is connected with the control unit 970. For example, the user interface unit 971 includes a button, a switch, or the like which is used when the user operates the imaging device 960. The user interface unit 971 detects the user's operation through the components, generates an operation signal, and outputs the generated operation signal to the control unit 970.

In the imaging device 960 having the above configuration, for example, the image processing unit 964 may have the function of the image encoding device 100 and the function of the image decoding device 200. In other words, the image processing unit 964 may encode the image data and decode the encoded data using the methods described in the above embodiments. Accordingly, the imaging device 960 can suppress a reduction in the image quality of an image to be currently processed.

Note that the present technology can be also applied to a HTTP streaming such as MPEG DASH in which appropriate encoded data is selected from among a plurality of encoded data having different resolutions that are prepared in advance and used. In other words, a plurality of encoded data can share information related to encoding or decoding.

### <16. Sixteenth embodiment>

### <Other embodiments>

The above embodiments have been described in connection with the example of the device, the system, or the like according to the present technology, but the present technology is not limited to the above examples and may be implemented as any component mounted in the device or the device configuring the system, for example, a processor serving as a system large scale integration (LSI) or the like, a module using a plurality of processors or the like, a unit using a plurality of modules or the like, a set (that is, some components of the device) in which any other function is further added to a unit, or the like.

### <Video set>

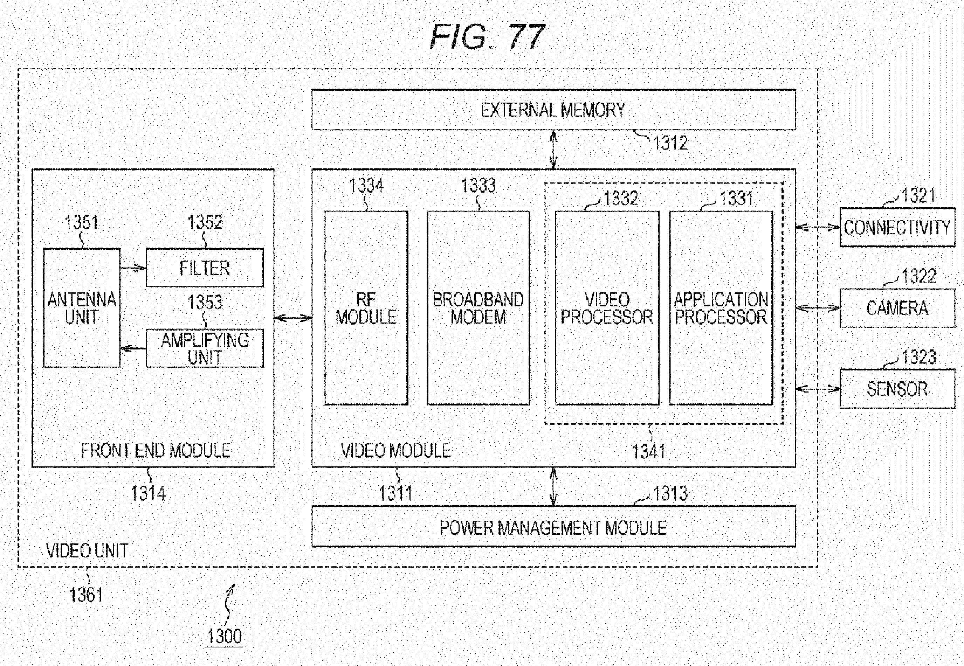

An example in which the present technology is implemented as a set will be described with reference to Fig. 77. Fig. 77 illustrates an exemplary schematic configuration of a video set to which the present technology is applied.

In recent years, functions of electronic devices have become diverse, and when some components are implemented as sale, provision, or the like in development or manufacturing, there are many cases in which a plurality of components having relevant functions are combined and implemented as a set having a plurality of functions as well as cases in which an implementation is performed as a component having a single function.

A video set 1300 illustrated in Fig. 77 is a multi-functionalized configuration in which a device having a function related to image encoding and/or image decoding is combined with a device having any other function related to the function.

The video set 1300 includes a module group such as a video module 1311, an external memory 1312, a power management module 1313, and a front end module 1314 and a device having relevant functions such as a connectivity 1321, a camera 1322, and a sensor 1323 as illustrated in Fig. 77.

A module is a part having multiple functions into which several relevant part functions are integrated. A concrete physical configuration is arbitrary, but, for example, it is configured such that a plurality of processors having respective functions, electronic circuit elements such as a resistor and a capacitor, and other devices are arranged and integrated on a wiring substrate. Further, a new module may be obtained by combining another module or a processor with a module.

In the case of the example of Fig. 77, the video module 1311 is a combination of components having functions related to image processing, and includes an application processor, a video processor, a broadband modem 1333, and a radio frequency (RF) module 1334.

A processor is one in which a configuration having a certain function is integrated into a semiconductor chip through System On a Chip (SoC), and also refers to, for example, a system large scale integration (LSI) or the like. The configuration having the certain function may be a logic circuit (hardware configuration), may be a CPU, a ROM, a RAM, and a program (software configuration) executed using the CPU, the ROM, and the RAM, and may be a combination of a hardware configuration and a software configuration. For example, a processor may include a logic circuit, a CPU, a ROM, a RAM, and the like, some functions may be implemented through the logic circuit (hardware configuration), and the other functions may be implemented through a program (software configuration) executed by the CPU.

The application processor 1331 of Fig. 77 is a processor that executes an application related to image processing. An application executed by the application processor 1331 can not only perform a calculation process but also control components inside and outside the video module 1311 such as the video processor 1332 as necessary in order to implement a certain function.

The video processor 1332 is a process having a function related to image encoding and/or image decoding.

The broadband modem 1333 performs digital modulation on data (digital signal) to be transmitted through wired and/or wireless broadband communication that is performed via broadband line such as the Internet or a public telephone line network and converts the data into an analog signal, or performs demodulation on an analog signal received through the broadband communication and converts the analog signal into data (a digital signal). For example, the broadband modem 1333 processes arbitrary information such as image data processed by the video processor 1332, a stream including encoded image data, an application program, or setting data.

The RF module 1334 is a module that performs a frequency transform process, a modulation/demodulation process, an amplification process, a filtering process, and the like on an RF signal transmitted or received through an antenna. For example, the RF module 1334 performs, for example, frequency transform on a baseband signal generated by the broadband modem 1333, and generates an RF signal. Further, for example, the RF module 1334 performs, for example, frequency transform on an RF signal received through the front end module 1314, and generates a baseband signal.

Note that a dotted line 1341, that is, the application processor 1331 and the video processor 1332 may be integrated into a single processor as illustrated in Fig. 77.

The external memory 1312 is installed outside the video module 1311, and a module having a storage device used by the video module 1311. The storage device of the external memory 1312 can be implemented by any physical configuration, but is commonly used to store large capacity data such as image data of frame units, and thus it is desirable to implement the storage device of the external memory 1312 using a relatively cheap large-capacity semiconductor memory such as a dynamic random access memory (DRAM).

The power management module 1313 manages and controls power supply to the video module 1311 (the respective components in the video module 1311).

The front end module 1314 is a module that provides a front end function (a circuit of a transceiving end at an antenna side) to the RF module 1334. The front end module 1314 includes, for example, an antenna unit 1351, a filter 1352, and an amplifying unit 1353 as illustrated in Fig. 77.

The antenna unit 1351 includes an antenna that transmits or receives a radio signal and a peripheral configuration. The antenna unit 1351 transmits a signal provided from the amplifying unit 1353 as a radio signal, and provides a received radio signal to the filter 1352 as an electrical signal (RF signal). The filter 1352 performs, for example, a filtering process on an RF signal received through the antenna unit 1351, and provides a processed RF signal to the RF module 1334. The amplifying unit 1353 amplifies the RF signal provided from the RF module 1334, and provides the amplified RF signal to the antenna unit 1351.

The connectivity 1321 is a module having a function related to a connection with the outside. A physical configuration of the connectivity 1321 is arbitrary. For example, the connectivity 1321 includes a configuration having a communication function other than a communication standard supported by the broadband modem 1333, an external I/O terminal, or the like.

For example, the connectivity 1321 may include a module having a communication function based on a wireless communication standard such as Bluetooth (a registered trademark), IEEE 802.11 (for example, Wireless Fidelity (Wi-Fi) (a registered trademark)), Near Field Communication (NFC), InfraRed Data Association (IrDA), an antenna that transmits or receives a signal satisfying the standard, or the like. Further, for example, the connectivity 1321 may include a module having a communication function based on a wired communication standard such as Universal Serial Bus (USB), or High-Definition Multimedia Interface (HDMI) (a registered trademark) or a terminal that satisfies the standard. Furthermore, for example, the connectivity 1321 may include any other data (signal) transmission function or the like such as an analog I/O terminal.

Note that the connectivity 1321 may include a device of a transmission destination of data (signal). For example, the connectivity 1321 may include a drive (including a hard disk, an SSD, a Network Attached Storage (NAS), or the like as well as a drive of a removable medium) that reads/writes data from/in a recording medium such as a magnetic disk, an optical disk, a magneto optical disk, or a semiconductor memory. Furthermore, the connectivity 1321 may include an output device (a monitor, a speaker, or the like) that outputs an image or a sound.

The camera 1322 is a module having a function of photographing a subject and obtaining image data of the subject. For example, image data obtained by the photographing of the camera 1322 is provided to and encoded by the video processor 1332.

The sensor 1323 is a module having an arbitrary sensor function such as a sound sensor, an ultrasonic sensor, an optical sensor, an illuminance sensor, an infrared sensor, an image sensor, a rotation sensor, an angle sensor, an angular velocity sensor, a velocity sensor, an acceleration sensor, an inclination sensor, a magnetic identification sensor, a shock sensor, or a temperature sensor. For example, data detected by the sensor 1323 is provided to the application processor 1331 and used by an application or the like.

A configuration described above as a module may be implemented as a processor, and a configuration described as a processor may be implemented as a module.

In the video set 1300 having the above configuration, the present technology can be applied to the video processor 1332 as will be described later. Thus, the video set 1300 can be implemented as a set to which the present technology is applied.

### <Exemplary configuration of video processor>

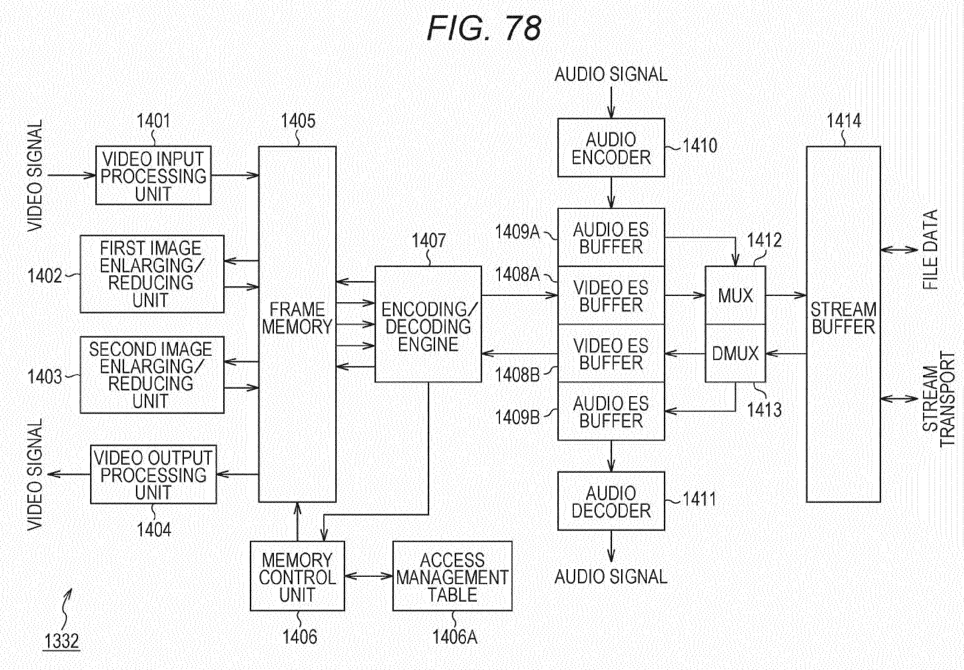

Fig. 78 illustrates an exemplary schematic configuration of the video processor 1332 (Fig. 77) to which the present technology is applied.

In the case of the example of Fig. 78, the video processor 1332 has a function of receiving an input of a video signal and an audio signal and encoding the video signal and the audio signal according to a certain scheme and a function of decoding encoded video data and audio data, and reproducing and outputting a video signal and an audio signal.

The video processor 1332 includes a video input processing unit 1401, a first image enlarging/reducing unit 1402, a second image enlarging/reducing unit 1403, a video output processing unit 1404, a frame memory 1405, and a memory control unit 1406 as illustrated in Fig. 78. The video processor 1332 further includes an encoding/decoding engine 1407, video elementary stream (ES) buffers 1408A and 1408B, and audio ES buffers 1409A and 1409B. The video processor 1332 further includes an audio encoder 1410, an audio decoder 1411, a multiplexer (MUX)) 1412, a demultiplexer (DMUX)) 1413, and a stream buffer 1414.

For example, the video input processing unit 1401 acquires a video signal input from the connectivity 1321 (Fig. 77) or the like, and converts the video signal into digital image data. The first image enlarging/reducing unit 1402 performs, for example, a format conversion process and an image enlargement/reduction process on the image data. The second image enlarging/reducing unit 1403 performs an image enlargement/reduction process on the image data according to a format of a destination to which the image data is output through the video output processing unit 1404 or performs the format conversion process and the image enlargement/reduction process which are identical to those of the first image enlarging/reducing unit 1402 on the image data. The video output processing unit 1404 performs format conversion and conversion into an analog signal on the image data, and outputs a reproduced video signal to, for example, the connectivity 1321 or the like.

The frame memory 1405 is an image data memory that is shared by the video input processing unit 1401, the first image enlarging/reducing unit 1402, the second image enlarging/reducing unit 1403, the video output processing unit 1404, and the encoding/decoding engine 1407. The frame memory 1405 is implemented as, for example, a semiconductor memory such as a DRAM.

The memory control unit 1406 receives a synchronous signal from the encoding/decoding engine 1407, and controls writing/reading access to the frame memory 1405 according to an access schedule for the frame memory 1405 written in an access management table 1406A. The access management table 1406A is updated through the memory control unit 1406 according to processing executed by the encoding/decoding engine 1407, the first image enlarging/reducing unit 1402, the second image enlarging/reducing unit 1403, or the like.

The encoding/decoding engine 1407 performs an encoding process of encoding image data and a decoding process of decoding a video stream that is data obtained by encoding image data. For example, the encoding/decoding engine 1407 encodes image data read from the frame memory 1405, and sequentially writes the encoded image data in the video ES buffer 1408A as a video stream. Further, for example, the encoding/decoding engine 1407 sequentially reads the video stream from the video ES buffer 1408B, sequentially decodes the video stream, and sequentially writes the decoded image data in the frame memory 1405. The encoding/decoding engine 1407 uses the frame memory 1405 as a working area at the time of the encoding or the decoding. Further, the encoding/decoding engine 1407 outputs the synchronous signal to the memory control unit 1406, for example, at a timing at which processing of each macroblock starts.

The video ES buffer 1408A buffers the video stream generated by the encoding/decoding engine 1407, and then provides the video stream to the multiplexer (MUX) 1412. The video ES buffer 1408B buffers the video stream provided from the demultiplexer (DMUX) 1413, and then provides the video stream to the encoding/decoding engine 1407.

The audio ES buffer 1409A buffers an audio stream generated by the audio encoder 1410, and then provides the audio stream to the multiplexer (MUX) 1412. The audio ES buffer 1409B buffers an audio stream provided from the demultiplexer (DMUX) 1413, and then provides the audio stream to the audio decoder 1411.

For example, the audio encoder 1410 converts an audio signal input from, for example, the connectivity 1321 or the like into a digital signal, and encodes the digital signal according to a certain scheme such as an MPEG audio scheme or an AudioCode number 3 (AC3) scheme. The audio encoder 1410 sequentially writes the audio stream that is data obtained by encoding the audio signal in the audio ES buffer 1409A. The audio decoder 1411 decodes the audio stream provided from the audio ES buffer 1409B, performs, for example, conversion into an analog signal, and provides a reproduced audio signal to, for example, the connectivity 1321 or the like.

The multiplexer (MUX) 1412 performs multiplexing of the video stream and the audio stream. A multiplexing method (that is, a format of a bitstream generated by multiplexing) is arbitrary. Further, at the time of multiplexing, the multiplexer (MUX) 1412 may add certain header information or the like to the bitstream. In other words, the multiplexer (MUX) 1412 may convert a stream format by multiplexing. For example, the multiplexer (MUX) 1412 multiplexes the video stream and the audio stream to be converted into a transport stream that is a bitstream of a transfer format. Further, for example, the multiplexer (MUX) 1412 multiplexes the video stream and the audio stream to be converted into data (file data) of a recording file format.

The demultiplexer (DMUX) 1413 demultiplexes the bitstream obtained by multiplexing the video stream and the audio stream by a method corresponding to the multiplexing performed by the multiplexer (MUX) 1412. In other words, the demultiplexer (DMUX) 1413 extracts the video stream and the audio stream (separates the video stream and the audio stream) from the bitstream read from the stream buffer 1414. In other words, the demultiplexer (DMUX) 1413 can perform conversion (inverse conversion of conversion per formed by the multiplexer (MUX) 1412) of a format of a stream through the demultiplexing. For example, the demultiplexer (DMUX) 1413 can acquire the transport stream provided from, for example, the connectivity 1321 or the broadband modem 1333 through the stream buffer 1414 and convert the transport stream into a video stream and an audio stream through the demultiplexing. Further, for example, the demultiplexer (DMUX) 1413 can acquire file data read from various kinds of recording media by, for example, the connectivity 1321 through the stream buffer 1414 and converts the file data into a video stream and an audio stream by the demultiplexing.

The stream buffer 1414 buffers the bitstream. For example, the stream buffer 1414 buffers the transport stream provided from the multiplexer (MUX) 1412, and provides the transport stream to, for example, the connectivity 1321 or the broadband modem 1333 at a certain timing or on the basis of an external request or the like.

Further, for example, the stream buffer 1414 buffers file data provided from the multiplexer (MUX) 1412, provides the file data to, for example, the connectivity 1321 or the like at a certain timing or on the basis of an external request or the like, and causes the file data to be recorded in various kinds of recording media.

Furthermore, the stream buffer 1414 buffers the transport stream acquired through, for example, the connectivity 1321 or the broadband modem 1333, and provides the transport stream to the demultiplexer (DMUX) 1413 at a certain timing or on the basis of an external request or the like.

Further, the stream buffer 1414 buffers file data read from various kinds of recording media in, for example, the connectivity 1321 or the like, and provides the file data to the demultiplexer (DMUX) 1413 at a certain timing or on the basis of an external request or the like.

Next, an operation of the video processor 1332 having the above configuration will be described. The video signal input to the video processor 1332, for example, from the connectivity 1321 or the like is converted into digital image data according to a certain scheme such as a 4:2:2 Y/Cb/Cr scheme in the video input processing unit 1401 and sequentially written in the frame memory 1405. The digital image data is read out to the first image enlarging/reducing unit 1402 or the second image enlarging/reducing unit 1403, subjected to a format conversion process of performing a format conversion into a certain scheme such as a 4:2:0 Y/Cb/Cr scheme and an enlargement/reduction process, and written in the frame memory 1405 again. The image data is encoded by the encoding/decoding engine 1407, and written in the video ES buffer 1408A as a video stream.

Further, an audio signal input to the video processor 1332 from the connectivity 1321 or the like is encoded by the audio encoder 1410, and written in the audio ES buffer 1409A as an audio stream.

The video stream of the video ES buffer 1408A and the audio stream of the audio ES buffer 1409A are read out to and multiplexed by the multiplexer (MUX) 1412, and converted into a transport stream, file data, or the like. The transport stream generated by the multiplexer (MUX) 1412 is buffered in the streambuffer 1414, and then output to an external network through, for example, the connectivity 1321 or the broadband modem 1333. Further, the file data generated by the multiplexer (MUX) 1412 is buffered in the stream buffer 1414, then output to, for example, the connectivity 1321 or the like, and recorded in various kinds of recording media.

Further, the transport stream input to the video processor 1332 from an external network through, for example, the connectivity 1321 or the broadband modem 1333 is buffered in the stream buffer 1414 and then demultiplexed by the demultiplexer (DMUX) 1413. Further, the file data that is read from various kinds of recording media in, for example, the connectivity 1321 or the like and then input to the video processor 1332 is buffered in the stream buffer 1414 and then demultiplexed by the demultiplexer (DMUX) 1413. In other words, the transport stream or the file data input to the video processor 1332 is demultiplexed into the video stream and the audio stream through the demultiplexer (DMUX) 1413.

The audio stream is provided to the audio decoder 1411 through the audio ES buffer 1409B and decoded, and so an audio signal is reproduced. Further, the video stream is written in the video ES buffer 1408B, sequentially read out to and decoded by the encoding/decoding engine 1407, and written in the frame memory 1405. The decoded image data is subjected to the enlargement/reduction process performed by the second image enlarging/reducing unit 1403, and written in the frame memory 1405. Then, the decoded image data is read out to the video output processing unit 1404, subjected to the format conversion process of performing format conversion to a certain scheme such as a 4:2:2 Y/Cb/Cr scheme, and converted into an analog signal, and so a video signal is reproduced.

When the present technology is applied to the video processor 1332 having the above configuration, it is preferable that the above embodiments of the present technology be applied to the encoding/decoding engine 1407. In other words, for example, the encoding/decoding engine 1407 preferably has the function of the image encoding device 100 and the function of the image decoding device 200. Accordingly, the video processor 1332 can obtain similar effects to those of the embodiments described above with reference to Figs. 1 to 62.

Note that, in the encoding/decoding engine 1407, the present technology (that is, the function of the image encoding device 100 or the function of the image decoding device 200) may be implemented by either or both of hardware such as a logic circuit or software such as an embedded program.

### <Another exemplary configuration of video processor>

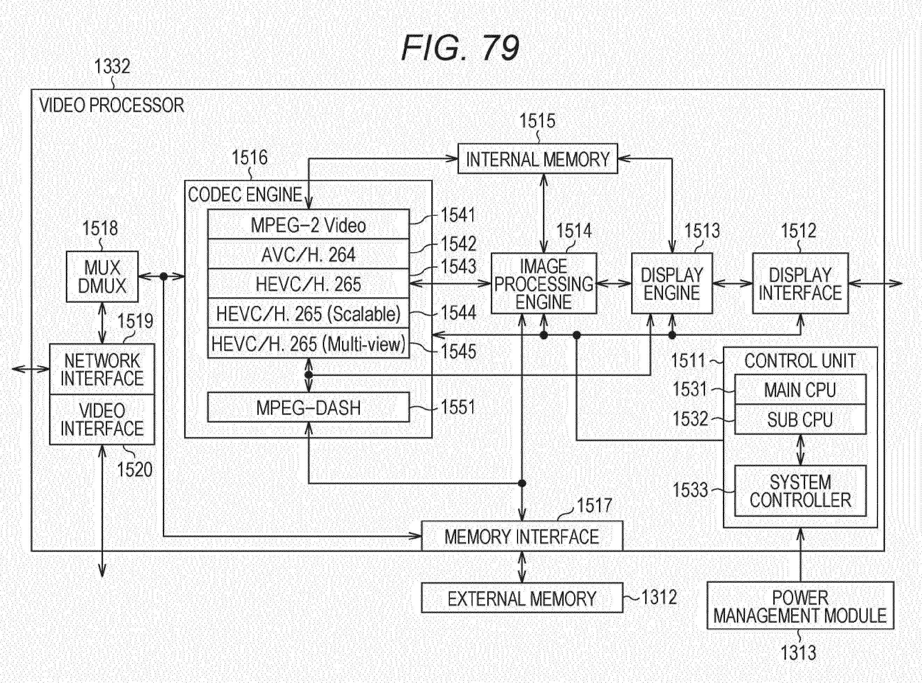

Fig. 79 illustrates another exemplary schematic configuration of the video processor 1332 to which the present technology is applied. In the case of the example of Fig. 79, the video processor 1332 has a function of encoding and decoding video data according to a certain scheme.

More specifically, the video processor 1332 includes a control unit 1511, a display interface 1512, a display engine 1513, an image processing engine 1514, and an internal memory 1515 as illustrated in Fig. 79. The video processor 1332 further includes a codec engine 1516, a memory interface 1517, a multiplexing/demultiplexer (MUX DMUX) 1518, a network interface 1519, and a video interface 1520.

The control unit 1511 controls an operation of each processing unit in the video processor 1332 such as the display interface 1512, the display engine 1513, the image processing engine 1514, and the codec engine 1516.

The control unit 1511 includes, for example, a main CPU 1531, asubCPU1532, and a system controller 1533 as illustrated in Fig. 79. The main CPU 1531 executes, for example, a program for controlling an operation of each processing unit in the video processor 1332. The main CPU 1531 generates a control signal, for example, according to the program, and provides the control signal to each processing unit (that is, controls an operation of each processing unit). The sub CPU 1532 plays a supplementary role of the main CPU 1531. For example, the sub CPU 1532 executes a child process or a subroutine of a program executed by the main CPU 1531. The system controller 1533 controls operations of the main CPU 1531 and the sub CPU 1532, for example, designates a program executed by the main CPU 1531 and the sub CPU 1532.

The display interface 1512 outputs image data to, for example, the connectivity 1321 or the like under control of the control unit 1511. For example, the display interface 1512 converts image data of digital data into an analog signal, and outputs the analog signal to, for example, the monitor device of the connectivity 1321 as a reproduced video signal or outputs the image data of the digital data to, for example, the monitor device of the connectivity 1321.

The display engine 1513 performs various kinds of conversion processes such as a format conversion process, a size conversion process, and a color gamut conversion process on the image data under control of the control unit 1511 to comply with, for example, a hardware specification of the monitor device that displays the image.

The image processing engine 1514 performs certain image processing such as a filtering process for improving an image quality on the image data under control of the control unit 1511.

The internal memory 1515 is a memory that is installed in the video processor 1332 and shared by the display engine 1513, the image processing engine 1514, and the codec engine 1516. The internal memory 1515 is used for data transfer performed among, for example, the display engine 1513, the image processing engine 1514, and the codec engine 1516. For example, the internal memory 1515 stores data provided from the display engine 1513, the image processing engine 1514, or the codec engine 1516, and provides the data to the display engine 1513, the image processing engine 1514, or the codec engine 1516 as necessary (for example, according to a request) . The internal memory 1515 can be implemented by any storage device, but since the internal memory 1515 is mostly used for storage of small-capacity data such as image data of block units or parameters, it is desirable to implement the internal memory 1515 using a semiconductor memory that is relatively small in capacity (for example, compared to the external memory 1312) and fast in response speed such as a static random access memory (SRAM).

The codec engine 1516 performs processing related to encoding and decoding of image data. An encoding/decoding scheme supported by the codec engine 1516 is arbitrary, and one or more schemes may be supported by the codec engine 1516. For example, the codec engine 1516 may have a codec function of supporting a plurality of encoding/decoding schemes and perform encoding of image data or decoding of encoded data using a scheme selected from among the schemes.

In the example illustrated in Fig. 79, the codec engine 1516 includes, for example, an MPEG-2 Video 1541, anAVC/H.264 1542, a HEVC/H.265 1543, a HEVC/H.265 (Scalable) 1544, a HEVC/H.265 (Multi-view) 1545, and an MPEG-DASH 1551 as functional blocks of processing related to a codec.

The MPEG-2 Video 1541 is a functional block of encoding or decoding image data according to an MPEG-2 scheme. The AVC/H.264 1542 is a functional block of encoding or decoding image data according to an AVC scheme. The HEVC/H.265 1543 is a functional block of encoding or decoding image data according to a HEVC scheme. The HEVC/H.265 (Scalable) 1544 is a functional block of performing scalable encoding or scalable decoding on image data according to a HEVC scheme. The HEVC/H.265 (Multi-view) 1545 is a functional block of performing multi-view encoding or multi-view decoding on image data according to a HEVC scheme.

The MPEG-DASH 1551 is a functional block of transmitting and receiving image data according to an MPEG-Dynamic Adaptive Streaming over HTTP (MPEG-DASH). The MPEG-DASH is a technique of streaming a video using a HyperText Transfer Protocol (HTTP), and has a feature of selecting appropriate one from among a plurality of pieces of encoded data that differ in a previously prepared resolution or the like in units of segments and transmitting a selected one. The MPEG-DASH 1551 performs generation of a stream complying with a standard, transmission control of the stream, and the like, and uses the MPEG-2 Video 1541 to the HEVC/H.265 (Multi-view) 1545 for encoding and decoding of image data.

The memory interface 1517 is an interface for the external memory 1312. Data provided from the image processing engine 1514 or the codec engine 1516 is provided to the external memory 1312 through the memory interface 1517. Further, data read from the external memory 1312 is provided to the video processor 1332 (the image processing engine 1514 or the codec engine 1516) through the memory interface 1517.

The multiplexing/demultiplexer (MUX DMUX) 1518 performs multiplexing and demultiplexing of various kinds of data related to an image such as a bitstream of encoded data, image data, and a video signal. The multiplexing/separating method is arbitrary. For example, at the time of multiplexing, the multiplexing/demultiplexer (MUX DMUX) 1518 can not only combine a plurality of data into one but also add certain header information or the like to the data. Further, at the time of demultiplexing, the multiplexing/demultiplexer (MUX DMUX) 1518 can not only divide one data into a plurality of data but also add certain header information or the like to each divideddata. In other words, the multiplexing/demultiplexer (MUX DMUX) 1518 can converts a data format through multiplexing and demultiplexing. For example, the multiplexing/demultiplexer (MUX DMUX) 1518 can multiplex a bitstream to be converted into a transport stream serving as a bitstream of a transfer format or data (file data) of a recording file format. Of course, inverse conversion can be also performed through demultiplexing.

The network interface 1519 is an interface for, for example, the broadband modem 1333 or the connectivity 1321. The video interface 1520 is an interface for, for example, the connectivity 1321 or the camera 1322.

Next, an exemplary operation of the video processor 1332 will be described. For example, when the transport stream is received from the external network through, for example, the connectivity 1321 or the broadband modem 1333, the transport stream is provided to the multiplexing/demultiplexer (MUX DMUX) 1518 through the network interface 1519, demultiplexed, and then decoded by the codec engine 1516. Image data obtained by the decoding of the codec engine 1516 is subjected to certain image processing performed, for example, by the image processing engine 1514, subjected to certain conversion performed by the display engine 1513, and provided to, for example, the connectivity 1321 or the like through the display interface 1512, and so the image is displayed on the monitor. Further, for example, image data obtained by the decoding of the codec engine 1516 is encoded by the codec engine 1516 again, multiplexed by the multiplexing/demultiplexer (MUX DMUX) 1518 to be converted into file data, output to, for example, the connectivity 1321 or the like through the video interface 1520, and then recorded in various kinds of recording media.

Furthermore, for example, file data of encoded data obtained by encoding image data read from a recording medium (not illustrated) through the connectivity 1321 or the like is provided to the multiplexing/demultiplexer (MUX DMUX) 1518 through the video interface 1520, demultiplexed, and decoded by the codec engine 1516. Image data obtained by the decoding of the codec engine 1516 is subjected to certain image processing performed by the image processing engine 1514, subjectedto certain conversionperformedby the display engine 1513, and provided to, for example, the connectivity 1321 or the like through the display interface 1512, and so the image is displayed on the monitor. Further, for example, image data obtained by the decoding of the codec engine 1516 is encoded by the codec engine 1516 again, multiplexed by the multiplexing/demultiplexer (MUX DMUX) 1518 to be converted into a transport stream, provided to, for example, the connectivity 1321 or the broadband modem 1333 through the network interface 1519, and transmitted to another device (not illustrated).

Note that transfer of image data or other data between the processing units in the video processor 1332 is performed, for example, using the internal memory 1515 or the external memory 1312. Furthermore, the power management module 1313 controls, for example, power supply to the control unit 1511.

When the present technology is applied to the video processor 1332 having the above configuration, it is desirable to apply the above embodiments of the present technology to the codec engine 1516. In other words, for example, it is preferable that the codec engine 1516 have a functional block of implementing the image encoding device 100 and the image decoding device 200. Accordingly, the video processor 1332 can have similar effects to those of the embodiments described above with reference to Figs. 1 to 62.

Note that, in the codec engine 1516, the present technology (that is, the function of the image encoding device 100 or the function of the image decoding device 200) may be implemented by either or both of hardware such as a logic circuit or software such as an embedded program.

The two exemplary configurations of the video processor 1332 have been described above, but the configuration of the video processor 1332 is arbitrary and may have any configuration other than the above two exemplary configurations. Further, the video processor 1332 may be configured with a single semiconductor chip or may be configured with a plurality of semiconductor chips. For example, the video processor 1332 may be configured with a three-dimensionally stacked LSI in which a plurality of semiconductors are stacked. Further, the video processor 1332 may be implemented by a plurality of LSIs.

### <Application examples to devices>

The video set 1300 may be incorporated into various kinds of devices that process image data. For example, the video set 1300 may be incorporated into the television device 900 (Fig. 73), the mobile telephone 920 (Fig. 74), the recording/reproducing device 940 (Fig. 75), the imaging device 960 (Fig. 76), or the like. As the video set 1300 is incorporated, the devices can have similar effects to those of the embodiments described above with reference to Figs. 1 to 62.

Note that even each component of the video set 1300 can be implemented as a component to which the present technology is applied when the component includes the video processor 1332. For example, only the video processor 1332 can be implemented as a video processor to which the present technology is applied. Further, for example, the processors indicated by the dotted line 1341 as described above, the video module 1311, or the like can be implemented as, for example, a processor or a module to which the present technology is applied. Further, for example, a combination of the video module 1311, the external memory 1312, the power management module 1313, and the front end module 1314 can be implemented as a video unit 1361 to which the present technology is applied. These configurations can have similar effects to those of the embodiments described above with reference to Figs. 1 to 62.

In other words, any configuration including the video processor 1332 can be incorporated into various kinds of devices that process image data, similarly to the case of the video set 1300. For example, the video processor 1332, the processors indicated by the dotted line 1341, the video module 1311, or the video unit 1361 can be incorporated into the television device 900 (Fig. 73), the mobile telephone 920 (Fig. 74), the recording/reproducing device 940 (Fig. 75), the imaging device 960 (Fig. 76), or the like. Further, when the configuration to which the present technology is applied is incorporated, the devices can have similar effects to those of the embodiments described above with reference to Figs. 1 to 62, similarly to the case of the video set 1300.

Further, in this specification, the description has been made in connection with the example in which various kinds of pieces of information are multiplexed into an encoded stream and transmitted from an encoding side to a decoding side. However, the technique of transmitting the information is not limited to this example. For example, the information may be transmitted or recorded as individual data associated with an encoded bit stream without being multiplexed into an encoded bit stream. Here, a term "associated" means that an image (or a part of an image such as a slice or a block) included in a bit stream can be linked with information corresponding to the image at the time of decoding. In other words, the information may be transmitted through a transmission path different from that for an image (or a bit stream). Further, the information may be recorded in a recording medium (or a different recording area of the same recording medium) different from that for an image (or a bit stream). Furthermore, for example, the information and the image (or a bit stream) may be associated with each other in arbitrary units such as units of a plurality of frames, units of frames, or units of parts of a frame.

Note that the present technology can have the following configurations as well.
(1) An image processing device, including:
   an encoding unit that encodes image data; and
   a control information generation unit that generates control information for controlling a deblocking filter process for a chrominance component of decoded image data obtained by decoding encoded data obtained by encoding the image data through the encoding unit as header information of the encoded data.
(2) The image processing device according to (1),
   wherein the control information generation unit generates control information for controlling whether or not the deblocking filter process for the chrominance component of the decoded image data is performed as the control information.
(3) The image processing device according to (1) or (2),
   wherein the control information generation unit generates control information for controlling a filter strength of the deblocking filter process for the chrominance component of the decoded image data as the control information.
(4) The image processing device according to (3),
   wherein the control information generation unit generates control information for controlling an offset for a parameter β of the deblocking filter as the control information for controlling the filter strength.
(5) The image processing device according to (3) or (4),
   wherein the control information generation unit generates control information for controlling an offset for a parameter tC of the deblocking filter as the control information for controlling the filter strength.
(6) The image processing device according to any of (1) to (5),
   wherein the control information generation unit generates at least one of
   control information that is a syntax element of a sequence parameter set of the header information and used for controlling a deblocking filter process for a chrominance component of a sequence corresponding to the sequence parameter set of the decoded image data,
   control information that is a syntax element of a picture parameter set of the header information and used for controlling a deblocking filter process for a chrominance component of a picture corresponding to the picture parameter set of the decoded image data, and
   control information that is a syntax element of a slice header of the header information and used for controlling a deblocking filter process for a chrominance component of a slice corresponding to the slice header of the decoded image data.
(7) The image processing device according to any of (1) to (6), further including,
   a filter processing unit that performs the deblocking filter process for the chrominance component of the decoded image data on the basis of the control information generated through the control information generation unit.
(8) The image processing device according to any of (1) to (7), further including,
   a control unit that controls the control information generation unit such that the deblocking filter process according to a characteristics of an image of the decoded image data is performed,
   wherein the control information generation unit generates the control information according to control of the control unit.
(9) The image processing device according to any of (1) to (8), further including,
   a control unit that controls the control information generation unit such that the deblocking filter process according to a color format of the decoded image data is performed,
   wherein the control information generation unit generates the control information according to control of the control unit.
(10) An image processing method, including:
   encoding image data; and
   generating control information for controlling a deblocking filter process for a chrominance component of decoded image data obtained by decoding encoded data obtained by encoding the image data as header information of the encoded data.
(11) An image processing device, including:
   a decoding unit that decodes encoded data of image data; and
   a filter processing unit that performs a deblocking filter process for a chrominance component of decoded image data obtained by decoding the encoded data through the decoding unit on the basis of control information for controlling the deblocking filter process for the chrominance component of the decoded image data in header information of the encoded data.
(12) The image processing device according to (11),
   wherein the control information is control information for controlling whether or not the deblocking filter process for the chrominance component of the decoded image data is performed.
(13) The image processing device according to (11) or (12),
   wherein the control information is control information for controlling a filter strength of the deblocking filter process for the chrominance component of the decoded image data.
(14) The image processing device according to (13),
   wherein the control information for controlling the filter strength is control information for controlling an offset for a parameter β of the deblocking filter.
(15) The image processing device according to (13) or (14),
   wherein the control information for controlling the filter strength is control information for controlling an offset for a parameter tC of the deblocking filter.
(16) The image processing device according to any of (11) to (15),
   wherein the control information includes at least one of
   control information that is a syntax element of a sequence parameter set of the header information and used for controlling a deblocking filter process for a chrominance component of a sequence corresponding to the sequence parameter set of the decoded image data,
   control information that is a syntax element of a picture parameter set of the header information and used for controlling a deblocking filter process for a chrominance component of a picture corresponding to the picture parameter set of the decoded image data, and
   control information that is a syntax element of a slice header of the header information and used for controlling a deblocking filter process for a chrominance component of a slice corresponding to the slice header of the decoded image data, and
   the filter processing unit performs the deblocking filter process for the chrominance component of the decoded image data on the basis of any one of the information included in the control information.
(17) The image processing device according to (16),
   wherein the filter processing unit preferentially uses the control information in an order of the control information of the slice header, the control information of the picture parameter set, and the control information of the sequence parameter set.
(18) The image processing device according to (16) or (17),
   wherein the filter processing unit refers to and uses the control information of the picture parameter set and the control information of the slice header on the basis of information indicating whether or not there is the control information for controlling the deblocking filter process for the decoded image data.
(19) The image processing device according to any of (16) to (18),
   wherein the filter processing unit refers to and uses the control information of the picture parameter set and the control information of the slice header on the basis of information indicating whether or not there is the control information for controlling the deblocking filter process for the chrominance component of the decoded image data.
(20) An image processing method, including:
   decoding encoded data of image data; and
   performing a deblocking filter process for a chrominance component of decoded image data obtained by decoding the encoded data on the basis of control information for controlling the deblocking filter process for the chrominance component of the decoded image data in header information of the encoded data.

### REFERENCE SIGNS LIST

100 Image encoding device
115 Lossless encoding unit
120 Loop filter
131 Header information generation unit
141 Header control unit
151 SPS generation unit
152 PPS generation unit
153 SH generation unit
161 SPS extended syntax generation unit
162 PPS extended syntax generation unit
163 SH extended syntax generation unit
171 sps_chroma_deblocking_filter_disabled_flag generation unit
172 pps_chroma_deblocking_filter_disabled_flag generation unit
173 slice_chroma_deblocking_filter_disabled_flag generation unit
181 Deblocking filter control unit
182 Deblocking filter processing unit
191 Luma deblocking filter processing unit
192 Chroma deblocking filter processing unit
200 Image decoding device
212 Lossless decoding unit
216 Loop filter
251 Deblocking filter control unit
252 Deblocking filter processing unit
261 Luma deblocking filter processing unit
262 Chroma deblocking filter processing unit
271 chroma_deblocking_filter_control_present_flag generation unit
272 chroma_deblocking_filter_override_enabled_flag generation unit
273 chroma_deblocking_filter_override_flag generation unit
281 pps_chroma_beta_offset_div2 generation unit
282 pps_chroma_tc_offset_div2 generation unit
283 slice_chroma_beta_offset_div2 generation unit
284 slice_chroma_tc_offset_div2 generation unit

## Claims

1. An image processing device, comprising:
an encoding unit that encodes image data; and
a control information generation unit that generates control information for controlling a deblocking filter process for a chrominance component of decoded image data obtained by decoding encoded data obtained by encoding the image data through the encoding unit as header information of the encoded data.

2. The image processing device according to claim 1,
wherein the control information generation unit generates control information for controlling whether or not the deblocking filter process for the chrominance component of the decoded image data is performed as the control information.

3. The image processing device according to claim 1,
wherein the control information generation unit generates control information for controlling a filter strength of the deblocking filter process for the chrominance component of the decoded image data as the control information.

4. The image processing device according to claim 3,
wherein the control information generation unit generates control information for controlling an offset for a parameter β of the deblocking filter as the control information for controlling the filter strength.

5. The image processing device according to claim 3,
wherein the control information generation unit generates control information for controlling an offset for a parameter tC of the deblocking filter as the control information for controlling the filter strength.

6. The image processing device according to claim 1,
wherein the control information generation unit generates at least one of
control information that is a syntax element of a sequence parameter set of the header information and used for controlling a deblocking filter process for a chrominance component of a sequence corresponding to the sequence parameter set of the decoded image data,
control information that is a syntax element of a picture parameter set of the header information and used for controlling a deblocking filter process for a chrominance component of a picture corresponding to the picture parameter set of the decoded image data, and
control information that is a syntax element of a slice header of the header information and used for controlling a deblocking filter process for a chrominance component of a slice corresponding to the slice header of the decoded image data.

7. The image processing device according to claim 1, further comprising,
a filter processing unit that performs the deblocking filter process for the chrominance component of the decoded image data on the basis of the control information generated through the control information generation unit.

8. The image processing device according to claim 1, further comprising,
a control unit that controls the control information generation unit such that the deblocking filter process according to a characteristics of an image of the decoded image data is performed,
wherein the control information generation unit generates the control information according to control of the control unit.

9. The image processing device according to claim 1, further comprising,
a control unit that controls the control information generation unit such that the deblocking filter process according to a color format of the decoded image data is performed,
wherein the control information generation unit generates the control information according to control of the control unit.

10. An image processing method, comprising:
encoding image data; and
generating control information for controlling a deblocking filter process for a chrominance component of decoded image data obtained by decoding encoded data obtained by encoding the image data as header information of the encoded data.

11. An image processing device, comprising:
a decoding unit that decodes encoded data of image data; and
a filter processing unit that performs a deblocking filter process for a chrominance component of decoded image data obtained by decoding the encoded data through the decoding unit on the basis of control information for controlling the deblocking filter process for the chrominance component of the decoded image data in header information of the encoded data.

12. The image processing device according to claim 11,
wherein the control information is control information for controlling whether or not the deblocking filter process for the chrominance component of the decoded image data is performed.

13. The image processing device according to claim 11,
wherein the control information is control information for controlling a filter strength of the deblocking filter process for the chrominance component of the decoded image data.

14. The image processing device according to claim 13,
wherein the control information for controlling the filter strength is control information for controlling an offset for a parameter β of the deblocking filter.

15. The image processing device according to claim 13,
wherein the control information for controlling the filter strength is control information for controlling an offset for a parameter tC of the deblocking filter.

16. The image processing device according to claim 11,
wherein the control information includes at least one of
control information that is a syntax element of a sequence parameter set of the header information and used for controlling a deblocking filter process for a chrominance component of a sequence corresponding to the sequence parameter set of the decoded image data,
control information that is a syntax element of a picture parameter set of the header information and used for controlling a deblocking filter process for a chrominance component of a picture corresponding to the picture parameter set of the decoded image data, and
control information that is a syntax element of a slice header of the header information and used for controlling a deblocking filter process for a chrominance component of a slice corresponding to the slice header of the decoded image data, and
the filter processing unit performs the deblocking filter process for the chrominance component of the decoded image data on the basis of any one of the information included in the control information.

17. The image processing device according to claim 16,
wherein the filter processing unit preferentially uses the control information in an order of the control information of the slice header, the control information of the picture parameter set, and the control information of the sequence parameter set.

18. The image processing device according to claim 16,
wherein the filter processing unit refers to and uses the control information of the picture parameter set and the control information of the slice header on the basis of information indicating whether or not there is the control information for controlling the deblocking filter process for the decoded image data.

19. The image processing device according to claim 16,
wherein the filter processing unit refers to and uses the control information of the picture parameter set and the control information of the slice header on the basis of information indicating whether or not there is the control information for controlling the deblocking filter process for the chrominance component of the decoded image data.

20. An image processing method, comprising:
decoding encoded data of image data; and
performing a deblocking filter process for a chrominance component of decoded image data obtained by decoding the encoded data on the basis of control information for controlling the deblocking filter process for the chrominance component of the decoded image data in header information of the encoded data.
